(19) 

Europäisches Patentamt

European Patent Office

Office européen des brevets

(11) **EP 4 617 758 A1**

(12) **EUROPEAN PATENT APPLICATION**
published in accordance with Art. 153(4) EPC

(43) Date of publication:
17.09.2025  Bulletin 2025/38

(21) Application number: 24773865.1

(22) Date of filing: 26.02.2024

(51) International Patent Classification (IPC):
*G02B 13/18* (2006.01)

(52) Cooperative Patent Classification (CPC):
G02B 13/00; G02B 13/18

(86) International application number:
PCT/CN2024/078477

(87) International publication number:
WO 2024/193297 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.03.2023 CN 202310327420

(71) Applicant: Huawei Technologies Co., Ltd.
Shenzhen, Guangdong 518129 (CN)

(72) Inventors:
• ZHANG, Kaiyuan
Shenzhen, Guangdong 518129 (CN)
• ZHU, Danli
Shenzhen, Guangdong 518129 (CN)
• ZHANG, Yi
Shenzhen, Guangdong 518129 (CN)
• XU, Huiming
Shenzhen, Guangdong 518129 (CN)
• NIHEI, Yasuhide
Shenzhen, Guangdong 518129 (CN)
• MATSUI, Takumi
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **LENS ASSEMBLY, CAMERA MODULE AND ELECTRONIC DEVICE**

(57)     A lens assembly (10), a camera module (101), and an electronic device (100) are provided. The lens assembly (10) includes a first lens unit (110), a first optical path folding unit (140), and a second lens unit (120) that are sequentially arranged along an optical axis (L) from an object side to an image side. There may also be at most one second optical path folding unit (150) on a side that is of the second lens unit (120) and that faces the image side, and the first lens unit (110) is disposed in front of the first optical path folding unit (140) and the optical path folding unit is configured to fold an optical path. For the lens assembly (10) with the foregoing architecture, a long-focus function can be implemented, and a total track length of the lens assembly (10) can be reduced while a long-focus feature is ensured, to implement small-sized designs of the lens assembly (10) and the camera module (101), and help implement thinning of the electronic device (100). In addition, the lens assembly (10) significantly improves imaging quality and an imaging effect due to features of a large target surface and a wide aperture. The lens assembly (10) can also implement a macro function with a high magnification, and can meet requirements for high imaging quality in infinity shooting and macro shooting.

FIG. 2

**Description**

This application claims priority to Chinese Patent Application No. 202310327420.X, filed with the China National Intellectual Property Administration on March 23, 2023 and entitled "LENS ASSEMBLY, CAMERA MODULE, AND ELECTRONIC DEVICE", which is incorporated herein by reference in its entirety.

**TECHNICAL FIELD**

This application relates to the field of electronic device technologies, and in particular, to a lens assembly, a camera module, and an electronic device.

**BACKGROUND**

In recent years, with development of camera technologies, camera modules on electronic consumer products such as a mobile phone, a tablet, a notebook computer, and a wearable device gradually develop to be miniaturized and thin, photographing effects and requirements are expected to be as high as those of single-lens reflex cameras, and sizes and functional effects of the camera modules have gradually become one of important characteristics of terminal electronic devices.

The camera module includes a lens assembly and an image sensor. Light passes through the lens assembly and is then projected onto the image sensor, to implement optical-to-electrical conversion and further implement imaging. The lens assembly usually includes a plurality of lens that are sequentially arranged, and the plurality of lenses transmit and aggregate light to implement light imaging. Performance of the lens assembly directly determines imaging performance of the camera module. For example, featured by a small field of view and a shallow depth of field, a telephoto lens with a long focal length has a great advantage in a telephoto scene, which is conducive to improving imaging quality and an imaging effect in the telephoto scene. However, a long focal length of the telephoto lens results in a long total track length of the lens assembly, and increases a total length and a size of the lens assembly, making it difficult to meet a small-sized design requirement of the camera module.

**SUMMARY**

This application provides a lens assembly, a camera module, and an electronic device. A feature of a long focal length is ensured and a total track length of the lens assembly is significantly reduced, so that a total length of the lens assembly is reduced. This facilitates a small-sized design of the camera module.

According to a first aspect of this application, a lens assembly is provided, including at least a first lens unit, a first optical path folding unit, a second lens unit, and a second optical path folding unit that are sequentially arranged along an optical axis from an object side to an image side, that is, the first lens unit is disposed in front of the first optical path folding unit. The first optical path folding unit is configured to reflect, to the second lens unit, light emitted from the first lens unit, and the first optical path folding unit may fold the optical path once. The second optical path folding unit is configured to reflect the light emitted from the second lens unit, and the second optical path folding unit may fold the optical path for the second time. The first lens unit is disposed in front of the first optical path folding unit, and the first optical path folding unit and the second optical path folding unit are configured to fold the optical path twice. For the lens assembly with the foregoing architecture, a long focal length can be implemented; a total track length of the lens assembly can be reduced while a long-focus feature is implemented, to implement small-sized designs of the lens assembly and a camera module; and a total length of the lens assembly in a thickness direction is significantly reduced, that is, space occupied by the camera module in a thickness direction of an electronic device is reduced, which is beneficial to a thinning design of the electronic device.

In addition, after the optical path is folded twice by using the first optical path folding unit and the second optical path folding unit, a photosensitive surface of an image sensor may be made perpendicular to the thickness direction, that is, the photosensitive surface of the image sensor may be parallel to a length direction and a width direction of the electronic device, so that space occupied by the photosensitive surface of the image sensor in the thickness direction of the electronic device can be reduced, a large size of the photosensitive surface of the image sensor can be easily implemented while a thinning requirement of the electronic device is ensured, and further, a large target surface design of the lens assembly is implemented. This improves a photosensitive capability of the lens assembly, and therefore improves imaging quality and an imaging effect of the camera module.

The first lens unit includes at least a first lens, the first lens is located at an end that is of the lens assembly and that is closest to the object side, and the first lens has positive focal power, so as to properly allocate focal power. The first lens with the positive focal power is used with the second lens unit and the optical path folding unit to form the lens assembly, so that a wide aperture design of the lens assembly can be implemented, to effectively increase an overall light intake of the lens assembly, and improve imaging quality and an imaging effect. The lens assembly with a wide aperture design can further meet a requirement for an infinity shooting scene (especially in a dark or night shooting environment), thereby improving a shooting effect in a distant shooting scene, an infinity shooting scene, or the like.

The total track length TTL of the lens assembly and a focal length EFL of the lens assembly may satisfy 0.7<TTL/EFL<2.2. In other words, a total length of the lens assembly may be equivalent to or even less than the focal length of the lens assembly, so that the lens assembly may have a large focal length and can implement a long-focus function. In addition, the lens assembly has a small total track length, so that a length size of the lens assembly can be effectively reduced. To be specific, the total length of the lens assembly is significantly reduced while the long-focus feature is ensured, to help implement small-sized designs of the lens assembly and the camera module.

In a possible implementation, an image height IMH of the lens assembly and the focal length EFL of the lens assembly satisfy IMH/(2*EFL)<0.5. In this case, the lens assembly can have a large image height, so that the large target surface design of the lens assembly is implemented and the photosensitive capability of the lens assembly is significantly improved. This improves imaging quality and an imaging effect.

The image height IMH of the lens assembly and the total track length TTL of the lens assembly satisfy IMH/(2*TTL)<0.5, to further ensure that the lens assembly has a large image height. This helps implement a large target surface design of the lens assembly, and effectively improves imaging quality and an imaging effect.

In a possible implementation, the second lens unit is movably disposed, and the second lens unit moves along the optical axis, to change a distance between the second lens unit and the first lens unit, that is, change a focal length of the lens assembly, so that a magnification of the lens assembly can be increased, and the lens assembly can be switched from an infinity mode to a macro mode, to implement a macro shooting function. In this case, the lens assembly can clearly photograph a near object and details of the near object. In addition, for the lens assembly with the foregoing architecture, the large target surface design and the wide aperture design can be implemented, to improve a light intake of the entire system, and also help improve a resolution of the lens assembly in a macro shooting scene. This helps implement a high magnification and a high resolution of the lens assembly in the macro mode, and improves imaging quality and an imaging effect in a close-up shooting scene or a macro shooting scene.

In a possible implementation, there are a plurality of second lens units, at least one second lens unit is movably disposed, and the at least one second lens unit moves along the optical axis, so that the lens assembly is switched from an infinity mode to a macro mode. The movement of at least one second lens unit can also implement switching of the lens assembly between the infinity mode and the macro mode. This enriches a structural design of the lens assembly, and helps meet different design requirements of the camera module.

In a possible implementation, a quantity of second lens units is less than or equal to 3. This helps reduce complexity of the entire lens assembly and reduce costs of the lens assembly when meeting a long-focus feature requirement of the lens assembly and ensuring that the lens assembly can well implement an infinity shooting function and the macro shooting function.

In a possible implementation, when the lens assembly is switched from the infinity mode to the macro mode, a distance △L by which the second lens unit moves along the optical axis and the total track length TTL of the lens assembly satisfy 0.01<△L/TTL<0.4. In this case, a macro function of the lens assembly is implemented, and a magnification of the lens assembly can be further increased, to implement a macro function with a high magnification. This further significantly improves imaging quality and an imaging effect in a close-up shooting scene or a macro shooting scene.

In a possible implementation, a magnification of the lens assembly in the macro mode is less than 0.6x. The lens assembly has a high magnification, which meets a requirement for the close-up shooting scene or the macro shooting scene, and ensures high-quality imaging of the lens assembly in the close-up shooting scene or the macro shooting scene.

In a possible implementation, an f-number F#1 of the lens assembly in the infinity mode satisfies 1.4<F#1<3.0. A small f-number value indicates a wide aperture feature of the lens assembly. In this case, a large light intake of the lens assembly is ensured. This further improves imaging quality and an imaging effect in the infinity shooting scene.

In a possible implementation, an f-number F#2 of the lens assembly in the macro mode satisfies 1.6<F#2<3.0. In this case, the lens assembly still has a wide aperture in the macro mode, to ensure a light intake of the lens assembly. This further improves a resolution of the lens assembly, and ensures high imaging quality and a good imaging effect in the macro shooting scene.

In a possible implementation, a lens of the first lens unit and a lens of the second lens unit are separately an aspherical lens. The aspherical lens may reduce or eliminate spherical aberration and distortion aberration introduced by a spherical lens, which can further help implement wide aperture performance of the lens assembly and also help reduce the total track length of the lens assembly.

According to a second aspect of this application, a lens assembly is provided, including at least a first lens unit, a first optical path folding unit, and a second lens unit that are sequentially arranged along an optical axis from an object side to an image side, where the first optical path folding unit is configured to reflect, to the second lens unit, light emitted from the first lens unit. The first lens unit is disposed in front of the first optical path folding unit and the first optical path folding unit is configured to fold an optical path. For the lens assembly with the foregoing architecture, a long focal length can also be implemented; a total track length of the lens assembly can be reduced while a long-focus feature is implemented, to implement small-sized designs of the lens assembly and a camera module; and a total length of the lens assembly in a thickness direction is reduced, that is, space occupied by the camera module in a thickness direction of an electronic device is reduced, which is beneficial to a thinning design of the electronic device.

The first lens unit includes at least a first lens, the first lens is located at an end that is of the lens assembly and that is closest to the object side, and the first lens has positive focal power. The first lens unit is disposed in front of the first optical path folding unit, and the second lens unit is combined to form the lens assembly, so that a wide aperture design of the lens assembly can also be implemented, to improve imaging quality and an imaging effect, and meet a requirement for an infinity shooting scene.

An optical TTL of the lens assembly and a focal length EFL of the lens assembly satisfy $0.7 < TTL/EFL \leq 1$. In this case, the lens assembly has a larger focal length, so that a long-focus function is better implemented. In addition, the lens assembly has a smaller total track length, so that a total length of the lens assembly is further reduced while a long-focus feature is ensured, to help implement small-sized designs of the lens assembly and the camera module.

In a possible implementation, an image height IMH of the lens assembly and a focal length EFL of the lens assembly satisfy $0.1 < IMH/(2*EFL) < 0.5$, and the image height IMH of the lens assembly and the total track length TTL of the lens assembly satisfy $0.1 < IMH/(2*TTL) < 0.5$. In this case, the lens assembly has a larger image height, so that a larger target surface design of the lens assembly is implemented. This significantly improves imaging quality and an imaging effect.

In a possible implementation, the second lens unit is movably disposed, and the second lens unit moves along the optical axis, so that the lens assembly is switched from an infinity mode to a macro mode. In this way, a macro shooting function of the lens assembly can be implemented, and a high magnification and a high resolution of the lens assembly in the macro mode can be implemented. This improves imaging quality and an imaging effect in a close-up shooting scene or a macro shooting scene.

In a possible implementation, there are a plurality of second lens units, at least one second lens unit is movably disposed, and the at least one second lens unit moves along the optical axis, so that the lens assembly is switched from an infinity mode to a macro mode. The movement of at least one second lens unit can also implement switching of the lens assembly between the infinity mode and the macro mode. This enriches a structural design of the lens assembly.

In a possible implementation, a quantity of second lens units is less than or equal to 3. This helps reduce complexity of the entire lens assembly and reduce costs of the lens assembly while meeting requirements of the macro shooting scene and the infinity shooting scene.

In a possible implementation, when the lens assembly is switched from the infinity mode to the macro mode, a distance $\triangle L$ by which the second lens unit moves along the optical axis satisfies a conditional expression: $0.01 < \triangle L/TTL < 0.4$. In this case, a magnification of the lens assembly is further increased, and a macro function with a high magnification is implemented.

In a possible implementation, a magnification of the lens assembly in the macro mode is less than 0.6x. The lens assembly has a high magnification, which ensures high-quality imaging of the lens assembly in the close-up shooting scene or the macro shooting scene.

In a possible implementation, an f-number F#1 of the lens assembly in the infinity mode satisfies a conditional expression: $1.4 < F\#1 < 3.0$. In this case, the lens assembly has a feature of a wide aperture, to improve imaging quality and an imaging effect in the infinity shooting scene.

In a possible implementation, an f-number F#2 of the lens assembly in the macro mode satisfies a conditional expression: $1.6 < F\#2 < 3.0$. In this case, the lens assembly still has a wide aperture in the macro mode, to improve a resolution of the lens assembly and ensure high imaging quality and a good imaging effect in the macro shooting scene.

In a possible implementation, a lens of the first lens unit and a lens of the second lens unit are separately an aspherical lens, so that spherical aberration and distortion aberration introduced by a spherical lens can be reduced or eliminated, to help improve imaging quality and an imaging effect.

According to a third aspect of this application, a camera module is provided, including an image sensor and any one of the foregoing lens assemblies, where the image sensor is located on a side that is of the lens assembly and that faces the image side. The camera module includes the lens assembly, and the lens assembly has a long-focus feature and a small total track length, so that the camera module can be made small in size and space occupied by the camera module can be reduced. In addition, the lens assembly can meet high-quality imaging requirements of an infinity scene and a macro scene due to features of a large target surface and a wide aperture. This significantly improves imaging quality and an imaging effect of the camera module.

According to a fourth aspect of this application, an electronic device is provided, including a housing and the foregoing camera module, where the camera module is disposed on the housing. The electronic device includes the camera module, and the camera module has a small size and occupies small space, so that space occupied by the camera module in a thickness direction of the electronic device can be reduced, to help implement a thinning design of the electronic device. In addition, the camera module has high imaging quality and an imaging effect, and can improve shooting performance of the electronic device.

**BRIEF DESCRIPTION OF DRAWINGS**

FIG. 1 is a diagram of a structure of an electronic device according to an embodiment of this application;
FIG. 2 is a diagram of a structure of a camera module in which a lens assembly is in an infinity mode according to an embodiment of this application;
FIG. 3 is a diagram of a structure of a camera module in which a lens assembly is in a macro mode according to an embodiment of this application;
FIG. 4 is a diagram of a structure of a camera module in which a lens assembly is in an infinity mode according to an embodiment of this application;
FIG. 5 is a diagram of a simulation structure of a camera module in which a lens assembly is in an infinity mode according to Embodiment 1 of this application;
FIG. 6 is a diagram of a simulation structure of a camera module in which a lens assembly is in a macro mode according to Embodiment 1 of this application;
FIG. 7a is a curve graph of chromatic aberration of a lens assembly in an infinity mode according to Embodiment 1 of this application;
FIG. 7b is an astigmatism and field curvature plot of a lens assembly in an infinity mode according to Embodiment 1 of this application;
FIG. 7c is a curve graph of distortion of a lens assembly in an infinity mode according to Embodiment 1 of this application;
FIG. 8a is a curve graph of chromatic aberration of a lens assembly in a macro mode according to Embodiment 1 of this application;
FIG. 8b is an astigmatism and field curvature plot of a lens assembly in a macro mode according to Embodiment 1 of this application;
FIG. 8c is a curve graph of distortion of a lens assembly in a macro mode according to Embodiment 1 of this application;
FIG. 9 is a diagram of a simulation structure of a camera module in which a lens assembly is in an infinity mode according to Embodiment 2 of this application;
FIG. 10 is a diagram of a simulation structure of a camera module in which a lens assembly is in a macro mode according to Embodiment 2 of this application;
FIG. 11a is a curve graph of chromatic aberration of a lens assembly in an infinity mode according to Embodiment 2 of this application;
FIG. 11b is an astigmatism and field curvature plot of a lens assembly in an infinity mode according to Embodiment 2 of this application;
FIG. 11c is a curve graph of distortion of a lens assembly in an infinity mode according to Embodiment 2 of this application;
FIG. 12a is a curve graph of chromatic aberration of a lens assembly in a macro mode according to Embodiment 2 of this application;
FIG. 12b is an astigmatism and field curvature plot of a lens assembly in a macro mode according to Embodiment 2 of this application;
FIG. 12c is a curve graph of distortion of a lens assembly in a macro mode according to Embodiment 2 of this application;
FIG. 13 is a diagram of a simulation structure of a camera module in which a lens assembly is in an infinity mode according to Embodiment 3 of this application;
FIG. 14 is a diagram of a simulation structure of a camera module in which a lens assembly is in a macro mode according to Embodiment 3 of this application;
FIG. 15a a curve graph of chromatic aberration of a lens assembly in an infinity mode according to Embodiment 3 of this application;
FIG. 15b is an astigmatism and field curvature plot of a lens assembly in an infinity mode according to Embodiment 3 of this application;
FIG. 15c is a curve graph of distortion of a lens assembly in an infinity mode according to Embodiment 3 of this application;
FIG. 16a is a curve graph of chromatic aberration of a lens assembly in a macro mode according to Embodiment 3 of this application;
FIG. 16b is an astigmatism and field curvature plot of a lens assembly in a macro mode according to Embodiment 3 of this application;
FIG. 16c is a curve graph of distortion of a lens assembly in a macro mode according to Embodiment 3 of this application;

FIG. 17 is a diagram of a simulation structure of a camera module in which a lens assembly is in an infinity mode according to Embodiment 4 of this application;

FIG. 18 is a diagram of a simulation structure of a camera module in which a lens assembly is in a macro mode according to Embodiment 4 of this application;

FIG. 19a a curve graph of chromatic aberration of a lens assembly in an infinity mode according to Embodiment 4 of this application;

FIG. 19b is an astigmatism and field curvature plot of a lens assembly in an infinity mode according to Embodiment 4 of this application;

FIG. 19c is a curve graph of distortion of a lens assembly in an infinity mode according to Embodiment 4 of this application;

FIG. 20a is a curve graph of chromatic aberration of a lens assembly in a macro mode according to Embodiment 4 of this application;

FIG. 20b is an astigmatism and field curvature plot of a lens assembly in a macro mode according to Embodiment 4 of this application;

FIG. 20c is a curve graph of distortion of a lens assembly in a macro mode according to Embodiment 4 of this application;

FIG. 21 is a diagram of a simulation structure of a camera module in which a lens assembly is in an infinity mode according to Embodiment 5 of this application;

FIG. 22 is a diagram of a simulation structure of a camera module in which a lens assembly is in a macro mode according to Embodiment 5 of this application;

FIG. 23a a curve graph of chromatic aberration of a lens assembly in an infinity mode according to Embodiment 5 of this application;

FIG. 23b is an astigmatism and field curvature plot of a lens assembly in an infinity mode according to Embodiment 5 of this application;

FIG. 23c is a curve graph of distortion of a lens assembly in an infinity mode according to Embodiment 5 of this application;

FIG. 24a is a curve graph of chromatic aberration of a lens assembly in a macro mode according to Embodiment 5 of this application;

FIG. 24b is an astigmatism and field curvature plot of a lens assembly in a macro mode according to Embodiment 5 of this application;

FIG. 24c is a curve graph of distortion of a lens assembly in a macro mode according to Embodiment 5 of this application;

FIG. 25 is a diagram of a simulation structure of a camera module in which a lens assembly is in an infinity mode according to Embodiment 6 of this application;

FIG. 26 is a diagram of a simulation structure of a camera module in which a lens assembly is in a macro mode according to Embodiment 6 of this application;

FIG. 27a a curve graph of chromatic aberration of a lens assembly in an infinity mode according to Embodiment 6 of this application;

FIG. 27b is an astigmatism and field curvature plot of a lens assembly in an infinity mode according to Embodiment 6 of this application;

FIG. 27c is a curve graph of distortion of a lens assembly in an infinity mode according to Embodiment 6 of this application;

FIG. 28a is a curve graph of chromatic aberration of a lens assembly in a macro mode according to Embodiment 6 of this application;

FIG. 28b is an astigmatism and field curvature plot of a lens assembly in a macro mode according to Embodiment 6 of this application;

FIG. 28c is a curve graph of distortion of a lens assembly in a macro mode according to Embodiment 6 of this application;

FIG. 29 is a diagram of a simulation structure of a camera module in which a lens assembly is in an infinity mode according to Embodiment 7 of this application;

FIG. 30 is a diagram of a simulation structure of a camera module in which a lens assembly is in a macro mode according to Embodiment 7 of this application;

FIG. 31a a curve graph of chromatic aberration of a lens assembly in an infinity mode according to Embodiment 7 of this application;

FIG. 31b is an astigmatism and field curvature plot of a lens assembly in an infinity mode according to Embodiment 7 of this application;

FIG. 31c is a curve graph of distortion of a lens assembly in an infinity mode according to Embodiment 7 of this application;

FIG. 32a is a curve graph of chromatic aberration of a lens assembly in a macro mode according to Embodiment 7 of this application;

FIG. 32b is an astigmatism and field curvature plot of a lens assembly in a macro mode according to Embodiment 7 of this application;

FIG. 32c is a curve graph of distortion of a lens assembly in a macro mode according to Embodiment 7 of this application;

FIG. 33 is a diagram of a simulation structure of a camera module in which a lens assembly is in an infinity mode according to Embodiment 8 of this application;

FIG. 34 is a diagram of a simulation structure of a camera module in which a lens assembly is in a macro mode according to Embodiment 8 of this application;

FIG. 35a is a curve graph of chromatic aberration of a lens assembly in an infinity mode according to Embodiment 8 of this application;

FIG. 35b is an astigmatism and field curvature plot of a lens assembly in an infinity mode according to Embodiment 8 of this application;

FIG. 35c is a curve graph of distortion of a lens assembly in an infinity mode according to Embodiment 8 of this application;

FIG. 36a is a curve graph of chromatic aberration of a lens assembly in a macro mode according to Embodiment 8 of this application;

FIG. 36b is an astigmatism and field curvature plot of a lens assembly in a macro mode according to Embodiment 8 of this application;

FIG. 36c is a curve graph of distortion of a lens assembly in a macro mode according to Embodiment 8 of this application;

FIG. 37 is a diagram of a simulation structure of a camera module in which a lens assembly is in an infinity mode according to Embodiment 9 of this application;

FIG. 38 is a diagram of a simulation structure of a camera module in which a lens assembly is in a macro mode according to Embodiment 9 of this application;

FIG. 39a is a curve graph of chromatic aberration of a lens assembly in an infinity mode according to Embodiment 9 of this application;

FIG. 39b is an astigmatism and field curvature plot of a lens assembly in an infinity mode according to Embodiment 9 of this application;

FIG. 39c is a curve graph of distortion of a lens assembly in an infinity mode according to Embodiment 9 of this application;

FIG. 40a is a curve graph of chromatic aberration of a lens assembly in a macro mode according to Embodiment 9 of this application;

FIG. 40b is an astigmatism and field curvature plot of a lens assembly in a macro mode according to Embodiment 9 of this application; and

FIG. 40c is a curve graph of distortion of a lens assembly in a macro mode according to Embodiment 9 of this application.

Reference numerals:
100: electronic device;

101: camera module;

10: lens assembly;

110: first lens unit; 120 and 130: second lens units;
11: first lens; 12: second lens; 13: third lens; 14: fourth lens; 15: fifth lens;
16: sixth lens; 17: seventh lens;
140: first optical path folding unit; 150: second optical path folding unit;

20: image sensor; 30: optical filter; 40: aperture stop;

102: housing;
103: speaker opening;
104: data interface.

## DESCRIPTION OF EMBODIMENTS

Terms used in embodiments of this application are only used to explain specific embodiments of this application, but are not intended to limit this application.

For ease of understanding, related technical terms in embodiments of this application are first explained and described.

An object side is a side on which a photographed object is located, by using a lens assembly as a boundary. An object side surface is a surface that is of a lens or an optical element and that faces the object side.

An image side is a side on which an image of a photographed object is located. An image side surface is a surface that is of a lens or an optical element and that faces the image side.

An object distance is a distance from a photographed object to an optical center of a lens, and is a distance from a photographed plane to a front main surface of a lens assembly (a first lens that is of the lens assembly and that faces an object side).

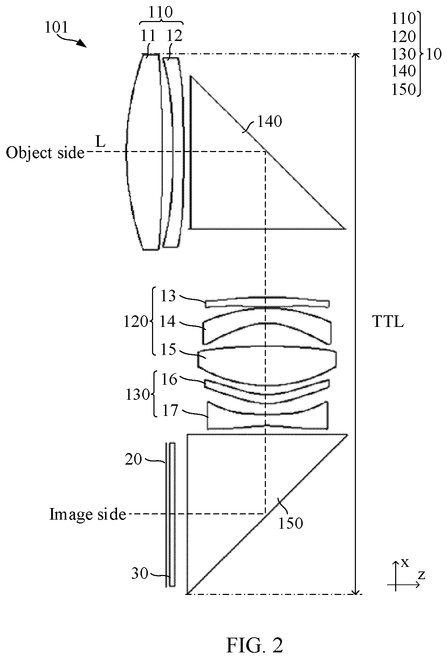

An optical axis is light passing through a center of each lens of a lens assembly (refer to an axis L in FIG. 2).

An image height (Image Height, IMH for short) is a full-image height of an image formed by a lens assembly.

Focal power indicates a refraction capability of a lens on an incident parallel light beam.

Positive focal power indicates that a lens has a positive focal length and has an effect of converging light.

Negative focal power indicates that a lens has a negative focal length and has an effect of diverging light.

An Abbe number is also referred to as a dispersion coefficient, is a difference ratio of refractive indexes of an optical material at different wavelengths, and indicates a dispersion degree of the material.

A refractive index is a ratio of a speed of light in the air to a speed of light in an optical material. A higher refractive index of the optical material indicates a stronger capability of refracting incident light and a thinner lens.

A curvature radius is the reciprocal of the curvature. The curvature of a plane curve is a rotation rate of a tangent angle of a point on the curve to an arc length. The curvature is defined by the differential, indicating a degree that the curve deviates from a straight line.

A focal length is also referred to as a focal length. The focal length is usually indicated by an effective focal length (Effective Focal Length, EFL for short), to distinguish from parameters such as a front focal length and a back focal length. The focal length or the effective focal length is a measure of how strongly an optical system converges or diverges light, and is a vertical distance from an optical center of a lens or a lens group to a focal plane when a clear image of a scene at infinity is formed on the focal plane by using the lens or the lens group. From a practical perspective, the focal length may be understood as a distance from a center of a lens assembly to an imaging plane.

Infinity means that when an object distance exceeds a specific quantity, a photographed object may be considered to be shot into a lens assembly in a form of parallel light beams from light points at infinity. When the lens assembly is in an infinity mode (∞), it indicates that a scene at infinity can be clearly imaged when the lens assembly is focused at "∞".

Macro means close-up photography implemented at a high magnification, and can help capture images that are life-size or smaller than an actual object. In a macro mode, a lens assembly provides a magnification of 1x or higher, and a close-up photography distance is short. A focal length of the lens assembly in the macro mode may be greater than that of the lens assembly in an infinity mode, and the lens assembly has a high resolution in the macro mode, so that an object is photographed more clearly.

A target surface is a photosensitive surface of an image sensor in a camera module. A larger target surface indicates a larger photosensitive amount of the image sensor, and a larger image height of an image.

An aperture is an apparatus used to control an amount of light that enters a photosensitive surface in a camera module through a lens or a lens group, and is usually fastened in the camera module. A size of the aperture is indicated by F#.

A light intake is an amount of light transmitted to a photosensitive surface through a lens or a lens group (lens assembly).

An f-number F# is a relative value (reciprocal of a relative aperture) obtained by dividing a focal length of a lens assembly by a diameter of a clear aperture of the lens assembly. A smaller value of the f-number F# indicates a larger light intake in same unit time, a smaller depth of field, and blurring of photographed background content, to generate an effect similar to that of a telephoto lens.

A total track length (Total Track Length, TTL for short) is also referred to as a total height or a total length, is an actual length of an optical system including a lens assembly and an image sensor, and is a main factor for forming a height of a camera module. In this application, as shown in FIG. 2, the TTL may be a length of an optical system including a lens assembly and an image sensor in an x direction, namely, a distance from a top edge to a bottom edge of the optical system in the x direction. As shown in FIG. 2, in the optical system including the lens assembly and the image sensor, in the x direction, a top of a first lens of the lens assembly is located at a highest position, a bottom of a second optical path folding unit of the lens assembly is located at a lowest position, and the TTL may be a straight-line distance from the top of the first lens to the bottom of the second optical path folding unit in the x direction.

A modulation transfer function (Modulation Transfer Function, MTF) is a measure of evaluating imaging quality of a system.

Defocusing means a blurring phenomenon caused by not focusing on a photographed object.

Distortion is also referred to as distortion, and generally means a degree of distortion of an image formed by a lens assembly for an object relative to the object. A height of a point at which chief rays of different fields of view intersect with a Gaussian image plane after passing through a lens assembly is not equal to an ideal image height, and a difference between the two heights is distortion.

An embodiment of this application provides an electronic device. The electronic device may include but is not limited to an electronic device with a camera module, such as a mobile phone, a tablet computer, a notebook computer, an ultra-mobile personal computer (ultra-mobile personal computer, UMPC), a handheld computer, an intercom, a netbook, a POS terminal, a personal digital assistant (personal digital assistant, PDA), a wearable device, a virtual reality device, or a vehicle-mounted apparatus.

In this embodiment of this application, an example in which the electronic device is a mobile phone is used. The mobile phone may be a bar phone, or the mobile phone may be a foldable mobile phone. Specifically, the following uses an example in which the electronic device is a bar phone for description.

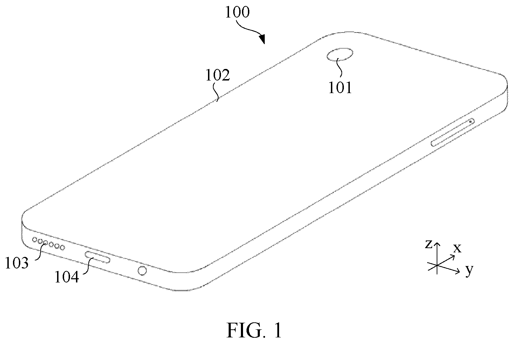

FIG. 1 is a diagram of a structure of an electronic device according to an embodiment of this application.

As shown in FIG. 1, the electronic device 100 may include a housing 102 and a camera module 101. The camera module 101 may be disposed on the housing 102. The camera module 101 is configured to implement an image shooting function, for example, image shooting and recording. Shooting scenes of the camera module 101 may include various complex and diverse shooting application scenes such as an indoor scene, an outdoor scene, a portrait scene, and an environment scene.

The camera module 101 may be located on a front surface of the electronic device 100 (a surface with a display in a thickness z direction of the electronic device 100), and is configured to take a selfie or photograph another object. Alternatively, as shown in FIG. 1, the camera module 101 may be located on a back surface of the electronic device 100 (a surface facing away from a display), and is configured to photograph another object, or certainly may be configured to take a selfie.

The electronic device 100 may include one or more camera modules 101, to meet different shooting requirements.

The electronic device 100 may further include another mechanical part. For example, still as shown in FIG. 1, the electronic device 100 may further include a speaker opening 103. The speaker opening 103 may be disposed on the housing 102, and the speaker opening 103 may be configured to play an audio and the like of the electronic device 100. A sound-emitting device (not shown in the figure) may be further disposed in the housing 102. The sound-emitting device may be configured to form a sound, and the sound-emitting device may be connected to the speaker opening 103, so that the sound can be propagated through the speaker opening 103.

The electronic device 100 may further have a data interface 104. The data interface 104 may be disposed on the housing 102. A control circuit board (not shown in the figure) may be further disposed in the housing 102. The control circuit board may be connected to the data interface 104. The data interface 104 may be configured to supply power to the electronic device 100, or the data interface 104 may be configured to connect the electronic device 100 to a headset, an external multimedia device, or the like (for example, an external camera or an external projection device).

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. For example, the electronic device 100 may further include components such as a sensor, a processor, a drive structure, and a flash.

The camera module usually includes a lens assembly and an image sensor. Light reflected by a photographed object enters the camera module and passes through the lens assembly. The lens assembly can adjust and control an optical path, to generate a light image, and the image is projected onto a photosensitive surface of the image sensor. The image sensor can implement an optical-to-electrical conversion function, and the image sensor receives the light image and converts the light image into an electrical signal for imaging display.

Optical performance of the lens assembly greatly affects imaging quality and an imaging effect of the camera module. For example, a telephoto lens assembly can implement clear imaging of a distant object due to a small field of view, to improve imaging quality and an imaging effect in a telephoto scene. In addition, background content can be blurred due to a small depth of field of the telephoto lens assembly, to achieve an effect of highlighting a photographed subject in a cluttered environment, and help meet high imaging quality of a shooting scene such as background blurring and snapshot.

However, the telephoto lens assembly includes a large quantity of lenses, increasing a total track length, a length, and a size of the lens assembly. Consequently, a size of the camera module is large, and space occupied by the camera module in a thickness direction of the electronic device is increased. This is not conducive to a thinning design of the electronic device.

In addition, a size of a target surface of the lens assembly is one of key factors that affect the imaging quality. A larger target surface indicates a larger amount of sensed light, and a larger image height indicates better imaging quality. Therefore, to obtain better imaging quality, a size and a pixel of a photosensitive surface may be increased, to increase the amount of sensed light. However, a common lens assembly has a small target surface, and a size of a photosensitive surface of a corresponding image sensor is usually less than 1/2 inch. This affects imaging quality of the lens assembly, further reduces imaging quality and an imaging effect of the camera module, and cannot meet a gradually increasing requirement for high imaging quality.

An f-number F# is one key indicator of the lens assembly. The f-number directly affects core functions of a camera, such as a night scene, a video, background blurring, and snapshot. Moreover, when a lens assembly with a wide aperture (smaller f-number) is used for image shooting, a blurring background of an image may be increased to highlight a photographed subject. This can improve a shutter speed and a focusing speed, and achieve good imaging quality and good effect.

In addition, with continuous development of an image shooting technology, an image shooting requirement of a camera module in various shooting scenes is increasingly high. For example, for shooting a distant scene in an infinity mode, that is, in a telephoto shooting scene, especially in a dark or night shooting environment, to achieve a better shooting effect, a wide aperture of the lens assembly needs to be used, so that a larger light intake is implemented, to ensure imaging quality and an imaging effect. However, an f-number F# of a common lens assembly is usually 3.0 or above, which is very unsuitable for shooting a distant night scene.

However, for shooting a close-up scene or a macro scene, for example, photographing a fine object such as a flower, an insect, a flying bird, or a fish, a high magnification of a lens assembly needs to be used, to fully reveal details and thus obtain a clear image. A current lens assembly cannot meet a shooting requirement of such an object, and cannot obtain a clear image.

In view of this, embodiments of this application provide a lens assembly. An optical path folding unit is configured to fold an optical path, and a lens unit is properly used, so that the lens assembly has a long-focus feature and a total track length of the lens assembly is significantly reduced. Shortening the total length of the lens assembly helps implement a small-sized design of the camera module, and reduces space occupied by the camera module in a thickness direction of an electronic device. This is beneficial to implementing a thinning design of the electronic device. In addition, for the lens assembly with the foregoing architecture, a wide aperture design and a large target surface design can be implemented. This significantly improves imaging quality and an imaging effect, and can meet shooting requirements for a distant scene or an infinity scene (especially a dark scene or night scene) and a close-up scene or a macro scene.

The following describes in detail, with reference to the accompanying drawings, the lens assembly and a camera module including the lens assembly provided in embodiments of this application.

FIG. 2 is a diagram of a structure of a camera module in which a lens assembly is in an infinity mode according to an embodiment of this application.

As shown in FIG. 2, the camera module 101 includes a lens assembly 10 and an image sensor 20. The image sensor 20 may be located on a side that is of the lens assembly 10 and that faces an image side. A photosensitive surface (which may also be referred to as an imaging surface) of the image sensor 20 may face the lens assembly 10, and light entering the camera module 101 passes through the lens assembly 10, and then may be transmitted to the photosensitive surface of the image sensor 20, to implement imaging of the light.

The image sensor 20 may be a charge-coupled device (Charge-coupled Device, CCD for short), or may be a complementary metal oxide semiconductor (Complementary Metal Oxide Semiconductor, CMOS for short). Alternatively, the image sensor 20 may be another device that can implement an optical-to-electrical conversion function.

Still refer to FIG. 2. The camera module 101 may further include an optical filter 30. The optical filter 30 may be located between the lens assembly 10 and the image sensor 20, so that light emitted from the lens assembly 10 passes through the optical filter 30 and then is transmitted to the photosensitive surface of the image sensor 20. The optical filter 30 has a light filtering function, and can allow light within a specific wavelength range to pass through, to filter out stray light that is not conducive to imaging. This helps improve imaging quality.

The camera module 101 may further include an image processor, a memory (not shown in the figure), and the like. The image sensor 20 may transmit an electrical signal to the image processor and the memory for processing or storage, and then an image of a photographed object is displayed on a display of the electronic device.

Certainly, in some other examples, the camera module 101 may further include another mechanical part, for example, a detection sensor, a drive motor, and a circuit board.

As shown in FIG. 2, a dashed line L in the figure is used as an optical axis of the lens assembly 10, and the lens assembly 10 includes at least a first lens unit 110, a first optical path folding unit 140, a second lens unit, and a second optical path folding unit 150 that are sequentially arranged along the optical axis L from an object side to the image side.

The optical path folding unit may have at least one reflective surface, so that light transmitted to the reflective surface can be reflected, to achieve an effect of folding an optical path. The optical path folding unit may be any optical element with a reflective surface, for example, the first optical path folding unit 140 and the second optical path folding unit 150 each may be a prism, a reflector, or the like.

The first lens unit 110 is located on a side that is of the first optical path folding unit 140 and that faces the object side, that is, the first lens unit 110 is disposed in front of the first optical path folding unit 140. Light entering the lens assembly 10 first passes through the first lens unit 110 and then is transmitted to the first optical path folding unit 140, the first optical path folding unit 140 reflects, to the second lens unit (for example, a second lens unit 120), light emitted from the first lens unit 110, the light passes through the second lens unit (for example, the second lens unit 120 and a second lens unit 130) and then is transmitted to the second optical path folding unit 150, and the second optical path folding unit 150 reflects light emitted from the second lens unit, so that the reflected light passes through the optical filter 30 and then is transmitted to the photosensitive surface of the image sensor 20, to implement imaging.

The lens assembly 10 may further include a lens barrel (not shown in the figure). The first lens unit 110, the second lens unit, the first optical path folding unit 140, and the second optical path folding unit 150 may be separately disposed in the lens barrel, and a light transmission hole may be provided on an end that is of the lens barrel and that faces the object side along the optical axis, so that light can enter the lens barrel and sequentially pass through the first lens unit 110, the first optical path folding unit 140, the second lens unit, and the second optical path folding unit 150.

The optical filter 30 may also be fastened to the lens barrel. For example, the optical filter 30 may be fastened to an end surface of one end that is of the lens barrel and that faces the image side, and a through hole may also be provided on the end surface of the end that is of the lens barrel and that faces the image side, so that light emitted from the lens assembly 10 passes through the optical filter 30 and then is transmitted to the image sensor 20.

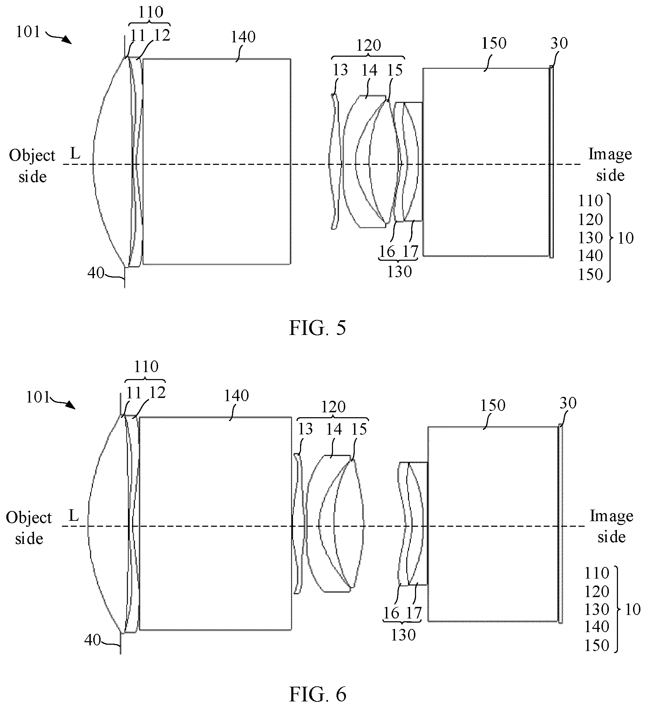

The camera module 101 may further include an aperture stop 40 (shown in FIG. 5). The aperture stop 40 may be located on a side that is of the lens assembly 10 and that faces the object side, and the aperture stop 40 is disposed closer to the object side. For example, the aperture stop 40 may be fastened to a first lens 11 of the first lens unit 110. Light entering the camera module 101 may first pass through the aperture stop 40, then sequentially pass through the first lens unit 110, the second lens unit, the first optical path folding unit 140, and the second optical path folding unit 150, and then be emitted. The aperture stop 40 may limit a light intake of the lens assembly 10, to adjust intensity of the light, and may be used to control an amount of light entering the lens assembly 10.

It may be understood that an optical axis of the first lens unit 110 of the lens assembly 10 may be parallel to a thickness direction of the electronic device, for example, a z direction in FIG. 2, to facilitate receiving light during shooting. A length direction of the electronic device may be an x direction, and a width direction of the electronic device may be a y direction (as shown in FIG. 1). As shown in FIG. 2, the length x direction is perpendicular to the thickness z direction.

For example, light is propagated in the z direction and enters the lens assembly 10. The light emitted from the first lens unit 110 is reflected by the first optical path folding unit 140. The first optical path folding unit 140 may fold an optical path once, for example, fold the optical path by 90 degrees. Then the light continues to propagate in the x direction and is transmitted to the second lens unit (the second lens unit 120). Light emitted from the second lens unit (the second lens unit 120 and the second lens unit 130) is reflected by the second optical path folding unit 150. The second optical path folding unit 150 folds the optical path for the second time, for example, folds the optical path by 90 degrees again. Then the light continues to propagate in the z direction and is transmitted to the image sensor 20. The first lens unit 110 is disposed in front of the first optical path folding unit 140, and the first optical path folding unit 140 and the second optical path folding unit 150 are configured to fold the optical path twice. For the lens assembly 10 with the foregoing architecture, a long focal length can be implemented; a total track length of the lens assembly 10 can be reduced while a long-focus feature is implemented, to implement small-sized designs of the lens assembly 10 and the camera module 101; and a total length of the lens assembly 10 in the z direction is significantly reduced, that is, space occupied by the camera module 101 in the thickness z direction of the electronic device is reduced, which is beneficial to a thinning design of the electronic device.

In addition, after the optical path is folded twice by using the first optical path folding unit 140 and the second optical path folding unit 150, the photosensitive surface of the image sensor 20 may be made perpendicular to the thickness z direction, that is, the photosensitive surface of the image sensor 20 is parallel to the length x direction and the width y direction of the electronic device, so that space occupied by the photosensitive surface of the image sensor 20 in the thickness z direction of the electronic device can be reduced, a large size of the photosensitive surface of the image sensor 20 can be easily implemented while a thinning requirement of the electronic device is ensured, and further, a large target surface design of the lens assembly 10 is implemented. This improves a photosensitive capability of the lens assembly 10, and therefore improves imaging quality and an imaging effect of the camera module 101.

The total track length of the lens assembly 10 is TTL, and a focal length of the lens assembly 10 is EFL. In this case, a range of a ratio of the total track length TTL of the lens assembly 10 to the effective focal length EFL of the lens assembly 10 may be $0.7 < TTL/EFL < 2.2$. A total length of the lens assembly 10 may be equivalent to or even less than the focal length of the lens assembly 10, so that the lens assembly 10 may have a large focal length and can implement a long-focus function. In addition, the lens assembly 10 has a small total track length, so that a length size of the lens assembly 10 can be effectively reduced. To be specific, the total length of the lens assembly 10 is significantly reduced while the long-focus feature is ensured, to help implement small-sized designs of the lens assembly 10 and the camera module 101.

In addition, for the lens assembly 10 with the foregoing architecture, a large target surface design and a wide aperture design can be implemented. An image height of the lens assembly 10 is IMH. The image height IMH of the lens assembly 10 and the effective focal length EFL of the lens assembly 10 may satisfy IMH/(2*EFL)<0.5. The lens assembly 10 has a large image height, so that the large target surface design of the lens assembly 10 is implemented and the photosensitive capability of the lens assembly 10 is significantly improved. This improves imaging quality and an imaging effect.

It should be noted that, to implement focusing of the lens assembly 10, the second lens unit may be movably disposed. For example, the second lens unit may be movably disposed to implement focusing switching between the infinity mode and the macro mode of the lens assembly 10. In a process of moving to implement switching, when the second lens unit moves to any position, the focal length of the lens assembly 10 may satisfy the foregoing conditional expression. For example, both a focal length of the lens assembly 10 in the infinity mode and a focal length of the lens assembly 10 in the macro mode may satisfy the foregoing conditional expression.

The image height IMH of the lens assembly 10 and the total track length TTL of the lens assembly 10 may satisfy IMH/(2*TTL)<0.5, to further ensure that the lens assembly 10 has a large image height. This helps implement a large target surface design of the lens assembly 10, and effectively improves the imaging quality and the imaging effect.

A size of a target surface of the image sensor 20 in the camera module 101 may be greater than 1/2 inches, which can meet a user requirement for the large target surface design.

In the lens assembly 10, the lens unit may include several lenses, and each lens may be an aspherical lens, for example, the lens may be an aspherical lens. The aspherical lens can reduce or eliminate spherical aberration and distortion aberration introduced by a spherical lens, which can further help implement wide aperture performance of the lens assembly 10 and also help reduce the total track length of the lens assembly 10.

For example, the first lens unit 110 may include only one lens. For example, the first lens unit 110 includes one first lens 11, and the first lens 11 is disposed at one end that is of the entire lens assembly 10 and that is closest to the object side.

Alternatively, the first lens unit 110 may include a plurality of lenses, and the plurality of lenses may be sequentially arranged along the optical axis. As shown in FIG. 2, the first lens unit 110 may include two lenses, for example, the first lens 11 and a second lens 12 that are sequentially arranged along the optical axis from the object side to the image side. The first lens 11 is also located at one end that is of the entire lens assembly 10 and that is closest to the object side, and the second lens 12 is adjacent to the first lens 11.

The first lens 11 may have positive focal power, to properly allocate focal power. The first lens 11 with the positive focal power is used with the second lens unit and the optical path folding unit to form the lens assembly 10, so that a wide aperture design of the lens assembly 10 can be implemented, to effectively increase an overall light intake of the lens assembly 10, and improve imaging quality and an imaging effect. The lens assembly 10 with a wide aperture design can further meet a requirement for an infinity shooting scene (especially in a dark or night shooting environment), thereby improving a shooting effect in a distant shooting scene, an infinity shooting scene, or the like.

Correspondingly, the second lens unit may include one lens, or the second lens unit may include a plurality of lenses, and the plurality of lenses may be sequentially arranged along the optical axis. As shown in FIG. 2, the second lens unit 120 may include three lenses, for example, a third lens 13, a fourth lens 14, and a fifth lens 15 that are sequentially arranged along the optical axis from the object side to the image side.

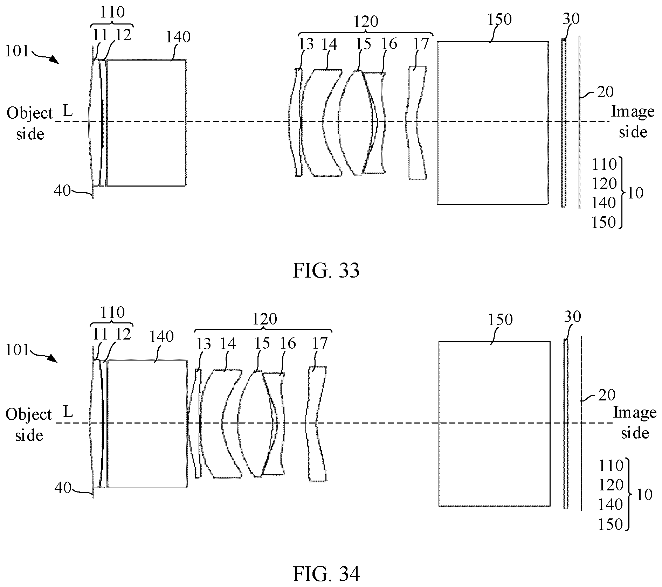

A quantity of second lens units located between the first optical path folding unit 140 and the second optical path folding unit 150 may be one. For example, the second lens unit may be a lens group including a plurality of lenses. For example, the second lens unit 120 may include the third lens 13, the fourth lens 14, the fifth lens 15, a sixth lens 16, and a seventh lens 17 that are sequentially arranged along the optical axis from the object side to the image side (shown in FIG. 33 and FIG. 34).

Alternatively, there may be a plurality of second lens units, and the plurality of second lens units are sequentially arranged along the optical axis. As shown in FIG. 2, there are two second lens units: the second lens unit 120 and the second lens unit 130 that are sequentially arranged along the optical axis from the object side to the image side. The second lens unit 120 may include the third lens 13, the fourth lens 14, and the fifth lens 15 that are sequentially arranged along the optical axis from the object side to the image side. The second lens unit 130 may include the sixth lens 16 and the seventh lens 17 that are sequentially arranged along the optical axis from the object side to the image side.

For example, a quantity of second lens units may be less than or equal to 3. This helps reduce complexity of the entire lens assembly 10 and reduce costs of the lens assembly 10 when meeting a long-focus feature requirement of the lens assembly 10 and ensuring that the lens assembly 10 can well implement an infinity shooting function and a macro shooting function.

The second lens unit is movably disposed. For example, the second lens unit may be disposed in the lens barrel in a slidable manner. The second lens unit may move along the optical axis. The second lens unit 120 in FIG. 2 is used as an example. The second lens unit 120 moving along the optical axis L changes a distance between the second lens unit 120 and the first lens unit 110, that is, changes the focal length of the lens assembly 10, so that a magnification of the lens assembly 10 can be increased, and the lens assembly 10 can be switched between the infinity mode and the macro mode, to implement a macro shooting function. In this case, the lens assembly 10 can clearly photograph a near object and details of the near object.

In addition, for the lens assembly 10 with the foregoing architecture, the large target surface design and the wide aperture design can be implemented, to improve a light intake of the entire system, and also help improve a resolution of the lens assembly 10 in a macro shooting scene. This helps implement a high magnification and a high resolution of the lens assembly 10 in the macro mode, and improves imaging quality and an imaging effect in a close-up shooting scene or a macro shooting scene.

When the lens assembly 10 is in the infinity mode, the lens assembly 10 may be configured to implement photographing of a distant scene. For example, in a shooting scene such as a scenery, a night scene, a star, a galaxy, or aurora, a fixed distance exists between the first lens unit and the second lens unit.

When the lens assembly 10 is switched from the infinity mode to the macro mode, the second lens unit may move along the optical axis, for example, move along the optical axis toward a direction facing the first optical path folding unit 140 or a direction away from the first optical path folding unit 140.

When the lens assembly 10 is in the macro mode, the lens assembly 10 may be configured to implement photographing of a near scene, for example, in a shooting scene of a fine object such as a flower, a flying bird, a worm, or a fish, the lens assembly 10 has a high magnification and a high resolution.

It should be noted that, when the lens assembly 10 is switched from the infinity mode to the macro mode, a specific direction (facing the first optical path folding unit 140 or away from the first optical path folding unit 140) in which the second lens unit moves along the optical axis may be selected and set according to actual allocation of focal power of the lens in the lens assembly 10.

The lens assembly 10 may further include a drive structure (not shown in the figure). The drive structure may be connected to the second lens unit, to drive the second lens unit to move along the optical axis.

When there is one second lens unit, the entire second lens unit may move along the optical axis. For example, the entire second lens unit may move along the optical axis toward the direction facing the first optical path folding unit 140, or the entire second lens unit may move along the optical axis toward the direction away from the first optical path folding unit 140, to implement switching of the lens assembly 10 between the infinity mode and the macro mode.

When there are a plurality of second lens units, at least one of the second lens units may move along the optical axis. For example, the at least one second lens unit may move along the optical axis toward the direction facing the first optical path folding unit 140, or the at least one second lens unit may move along the optical axis toward the direction away from the first optical path folding unit 140, to implement switching of the lens assembly 10 between the infinity mode and the macro mode.

For example, the second lens units are the second lens unit 120 and the second lens unit 130. The second lens unit 120 may be movably disposed. As shown in FIG. 2, when the lens assembly 10 is in the infinity mode, a fixed distance is maintained among the first lens unit 110, the second lens unit 120, and the second lens unit 130, and the lens assembly 10 can implement a long-focus function.

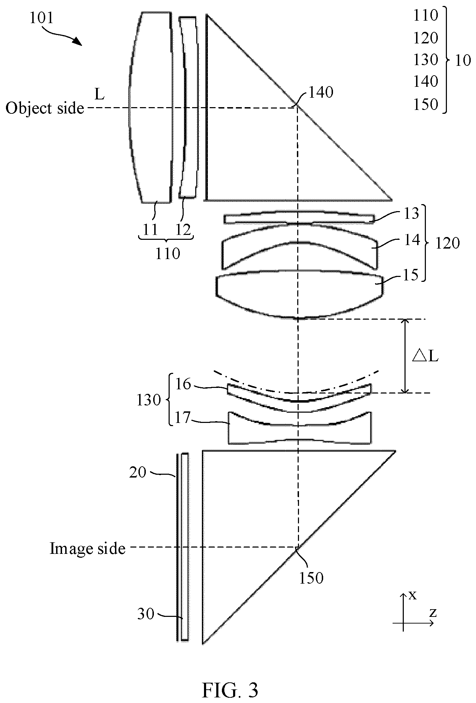

FIG. 3 is a diagram of a structure of a camera module in which a lens assembly is in a macro mode according to an embodiment of this application.

When the lens assembly 10 is switched from an infinity mode to the macro mode, the second lens unit 120 may move along an optical axis toward the first optical path folding unit 140, and the second lens unit 130 and the first lens unit 110 remain stationary. As shown in FIG. 3, compared with the lens assembly 10 in the infinity mode, for the lens assembly 10 in the macro mode, a distance between the second lens unit 120 and the first lens unit 110 on the optical axis is reduced, so that the lens assembly 10 has a high magnification, to implement a macro function of the lens assembly 10.

Certainly, in some other examples, when there are two second lens units, for example, the second lens unit 120 and the second lens unit 130, the second lens unit 130 may move along the optical axis, to implement switching of the lens assembly 10 between the infinity mode and the macro mode. For example, when the lens assembly 10 is switched from the infinity mode to the macro mode, the second lens unit 130 may move along the optical axis in a direction away from the first optical path folding unit 140.

Alternatively, the two second lens units may separately move along the optical axis, to implement switching of the lens assembly 10 between the infinity mode and the macro mode.

In some other examples, when there are three second lens units, any one of the second lens units may move along the optical axis, to implement switching of the lens assembly 10 between the infinity mode and the macro mode. Alternatively, any two of the second lens units may move along the optical axis, to implement switching of the lens assembly 10 between the infinity mode and the macro mode. Alternatively, the three second lens units may separately move along the optical axis, to implement switching of the lens assembly 10 between the infinity mode and the macro mode.

It should be noted that, when there are a plurality of second lens units that are movably disposed, the plurality of second lens units may move together, or the plurality of second lens units may move separately. For example, when the lens assembly 10 is switched from the infinity mode to the macro mode, both the second lens unit 120 and the second lens unit 130 can move along the optical axis, and the second lens unit 120 and the second lens unit 130 may move together under driving of the drive structure, or the second lens unit 120 and the second lens unit 130 may move separately under driving of two drive structures.

In this embodiment of this application, an example in which the second lens unit 120 moves along the optical axis to implement switching of the lens assembly 10 between the infinity mode and the macro mode is used. The fifth lens 15 is a lens that is of the second lens unit 120 and that is disposed closest to the second lens unit 130 (the second optical path folding unit 150). Movement of the second lens unit 120 is described with reference to the fifth lens 15. As shown in FIG. 3, an arc-shaped dashed line in FIG. 3 indicates a position of an image side surface of the fifth lens 15 in a case in which the lens assembly 10 is in the infinity mode. When the lens assembly 10 is switched from the infinity mode to the macro mode, the second lens unit 120 (the fifth lens 15) moves along the optical axis in a direction facing the first optical path folding unit 140.

When the lens assembly 10 is in the macro mode, the fifth lens 15 (the second lens unit 120) moves by a preset distance on the optical axis toward the first optical path folding unit 140, for example, △L in FIG. 3, that is, the second lens unit 120 moves by △L along the optical axis.

When the lens assembly 10 is switched from the infinity mode to the macro mode, the distance △L by which the second lens unit 120 moves on the optical axis may satisfy $0.01 < △L/TTL < 0.4$. In this case, the macro function of the lens assembly 10 is implemented, a magnification of the lens assembly 10 is further increased, and a macro function with a high magnification is implemented. This further significantly improves imaging quality and an imaging effect in a close-up shooting scene or a macro shooting scene.

The magnification is a ratio of an imaging length to a length of an object. A magnification of the lens assembly 10 in the macro mode may be less than 0.6x, that is, the imaging length is less than 0.6 times the length of the object. The lens assembly 10 has a high magnification, and a maximum magnification of the lens assembly may be comparable to a common single-lens reflex camera, which can meet a requirement for the close-up shooting scene or the macro shooting scene and ensure high-quality imaging of the lens assembly 10 in the close-up shooting scene or the macro shooting scene.

When the lens assembly 10 is in the infinity mode, a range of an f-number F#1 of the lens assembly 10 may be $1.4 < F\#1 < 3.0$. A small f-number value indicates a wide aperture feature of the lens assembly 10, to ensure a large light intake of the lens assembly 10. This further improves imaging quality and an imaging effect in an infinity shooting scene.

When the lens assembly 10 is in the macro mode, a range of an f-number F#2 of the lens assembly 10 may be $1.6 < F\#2 < 3.0$, so that the lens assembly 10 still has a wide aperture in the macro mode, to ensure a light intake of the lens assembly 10. This further improves a resolution of the lens assembly 10, and ensures high imaging quality and a good imaging effect in a macro shooting scene.

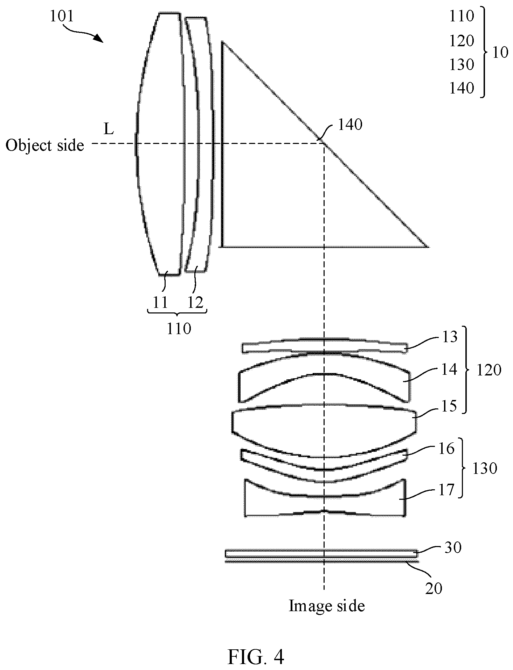

FIG. 4 is a diagram of a structure of a camera module in which a lens assembly is in an infinity mode according to an embodiment of this application.

To simplify complexity of the lens assembly 10, in some examples, the lens assembly 10 may include only one optical path folding unit. Specifically, as shown in FIG. 4, the lens assembly 10 may include the first lens unit 110, the first optical path folding unit 140, and second lens units (the second lens unit 120 and the second lens unit 130) that are sequentially arranged along an optical axis L from an object side to an image side.

The first lens unit 110 is disposed in front of the first optical path folding unit 140, that is, the first lens unit 110 is located on a side that is of the first optical path folding unit 140 and that faces the object side. Light entering the lens assembly 10 first passes through the first lens unit 110 and then is transmitted to the first optical path folding unit 140. The first optical path folding unit 140 reflects, to the second lens unit 120, light emitted from the first lens unit 110. The first optical path folding unit 140 may fold an optical path. Light emitted from the second lens unit 120 and the second lens unit 130 passes through the optical filter 30 and is transmitted to a photosensitive surface of the image sensor 20, to implement imaging.

The first lens unit 110 is disposed in front of the first optical path folding unit 140 and the first optical path folding unit 140 is configured to fold the optical path. For the lens assembly 10 with the foregoing architecture, a long focal length can be implemented; a total track length of the lens assembly 10 can be reduced while a long-focus feature is implemented, to implement small-sized designs of the lens assembly 10 and the camera module 101; and a total length of the lens assembly 10 in a thickness z direction is reduced, that is, space occupied by the camera module 101 in a thickness direction of an electronic device is reduced, which is beneficial to a thinning design of the electronic device.

A range of a ratio of a total track length TTL of the lens assembly 10 to a focal length EFL of the lens assembly 10 may be $0.7 < TTL/EFL \leq 1$. In this case, the lens assembly 10 has a larger focal length, so that a long-focus function is better implemented. In addition, the lens assembly 10 has a smaller total track length, so that a total length of the lens assembly 10 is further reduced while the long-focus feature is ensured, to help implement small-sized designs of the lens assembly 10 and the camera module 101.

For the lens assembly 10 with the foregoing architecture, a large target surface design and a wide aperture design can also be implemented. An image height IMH of the lens assembly 10 and the focal length EFL of the lens assembly 10 may satisfy 0.1<IMH/(2*EFL)<0.5, and the image height IMH of the lens assembly 10 and the total track length TTL of the lens assembly 10 may satisfy 0.1<IMH/(2*TTL)<0.5. In this case, the lens assembly 10 has a larger image height, so that a larger target surface design of the lens assembly 10 is implemented. This significantly improves imaging quality and an imaging effect.

For compositions of the first lens unit and the second lens unit in the lens assembly 10 (a quantity of lenses, a shape, and the like), refer to the first lens unit and the second lens unit in the foregoing descriptions. Details are not described in this example again.

The first lens 11 disposed at one end that is of the lens assembly 10 and that is closest to the object side may also have positive focal power. The first lens unit 110 is disposed in front of the first optical path folding unit 140, and the second lens unit is combined to form the lens assembly 10, so that a wide aperture design of the lens assembly 10 can also be implemented, to improve imaging quality and an imaging effect, and meet a requirement for an infinity shooting scene.

In this example, the second lens unit may alternatively be movably disposed, and the second lens unit moves along the optical axis, so that the lens assembly 10 can be switched between the infinity mode and a macro mode. In this way, the lens assembly 10 has a macro function, and the lens assembly 10 can meet requirements of infinity shooting and macro shooting.

For a quantity and a moving manner of the second lens units, refer to the foregoing descriptions. Details are not described again in this example. There may be one second lens unit, and the entire second lens unit moves along the optical axis, to implement switching of the lens assembly 10 between the infinity mode and the macro mode. Alternatively, there may be a plurality of second lens units, and at least one second lens unit moves along the optical axis (for example, the second lens unit 120 in FIG. 4 moves), to implement switching of the lens assembly 10 between the infinity mode and the macro mode.

When the lens assembly 10 is switched from the infinity mode to the macro mode, a distance $\triangle L$ by which the second lens unit moves along the optical axis may also satisfy 0.01<$\triangle L$/TTL<0.4, to ensure that the lens assembly 10 has a high magnification, and improve imaging quality and an imaging effect in a close-up shooting scene or a macro shooting scene.

A magnification of the lens assembly 10 in the macro mode may also be less than 0.6x, to meet a requirement for a high magnification in a macro shooting scene, and ensure high-quality imaging of the lens assembly 10 in the close-up shooting scene or the macro shooting scene.

A range of an f-number F#1 of the lens assembly 10 in the infinity mode may be 1.4<F#1<3.0. In this case, the lens assembly 10 has a feature of a wide aperture, to improve imaging quality in the infinity shooting scene.

A range of an f-number F#2 of the lens assembly 10 in the macro mode may be 1.6<F#2<3.0. In this case, the lens assembly 10 still has a wide aperture in the macro mode, to ensure imaging quality in the macro shooting scene.

In this embodiment of this application, overall focal power of the first lens unit and the second lens unit is not limited, and may be specifically selected and set according to an actual focal power allocation requirement.

In this embodiment of this application, shapes of an image side surface and an object side surface of lenses included in the first lens unit and the second lens unit are not limited either. At least a part that is of the image side surface of the lens and that corresponds to the optical axis may be a convex surface or may be a concave surface, and at least a part that is of the object side surface of the lens and that corresponds to the optical axis may be a convex surface or may be a concave surface. A specific shape may be selected and set according to an actual lens fitting requirement.

The following describes, with reference to specific embodiments, a structure and performance of a lens assembly provided in this application.

Embodiment 1

FIG. 5 is a diagram of a simulation structure of a camera module in which a lens assembly is in an infinity mode according to Embodiment 1 of this application. FIG. 6 is a diagram of a simulation structure of a camera module in which a lens assembly is in a macro mode according to Embodiment 1 of this application.

It should be noted that a first optical path folding unit 140 and a second optical path folding unit 150 in FIG. 5 and FIG. 6 are equivalent to a piece of flat glass for illustration, and a folding effect of the flat glass on an optical path remains unchanged.

In this example, the lens assembly includes two second lens units and two optical path folding units. With reference to FIG. 5 and FIG. 6, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have negative focal power, and the seventh lens 17 may have negative focal power.

The second lens unit 120 may be movably disposed. With reference to FIG. 5 and FIG. 6, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 26.469 mm, a focal length EFL of the lens assembly 10 in the infinity mode is 20.6 mm, and the total track length TTL of the lens assembly 10 and the focal length EFL of the lens assembly 10 satisfy TTL/EFL=1.285.

An image height IMH of the lens assembly 10 is 11.925 mm, and the image height IMH of the lens assembly 10 and the focal length EFL of the lens assembly 10 satisfy IMH/(2*EFL)=0.289.

The image height IMH of the lens assembly 10 and the total track length TTL of the lens assembly 10 satisfy IMH/(2*TTL)=0.215.

When the lens assembly 10 is switched from the infinity mode to the macro mode, a distance $\triangle L$ by which the second lens unit 120 moves along the optical axis is 2.46421, and the distance $\triangle L$ by which the second lens unit 120 moves along the optical axis and the total track length of the lens assembly 10 satisfy $\triangle L$/TTL=0.093.

A magnification of the lens assembly 10 in the macro mode is 0.300002x.

An f-number F#1 of the lens assembly 10 in the infinity mode is 1.49941.

An f-number F#2 of the lens assembly 10 in the macro mode is 1.82933.

Table 1.1 Optical parameters of optical elements in the camera module according to Embodiment 1 of this application

| | Surface number | Surface profile | Curvature radius | Thickness | Material |
|---|---|---|---|---|---|
| Aperture stop | S0 | Spherical surface | Unlimited | -2.065712712 | |
| L1 | S1 | Aspherical surface | 12.55111699 | 2.545770952 | 577680.6231 |
| | S2 | Aspherical surface | -99.41727844 | 0.03 | |
| L2 | S3 | Aspherical surface | -99.39286458 | 0.25 | 670450.1922 |
| | S4 | Aspherical surface | 64.18514093 | 0.435376448 | |
| P1 | S5 | Spherical surface | Unlimited | 9.620747053 | 516800.642 |
| | S6 | Spherical surface | Unlimited | 2.494214149 | |
| L3 | S7 | Aspherical surface | 33.71821065 | 0.786963296 | 660668.2001 |
| | S8 | Aspherical surface | -33.84696186 | 0.143065623 | |
| L4 | S9 | Aspherical surface | 9.263837814 | 0.783034115 | 670450.1922 |
| | S10 | Aspherical surface | 5.143191104 | 0.907837529 | |
| L5 | S11 | Aspherical surface | 7.940175091 | 1.882421561 | 599623.2808 |
| | S12 | Aspherical surface | -14.60530817 | 0.196963799 | |
| L6 | S13 | Aspherical surface | -37.87514212 | 0.40981438 | 665894.1958 |
| | S14 | Aspherical surface | -117.9413821 | 0.717578532 | |

(continued)

|  | Surface number | Surface profile | Curvature radius | Thickness | Material |
|---|---|---|---|---|---|
| L7 | S15 | Aspherical surface | -7.421232837 | 0.25 | 644272.2156 |
|  | S16 | Aspherical surface | 89.16658936 | 0.045524718 |  |
| P2 | S17 | Spherical surface | Unlimited | 8.230687845 | 516800.6417 |
|  | S18 | Spherical surface | Unlimited | 0.03 |  |
| IR | S19 | Spherical surface | Unlimited | 0.21 | 516800.6417 |
|  | S20 | Spherical surface | Unlimited | 0.03 |  |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

S0 is the aperture stop 40, S1 and S2 are respectively an object side surface and an image side surface of the first lens 11, S3 and S4 are respectively an object side surface and an image side surface of the second lens 12, S5 and S6 are respectively an object side surface and an image side surface of the first optical path folding unit 140, S7 and S8 are respectively an object side surface and an image side surface of the third lens 13, S9 and S10 are respectively an object side surface and an image side surface of the fourth lens 14, S11 and S12 are respectively an object side surface and an image side surface of the fifth lens 15, S13 and S14 are respectively an object side surface and an image side surface of the sixth lens 16, S15 and S16 are respectively an object side surface and an image side surface of the seventh lens 17, S17 and S18 are respectively an object side surface and an image side surface of the second optical path folding unit 150, and S19 and S20 are respectively an object side surface and an image side surface of the optical filter 30.

The thickness is a thickness of the optical element in a direction of the optical axis or a thickness of an air gap between optical elements. A thickness corresponding to the aperture stop 40 is a distance from the aperture stop 40 to the object side surface of the first lens 11 in the direction of the optical axis; a thickness corresponding to the object side surface of the first lens 11 is a thickness of the first lens 11 in the direction of the optical axis; a thickness corresponding to the image side surface of the first lens 11 is a distance from the image side surface of the first lens 11 to the object side surface of the second lens 12 in the direction of the optical axis; and so on.

The material refers to a refractive index and an Abbe number of a lens. It should be noted that a notation combining the refractive index and the Abbe number is used for a value of the material in Table 1.1, where a sum of 1.000 and a part that precedes a decimal point in the value of the material in the table is the refractive index of the lens, and a product of 0.01 and a part that follows the decimal point in the value of the material in the table is the Abbe number of the lens. The first lens 11 (L1) is used as an example. If a value of a material of the first lens 11 is 577680.6231, a refractive index of the first lens 11 is 1.577680, and an Abbe number of the first lens 11 is 62.31. This also applies to other lenses.

Table 1.2 Focal lengths of lenses and lens units in the lens assembly according to Embodiment 1 of this application

| f1 | f2 | f3 | f4 | f5 | f6 | f7 | G1 | G2 | G3 |
|---|---|---|---|---|---|---|---|---|---|
| 18.5819 | 52.0439 | 5.06576 | 3.92383 | 8.89604 | 183.292 | 12.3302 | 27.1851 | 12.7558 | 11.022 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 1.3 Aspherical coefficients of lenses in the lens assembly according to Embodiment 1 of this application

|  |  | k | A4 | A6 | A8 | A10 |
|---|---|---|---|---|---|---|
| L1 | S1 | 0 | -0.000091 | 0.00001 | -0.000001 | 1.06E-07 |
|  | S2 | 0 | 0.000178721 | -0.000018 | 0.000001 | 1.50E-08 |
| L2 | S3 | 0 | -0.00317256 | 0.000129338 | -0.000004 | 9.54E-08 |
|  | S4 | 0 | -0.0036332 | 0.00015622 | -0.000006 | 1.48E-07 |
| L3 | S7 | 0 | -0.00505608 | 0.001102 | -0.000288006 | 0.000041 |
|  | S8 | 0 | 0.0248249 | -0.00485024 | 0.000681942 | -0.000065 |

(continued)

|  |  | k | A4 | A6 | A8 | A10 |
|---|---|---|---|---|---|---|
| L4 | S9 | 0 | 0.0280194 | -0.0065846 | 0.00113393 | -0.000127395 |
| | S10 | -1 | -0.00313496 | 0.000200975 | -0.000089 | 0.000033 |
| L5 | S11 | 0 | -0.0010783 | 0.00046796 | -0.000141667 | 0.000027 |
| | S12 | 0 | -0.00313421 | 0.00166277 | -0.000516275 | 0.000099 |
| L6 | S13 | -1 | 0.021298 | -0.00149553 | -0.000245886 | 0.00009 |
| | S14 | -1 | 0.0264243 | -0.00369613 | 0.000367978 | -0.000033 |
| L7 | S15 | 0 | 0.00684834 | -0.00410398 | 0.000866938 | -0.000099 |
| | S16 | 0 | 0.00127121 | -0.00230336 | 0.00058846 | -0.000074 |
|  |  | A12 | A14 | A16 | A18 | A20 |
| L1 | S1 | -5.28E-09 | 1.63E-10 | -3.04E-12 | 3.18E-14 | -1.44E-16 |
| | S2 | -2.89E-09 | 1.39E-10 | -3.36E-12 | 4.12E-14 | -2.05E-16 |
| L2 | S3 | -3.29E-11 | -5.87E-11 | 1.48E-12 | -1.53E-14 | 5.73E-17 |
| | S4 | -2.82E-10 | -1.07E-10 | 3.24E-12 | -4.11E-14 | 1.98E-16 |
| L3 | S5 | -0.000003 | 1.80E-07 | -5.69E-09 | 1.06E-10 | -9.28E-13 |
| | S6 | 0.000004 | -1.92E-07 | 5.70E-09 | -9.70E-11 | 6.80E-13 |
| L4 | S7 | 0.000009 | -4.38E-07 | 1.28E-08 | -2.09E-10 | 1.45E-12 |
| | S8 | -0.000006 | 0.000001 | -2.73E-08 | 7.52E-10 | -8.55E-12 |
| L5 | S9 | -0.000003 | 1.79E-07 | -5.51E-09 | 5.57E-11 | 4.39E-13 |
| | S10 | -0.000012 | 0.000001 | -4.49E-08 | 1.20E-09 | -1.38E-11 |
| L6 | S11 | -0.000012 | 0.000001 | -4.43E-08 | 1.14E-09 | -1.27E-11 |
| | S12 | 0.000004 | -0.000001 | 3.54E-08 | -1.26E-09 | 1.82E-11 |
| L7 | S13 | 0.000007 | -2.79E-07 | 6.64E-09 | -7.83E-11 | 3.53E-13 |
| | S14 | 0.000006 | -2.55E-07 | 7.07E-09 | -1.09E-10 | 7.11E-13 |
|  |  | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |
| L5 | S9 | 0 | 0 | 0 | 0 | 0 |
| | S10 | 0 | 0 | 0 | 0 | 0 |
| L6 | S11 | -2.54E-15 | 0 | 0 | 0 | 0 |
| | S12 | -6.59E-15 | 0 | 0 | 0 | 0 |
| L7 | S13 | -1.78E-15 | 0 | 0 | 0 | 0 |
| | S14 | 0 | 0 | 0 | 0 | 0 |

It can be learned from Table 1.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$ ,

where

the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 5 and FIG. 6.

For optical parameters of the lens assembly 10 with the foregoing architecture, refer to Table 1.4 below.

Table 1.4 Optical parameters of the lens assembly according to Embodiment 1 of this application

| | |
|---|---|
| F-number F# in the infinity mode | 1.49941 |
| F-number F# in the macro mode | 1.82933 |
| Focal length in the infinity mode/mm | 20.6 |
| Focal length in the macro mode/mm | 14.7637 |
| Image height/mm | 11.925 |
| Magnification in the macro mode | 0.300002 |
| Object distance in the macro mode/mm | 69.9394 |
| Moving distance of the second lens unit/mm | 2.46421 |
| Total track length/mm | 26.4689 |

It can be learned from Table 1.4 that the lens assembly 10 provided in Embodiment 1 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

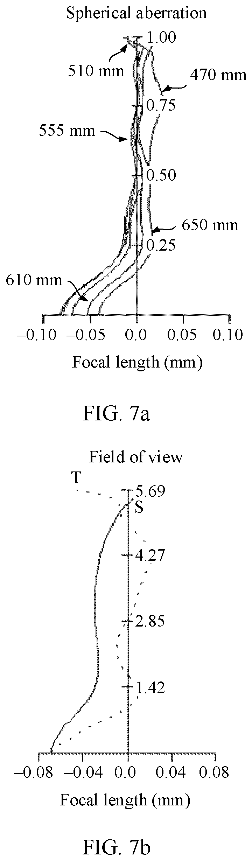

FIG. 7a is a curve graph of chromatic aberration of the lens assembly in the infinity mode according to Embodiment 1 of this application. An example of the chromatic aberration in FIG. 7a is axial chromatic aberration obtained after light with wavelengths of 650 nm, 610 nm, 555 nm, 510 nm, and 470 nm passes through the lens assembly, where a horizontal coordinate represents a size of spherical aberration, and a vertical coordinate represents a normalized aperture. It can be learned from FIG. 7a that, when the lens assembly is in the infinity mode, chromatic aberration of light passing through the lens assembly is small.

FIG. 7b is an astigmatism and field curvature plot of the lens assembly in the infinity mode according to Embodiment 1 of this application. FIG. 7b is an astigmatism and field curvature plot obtained after light with a wavelength of 555 nm passes through the lens assembly, where S is field curvature in a sagittal direction, T is field curvature in a meridian direction, a horizontal coordinate represents a size of the field curvature, a horizontal distance between T and S represents a size of astigmatism, and a vertical coordinate represents a field of view. It can be learned from FIG. 7b that, when the lens assembly is in the infinity mode, both field curvature in the sagittal direction and field curvature in the meridian direction are small, and imaging quality is high.

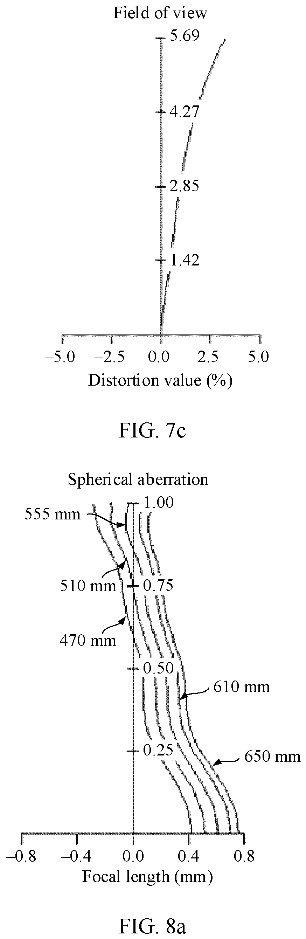

FIG. 7c is a curve graph of distortion of the lens assembly in the infinity mode according to Embodiment 1 of this application, and represents a difference between imaging deformation and an ideal system. FIG. 7c shows a distortion curve obtained after light with a wavelength of 555 nm passes through the lens assembly, where a horizontal coordinate represents a distortion size, and a vertical coordinate represents a field of view. It can be learned from FIG. 7c that, when the lens assembly is in the infinity mode, a distortion amount of imaging is small, and a difference between an imaging shape and an ideal shape is small, so that a deformation difference requirement is met, and imaging quality is high.

FIG. 8a is a curve graph of chromatic aberration of the lens assembly in the macro mode according to Embodiment 1 of this application. For horizontal and vertical coordinates in the figure, refer to the foregoing descriptions. It can be learned from FIG. 8a that, when the lens assembly is in the macro mode, chromatic aberration of light passing through the lens assembly is small.

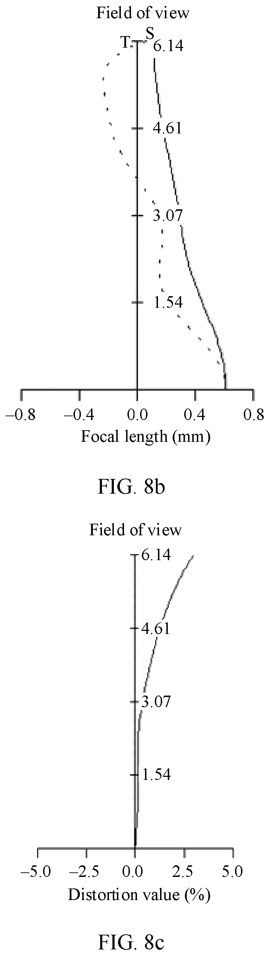

FIG. 8b is an astigmatism and field curvature plot of the lens assembly in the macro mode according to Embodiment 1 of this application. For horizontal and vertical coordinates in the figure, refer to the foregoing descriptions. It can be learned from FIG. 8b that, when the lens assembly is in the macro mode, both field curvature in a sagittal direction and field curvature in a meridian direction are small, and imaging quality is high.

FIG. 8c is a curve graph of distortion of the lens assembly in the macro mode according to Embodiment 1 of this application. For horizontal and vertical coordinates in the figure, refer to the foregoing descriptions. It can be learned from FIG. 8c that, when the lens assembly is in the macro mode, a distortion amount of imaging is small, and a difference between an imaging shape and an ideal shape is small, so that a deformation difference requirement is met, and imaging quality is high.

Embodiment 2

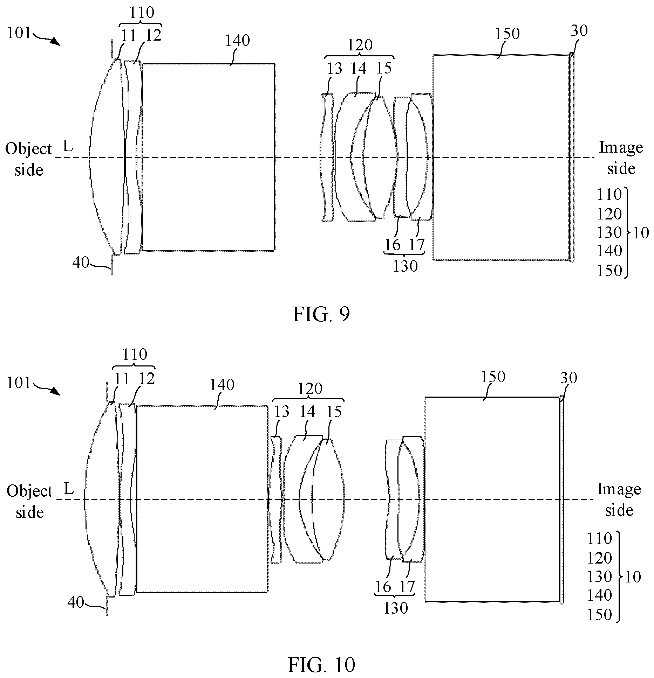

FIG. 9 is a diagram of a simulation structure of a camera module in which a lens assembly is in an infinity mode according to Embodiment 2 of this application. FIG. 10 is a diagram of a simulation structure of a camera module in which a lens assembly is in a macro mode according to Embodiment 2 of this application.

A first optical path folding unit 140 and a second optical path folding unit 150 in FIG. 9 and FIG. 10 are equivalent to a piece of flat glass for illustration, and a folding effect of the flat glass on an optical path remains unchanged.

In this example, the lens assembly includes two second lens units and two optical path folding units. With reference to FIG. 9 and FIG. 10, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have negative focal power, and the seventh lens 17 may have negative focal power.

The second lens unit 120 may be movably disposed. With reference to FIG. 9 and FIG. 10, when the lens assembly 10 is switched from the infinity mode to the macro mode, the second lens unit 120 moves along the optical axis toward the first optical path folding unit 140, and the first lens unit 110 and the second lens unit 130 remain stationary.

A total track length TTL of the lens assembly 10 is 24.6816 mm, a focal length EFL of the lens assembly 10 in the infinity mode is 20.5906 mm, and the total track length TTL of the lens assembly 10 and the focal length EFL of the lens assembly 10 satisfy TTL/EFL=1.199.

An image height IMH of the lens assembly 10 is 11.34 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.230.

When the lens assembly 10 is switched from the infinity mode to the macro mode, a distance $\triangle L$ by which the second lens unit 120 moves along the optical axis is 2.57229, and the distance $\triangle L$ by which the second lens unit 120 moves along the optical axis and the total track length of the lens assembly 10 satisfy $\Delta L$/TTL=0.104.

A magnification of the lens assembly 10 in the macro mode is 0.300001x.

An f-number F#1 of the lens assembly 10 in the infinity mode is 1.80826.

An f-number F#2 of the lens assembly 10 in the macro mode is 2.13224.

Table 2.1 Optical parameters of optical elements in the camera module according to Embodiment 2 of this application

|  | Surface number | Surface profile | Curvature radius | Thickness | Material |
|---|---|---|---|---|---|
| Aperture stop | S0 | Spherical surface | 1.00E+18 | -1.256089178 | |
| L1 | S1 | Aspherical surface | 11.94836483 | 2.010399087 | 539951.6735 |
| | S2 | Aspherical surface | -59.93544268 | 0.03 | |
| L2 | S3 | Aspherical surface | -297.0060247 | 0.633058908 | 663496.1978 |
| | S4 | Aspherical surface | 52.09254049 | 0.374977828 | |
| P1 | S5 | Spherical surface | 1.00E+18 | 7.660909217 | 516800.642 |
| | S6 | Spherical surface | 1.00E+18 | 2.602287653 | |
| L3 | S7 | Aspherical surface | 25.40351911 | 0.766891534 | 621122.244 |
| | S8 | Aspherical surface | -129.0318608 | 0.140827473 | |
| L4 | S9 | Aspherical surface | 10.13664547 | 0.892330865 | 631388.2288 |
| | S10 | Aspherical surface | 5.149215113 | 0.730215762 | |
| L5 | S11 | Aspherical surface | 9.240365124 | 1.906997431 | 541148.5068 |
| | S12 | Aspherical surface | -8.178688206 | 0.03 | |
| L6 | S13 | Aspherical surface | 1450.033612 | 0.611719105 | 538754.5248 |
| | S14 | Aspherical surface | 24.62549463 | 1.154890266 | |
| L7 | S15 | Aspherical surface | -5.755299877 | 0.263477138 | 534530.5604 |
| | S16 | Aspherical surface | -31.40073486 | 0.062877228 | |
| P2 | S17 | Spherical surface | 1.00E+18 | 7.858140504 | 516800.6417 |
| | S18 | Spherical surface | 1.00E+18 | 0.03 | |
| IR | S19 | Spherical surface | 1.00E+18 | 0.21 | 516800.6417 |
| | S20 | Spherical surface | 1.00E+18 | 0.03 | |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 2.2 Focal lengths of lenses and lens units in the lens assembly according to Embodiment 2 of this application

| f1 | f2 | f3 | f4 | f5 | f6 | f7 | G1 | G2 | G3 |
|---|---|---|---|---|---|---|---|---|---|
| 18.13 | -56.2136 | 5.95013 | -4.30154 | 7.87409 | -72.2398 | -11.0849 | 24.9164 | 12.0482 | -9.18725 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 2.3 Aspherical coefficients of lenses in the lens assembly according to Embodiment 2 of this application

|  |  | k | A4 | A6 | A8 | A10 |
|---|---|---|---|---|---|---|
| L1 | S1 | 0 | 0.000401343 | -0.000016 | 1.05E-07 | 9.83E-08 |
| | S2 | 0 | 0.000732912 | -0.000041 | 0.000002 | -1.65E-07 |

(continued)

| | | k | A4 | A6 | A8 | A10 |
|---|---|---|---|---|---|---|
| L2 | S3 | 0 | -0.00399072 | 0.00017589 | -0.000006 | -2.28E-07 |
| | S4 | 0 | -0.00506162 | 0.000266485 | -0.000015 | 1.00E-06 |
| L3 | S7 | 0 | -0.00299808 | 0.000558133 | -0.000339779 | 0.000084 |
| | S8 | 0 | 0.0260043 | -0.00604328 | 0.00104175 | -0.000100814 |
| L4 | S9 | 0 | 0.0264139 | -0.00697864 | 0.00162783 | -0.000253261 |
| | S10 | 0 | -0.00914803 | 0.00186758 | -0.000672837 | 0.000198299 |
| L5 | S11 | 0 | -0.00369659 | 0.000622191 | -0.000031 | -0.000009 |
| | S12 | 0 | -0.000212967 | -0.000148175 | 0.000124109 | -0.00004 |
| L6 | S13 | 0 | 0.0145426 | -0.00101832 | -0.00004 | 0.000025 |
| | S14 | 0 | 0.0168297 | -0.000743296 | -0.000301863 | 0.000100493 |
| L7 | S15 | 0 | 0.0286912 | -0.0102112 | 0.00229744 | -0.000356223 |
| | S16 | 0 | 0.0228538 | -0.00931186 | 0.00222963 | -0.000368341 |
| | | A12 | A14 | A16 | A18 | A20 |
| L1 | S1 | -1.15E-08 | 6.41E-10 | -1.98E-11 | 3.26E-13 | -2.32E-15 |
| | S2 | 8.29E-09 | -1.15E-10 | -5.50E-12 | 2.11E-13 | -2.08E-15 |
| L2 | S3 | 4.79E-08 | -2.80E-09 | 8.15E-11 | -1.21E-12 | 7.25E-15 |
| | S4 | -2.56E-09 | -8.92E-10 | 4.07E-11 | -7.57E-13 | 5.33E-15 |
| L3 | S5 | -0.000012 | 1.00E-06 | -3.90E-08 | 8.04E-10 | -4.78E-12 |
| | S6 | 0.000003 | 2.74E-07 | -3.17E-08 | 1.21E-09 | -1.68E-11 |
| L4 | S7 | 0.000026 | -2.00E-06 | 7.19E-08 | -1.75E-09 | 1.90E-11 |
| | S8 | -0.000039 | 0.000005 | -3.57E-07 | 1.46E-08 | -2.52E-10 |
| L5 | S9 | 0.000003 | -3.53E-07 | 2.39E-08 | -8.28E-10 | 1.12E-11 |
| | S10 | 0.000008 | -0.000001 | 5.95E-08 | -2.24E-09 | 3.56E-11 |
| L6 | S11 | -0.000003 | 2.42E-07 | -9.97E-09 | 2.35E-10 | -3.07E-12 |
| | S12 | -0.000017 | 0.000002 | -1.04E-07 | 3.31E-09 | -3.33E-11 |
| L7 | S13 | 0.000037 | -2.00E-06 | 9.04E-08 | -1.89E-09 | 3.96E-11 |
| | S14 | 0.000042 | -3.00E-06 | 1.60E-07 | -4.54E-09 | 5.61E-11 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |
| L5 | S9 | 0 | 0 | 0 | 0 | 0 |
| | S10 | 0 | 0 | 0 | 0 | 0 |

(continued)

|   |     | A22 | A24 | A26 | A28 | A30 |
|---|-----|-----|-----|-----|-----|-----|
| L6 | S11 | 1.77E-14 | 0 | 0 | 0 | 0 |
|    | S12 | -2.57E-13 | 0 | 0 | 0 | 0 |
| L7 | S13 | -1.02E-12 | 0 | 0 | 0 | 0 |
|    | S14 | 0 | 0 | 0 | 0 | 0 |

It can be learned from Table 2.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 9 and FIG. 10.

For optical parameters of the lens assembly 10 with the foregoing architecture, refer to Table 2.4 below.

Table 2.4 Optical parameters of the lens assembly according to Embodiment 2 of this application

| F-number F# in the infinity mode | 1.80826 |
|---|---|
| F-number F# in the macro mode | 2.13224 |
| Focal length in the infinity mode/mm | 20.5906 |
| Focal length in the macro mode/mm | 13.6643 |
| Image height/mm | 11.34 |
| Magnification in the macro mode | 0.300001 |
| Object distance in the macro mode/mm | 66.1392 |
| Moving distance of the second lens unit/mm | 2.57229 |
| Total track length/mm | 24.6816 |

It can be learned from Table 2.4 that the lens assembly 10 provided in Embodiment 2 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

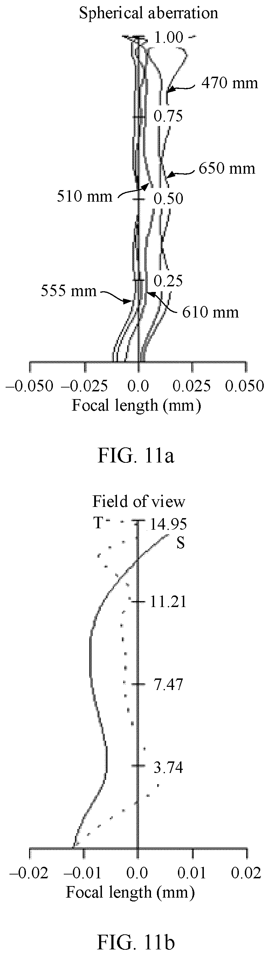

FIG. 11a is a curve graph of chromatic aberration of the lens assembly in the infinity mode according to Embodiment 2 of this application. For horizontal and vertical coordinates in the figure, refer to Embodiment 1. Details are not described in this embodiment again. It can be learned from FIG. 11a that, when the lens assembly is in the infinity mode, chromatic aberration of light passing through the lens assembly is small.

FIG. 11b is an astigmatism and field curvature plot of the lens assembly in the infinity mode according to Embodiment 2 of this application. For horizontal and vertical coordinates in the figure, refer to Embodiment 1. Details are not described in this embodiment again. It can be learned from FIG. 11b that, when the lens assembly is in the infinity mode, both field curvature in a sagittal direction and field curvature in a meridian direction are small, and imaging quality is high.

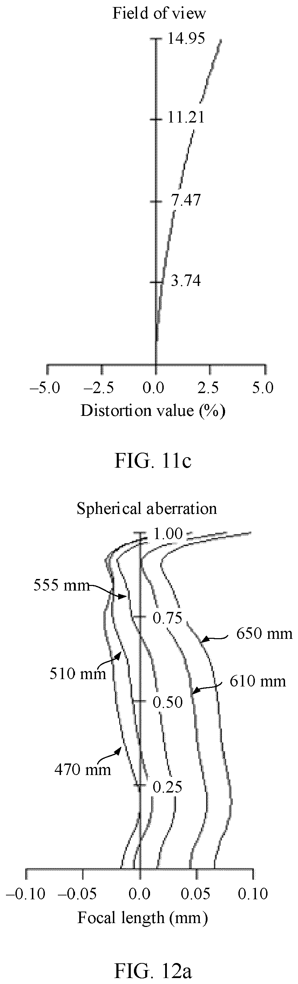

FIG. 11c is a curve graph of distortion of the lens assembly in the infinity mode according to Embodiment 2 of this application. For horizontal and vertical coordinates in the figure, refer to Embodiment 1. Details are not described in this embodiment again. It can be learned from FIG. 11c that, when the lens assembly is in the infinity mode, a distortion amount of imaging is small, and a difference between an imaging shape and an ideal shape is small, so that a deformation difference requirement is met, and imaging quality is high.

FIG. 12a is a curve graph of chromatic aberration of the lens assembly in the macro mode according to Embodiment 2 of this application. For horizontal and vertical coordinates in the figure, refer to Embodiment 1. Details are not described in this embodiment again. It can be learned from FIG. 12a that, when the lens assembly is in the macro mode, chromatic aberration of light passing through the lens assembly is small.

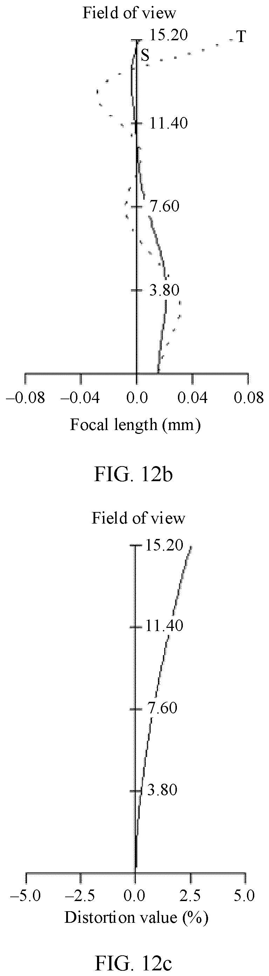

FIG. 12b is an astigmatism and field curvature plot of the lens assembly in the macro mode according to Embodiment 2 of this application. For horizontal and vertical coordinates in the figure, refer to Embodiment 1. Details are not described in this embodiment again. It can be learned from FIG. 12b that, when the lens assembly is in the macro mode, both field curvature in a sagittal direction and field curvature in a meridian direction are small, and imaging quality is high.

FIG. 12c is a curve graph of distortion of the lens assembly in the macro mode according to Embodiment 2 of this application. For horizontal and vertical coordinates in the figure, refer to Embodiment 1. Details are not described in this embodiment again. It can be learned from FIG. 12c that, when the lens assembly is in the macro mode, a distortion amount of imaging is small, and a difference between an imaging shape and an ideal shape is small, so that a deformation difference requirement is met, and imaging quality is high.

Embodiment 3

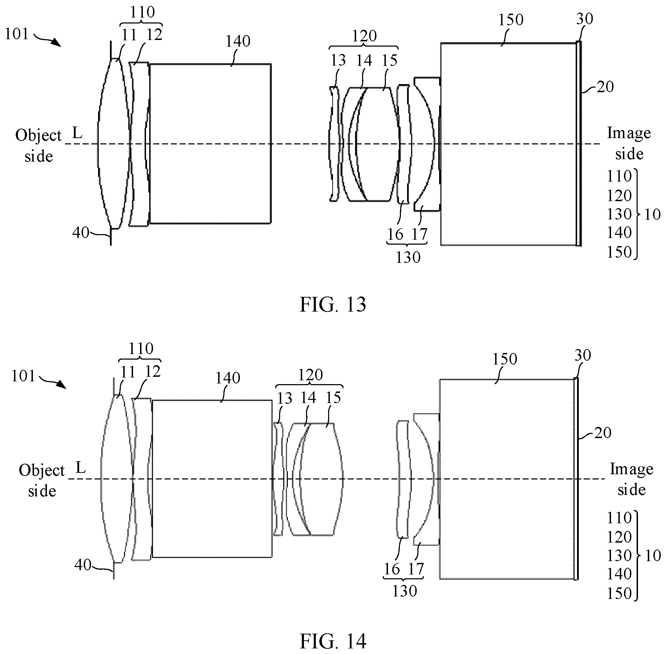

FIG. 13 is a diagram of a simulation structure of a camera module in which a lens assembly is in an infinity mode according to Embodiment 3 of this application. FIG. 14 is a diagram of a simulation structure of a camera module in which a lens assembly is in a macro mode according to Embodiment 3 of this application.

A first optical path folding unit 140 and a second optical path folding unit 150 in FIG. 13 and FIG. 14 are equivalent to a piece of flat glass for illustration, and a folding effect of the flat glass on an optical path remains unchanged.

In this example, the lens assembly includes two second lens units and two optical path folding units. With reference to FIG. 13 and FIG. 14, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have positive focal power, and the seventh lens 17 may have negative focal power.

The second lens unit 120 may be movably disposed. With reference to FIG. 13 and FIG. 14, when the lens assembly 10 is switched from the infinity mode to the macro mode, the second lens unit 120 moves along the optical axis toward the first optical path folding unit 140, and the first lens unit 110 and the second lens unit 130 remain stationary.

A total track length TTL of the lens assembly 10 is 24.6809 mm, a focal length EFL of the lens assembly 10 in the infinity mode is 20.596 mm, and the total track length TTL of the lens assembly 10 and the focal length EFL of the lens assembly 10 satisfy TTL/EFL=1.198.

An image height IMH of the lens assembly 10 is 11.34 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.230.

When the lens assembly 10 is switched from the infinity mode to the macro mode, a distance △L by which the second lens unit 120 moves along the optical axis is 3.30857, and the distance △L by which the second lens unit 120 moves along the optical axis and the total track length of the lens assembly 10 satisfy ΔL/TTL=0.134.

A magnification of the lens assembly 10 in the macro mode is 0.300001x.

An f-number F#1 of the lens assembly 10 in the infinity mode is 2.07607.

An f-number F#2 of the lens assembly 10 in the macro mode is 2.44988.

Table 3.1 Optical parameters of optical elements in the camera module according to Embodiment 3 of this application

|  | Surface number | Surface profile | Curvature radius | Thickness | Material |
|---|---|---|---|---|---|
| Aperture stop | S0 | Spherical surface | 1.00E+18 | -0.77598994 |  |
| L1 | S1 | Aspherical surface | 16.29680867 | 1.85714776 | 508251.7299 |
|  | S2 | Aspherical surface | -20.28030308 | 0.03 |  |
| L2 | S3 | Aspherical surface | -152.2163797 | 0.850895238 | 607955.2617 |
|  | S4 | Aspherical surface | 56.43067019 | 0.31106929 |  |
| P1 | S5 | Spherical surface | 1.00E+18 | 7 | 516800.642 |
|  | S6 | Spherical surface | 1.00E+18 | 3.338574537 |  |
| L3 | S7 | Aspherical surface | 25.8942242 | 0.646506585 | 612933.2565 |
|  | S8 | Aspherical surface | -51.45824412 | 0.198583349 |  |
| L4 | S9 | Aspherical surface | 16.26753599 | 0.31583658 | 616581.2483 |
|  | S10 | Aspherical surface | 5.615660028 | 0.442281466 |  |
| L5 | S11 | Aspherical surface | 9.018005136 | 2.509838766 | 534530.5604 |
|  | S12 | Aspherical surface | -9.897474847 | 0.03 |  |
| L6 | S13 | Aspherical surface | -128.4229946 | 0.671554808 | 670450.1922 |
|  | S14 | Aspherical surface | -33.51652304 | 1.310250587 |  |
| L7 | S15 | Aspherical surface | -5.73410754 | 0.25 | 534530.5604 |
|  | S16 | Aspherical surface | 423.6501076 | 0.152438852 |  |
| P2 | S17 | Spherical surface | 1.00E+18 | 7.815022182 | 516800.6417 |
|  | S18 | Spherical surface | 1.00E+18 | 0.03 |  |
| IR | S19 | Spherical surface | 1.00E+18 | 0.21 | 516800.6417 |
|  | S20 | Spherical surface | 1.00E+18 | 0.03 |  |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 3.2 Focal lengths of lenses and lens units in the lens assembly according to Embodiment 3 of this application

| f1 | f2 | f3 | f4 | f5 | f6 | f7 | G1 | G2 | G3 |
|---|---|---|---|---|---|---|---|---|---|
| 17.1539 | - | 5.79028 | - | 7.99398 | 68.7676 | - | 23.9663 | 14.6247 | - |
|  | 50.7726 |  | 4.00295 |  |  | 9.41389 |  |  | 10.8758 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 3.3 Aspherical coefficients of lenses in the lens assembly according to Embodiment 3 of this application

| | | k | A4 | A6 | A8 | A10 |
|---|---|---|---|---|---|---|
| L1 | S1 | 0 | 0.000797041 | -0.000045 | 2.00E-06 | 8.12E-09 |
| | S2 | 0 | 0.00145057 | -0.000119959 | 0.00001 | -1.00E-06 |
| L2 | S3 | 0 | -0.00447239 | 0.000182388 | -0.000007 | -1.76E-07 |
| | S4 | 0 | -0.00624142 | 0.00038331 | -0.00003 | 2.00E-06 |
| L3 | S7 | 0 | -0.00456006 | 0.00136648 | -0.000804356 | 0.000252114 |
| | S8 | 0 | 0.026165 | -0.00458808 | 0.000129815 | 0.000250578 |
| L4 | S9 | 0 | 0.0332213 | -0.00817431 | 0.00179836 | -0.000244922 |
| | S10 | 0 | -0.0126154 | 0.00341458 | -0.000871009 | 0.000146104 |
| L5 | S11 | 0 | -0.00993953 | 0.00288863 | -0.000439024 | 0.000016 |
| | S12 | 0 | 0.000498794 | -0.000071 | 0.000072 | -0.000022 |
| L6 | S13 | 0 | 0.00140362 | 0.000997576 | -0.000466483 | 0.000130476 |
| | S14 | 0 | 0.00197046 | 0.00110604 | -0.000540883 | 0.000145607 |
| L7 | S15 | 0 | 0.0148248 | -0.00536955 | 0.00108406 | -0.000131453 |
| | S16 | 0 | 0.013316 | -0.00563217 | 0.00134081 | -0.000216413 |
| | | A12 | A14 | A16 | A18 | A20 |
| L1 | S1 | -1.41E-08 | 1.28E-09 | -5.78E-11 | 1.35E-12 | -1.36E-14 |
| | S2 | 5.69E-08 | -2.61E-09 | 7.20E-11 | -1.05E-12 | 5.87E-15 |
| L2 | S3 | 6.69E-08 | -5.56E-09 | 2.32E-10 | -4.97E-12 | 4.40E-14 |
| | S4 | -1.16E-07 | 3.95E-09 | -7.60E-11 | 6.00E-13 | 8.21E-16 |
| L3 | S5 | -0.000047 | 5.00E-06 | -2.81E-07 | 7.63E-09 | -6.15E-11 |
| | S6 | -0.000076 | 1.00E-05 | -1.00E-06 | 2.92E-08 | -4.57E-10 |
| L4 | S7 | 0.000017 | -3.31E-07 | -3.54E-08 | 2.37E-09 | -4.37E-11 |
| | S8 | -0.000014 | 0.000001 | 2.10E-08 | -2.88E-09 | 7.78E-11 |
| L5 | S9 | 0.000008 | -2.00E-06 | 1.74E-07 | -8.27E-09 | 1.59E-10 |
| | S10 | 0.000004 | -0.000001 | 4.40E-08 | -2.05E-09 | 4.23E-11 |
| L6 | S11 | -0.000023 | 3.00E-06 | -1.82E-07 | 7.17E-09 | -1.23E-10 |
| | S12 | -0.000024 | 0.000003 | -1.60E-07 | 5.34E-09 | -6.18E-11 |
| L7 | S13 | 0.000007 | 1.60E-07 | -4.65E-08 | 1.68E-09 | 4.49E-11 |
| | S14 | 0.000024 | -2.00E-06 | 8.47E-08 | -2.32E-09 | 2.78E-11 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |

(continued)

|  |  | A22 | A24 | A26 | A28 | A30 |
|---|---|---|---|---|---|---|
| L5 | S9 | 0 | 0 | 0 | 0 | 0 |
|  | S10 | 0 | 0 | 0 | 0 | 0 |
| L6 | S11 | 5.83E-14 | 0 | 0 | 0 | 0 |
|  | S12 | -3.41E-13 | 0 | 0 | 0 | 0 |
| L7 | S13 | -2.76E-12 | 0 | 0 | 0 | 0 |
|  | S14 | 0 | 0 | 0 | 0 | 0 |

It can be learned from Table 3.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x,y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 13 and FIG. 14.

For optical parameters of the lens assembly 10 with the foregoing architecture, refer to Table 3.4 below.

Table 3.4 Optical parameters of the lens assembly according to Embodiment 3 of this application

| | |
|---|---|
| F-number F# in the infinity mode | 2.07607 |
| F-number F# in the macro mode | 2.44988 |
| Focal length in the infinity mode/mm | 20.596 |
| Focal length in the macro mode/mm | 13.7137 |
| Image height/mm | 11.34 |
| Magnification in the macro mode | 0.300001 |
| Object distance in the macro mode/mm | 66.4911 |
| Moving distance of the second lens unit/mm | 3.30857 |
| Total track length/mm | 24.6809 |

It can be learned from Table 3.4 that the lens assembly 10 provided in Embodiment 3 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

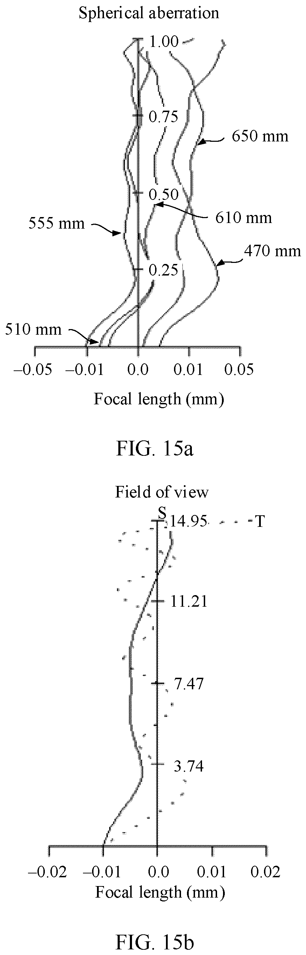

FIG. 15a a curve graph of chromatic aberration of the lens assembly in the infinity mode according to Embodiment 3 of this application. For horizontal and vertical coordinates in the figure, refer to Embodiment 1. Details are not described in this embodiment again. It can be learned from FIG. 15a that, when the lens assembly is in the infinity mode, chromatic aberration of light passing through the lens assembly is small.

FIG. 15b is an astigmatism and field curvature plot of the lens assembly in the infinity mode according to Embodiment 3 of this application. For horizontal and vertical coordinates in the figure, refer to Embodiment 1. Details are not described in this embodiment again. It can be learned from FIG. 15b that, when the lens assembly is in the infinity mode, both field curvature in a sagittal direction and field curvature in a meridian direction are small, and imaging quality is high.

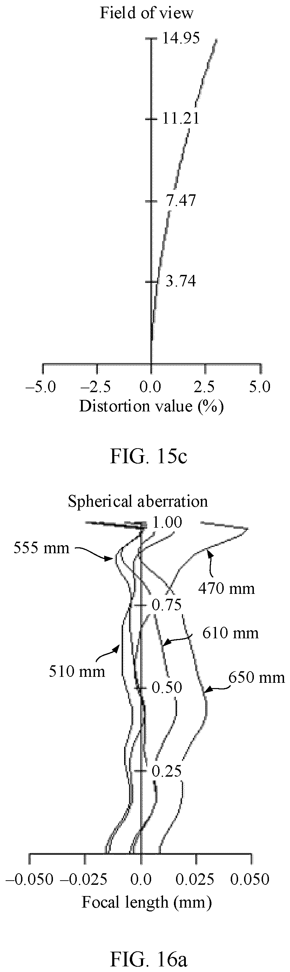

FIG. 15c is a curve graph of distortion of the lens assembly in the infinity mode according to Embodiment 3 of this application. For horizontal and vertical coordinates in the figure, refer to Embodiment 1. Details are not described in this embodiment again. It can be learned from FIG. 15c that, when the lens assembly is in the infinity mode, a distortion amount of imaging is small, and a difference between an imaging shape and an ideal shape is small, so that a deformation difference requirement is met, and imaging quality is high.

FIG. 16a is a curve graph of chromatic aberration of the lens assembly in the macro mode according to Embodiment 3 of this application. For horizontal and vertical coordinates in the figure, refer to Embodiment 1. Details are not described in this embodiment again. It can be learned from FIG. 16a that, when the lens assembly is in the macro mode, chromatic aberration of light passing through the lens assembly is small.

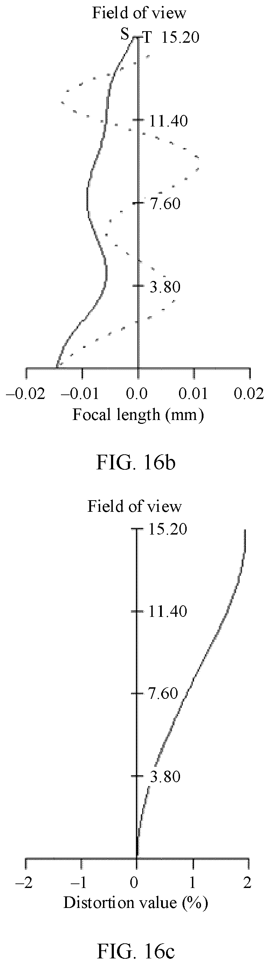

FIG. 16b is an astigmatism and field curvature plot of the lens assembly in the macro mode according to Embodiment 3 of this application. For horizontal and vertical coordinates in the figure, refer to Embodiment 1. Details are not described in this embodiment again. It can be learned from FIG. 16b that, when the lens assembly is in the macro mode, both field curvature in a sagittal direction and field curvature in a meridian direction are small, and imaging quality is high.

FIG. 16c is a curve graph of distortion of the lens assembly in the macro mode according to Embodiment 3 of this application. For horizontal and vertical coordinates in the figure, refer to Embodiment 1. Details are not described in this embodiment again. It can be learned from FIG. 16c that, when the lens assembly is in the macro mode, a distortion amount of imaging is small, and a difference between an imaging shape and an ideal shape is small, so that a deformation difference requirement is met, and imaging quality is high.

Embodiment 4

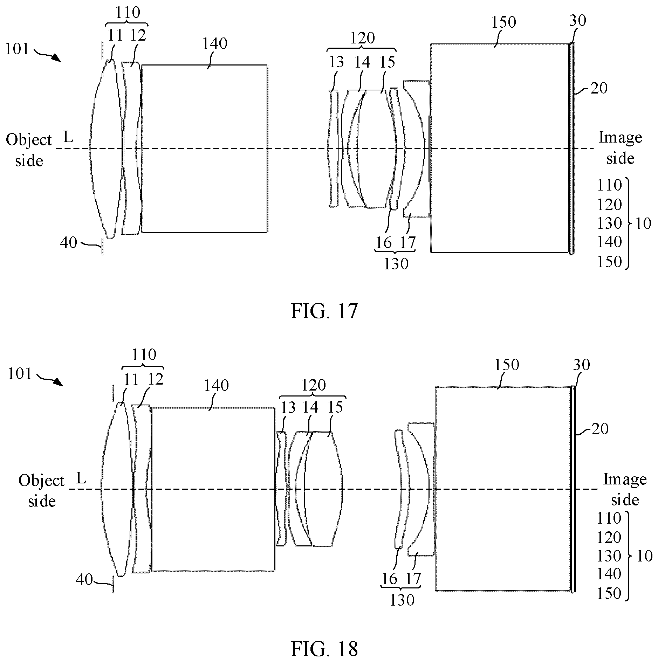

FIG. 17 is a diagram of a simulation structure of a camera module in which a lens assembly is in an infinity mode according to Embodiment 4 of this application. FIG. 18 is a diagram of a simulation structure of a camera module in which a lens assembly is in a macro mode according to Embodiment 4 of this application.

A first optical path folding unit 140 and a second optical path folding unit 150 in FIG. 17 and FIG. 18 are equivalent to a piece of flat glass for illustration, and a folding effect of the flat glass on an optical path remains unchanged.

In this example, the lens assembly includes two second lens units and two optical path folding units. With reference to FIG. 17 and FIG. 18, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have positive focal power, and the seventh lens 17 may have negative focal power.

The second lens unit 120 may be movably disposed. With reference to FIG. 17 and FIG. 18, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 23.8636 mm, a focal length EFL of the lens assembly 10 in the infinity mode is 20.59 mm, and the total track length TTL of the lens assembly 10 and the focal length EFL of the lens assembly 10 satisfy TTL/EFL=1.159.

An image height IMH of the lens assembly 10 is 11.34002 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.238.

When the lens assembly 10 is switched from the infinity mode to the macro mode, a distance △L by which the second lens unit 120 moves along the optical axis is 3.34903, and the distance △L by which the second lens unit 120 moves along the optical axis and the total track length of the lens assembly 10 satisfy △L/TTL=0.140.

A magnification of the lens assembly 10 in the macro mode is 0.299983x.

An f-number F#1 of the lens assembly 10 in the infinity mode is 2.07607.

An f-number F#2 of the lens assembly 10 in the macro mode is 2.3918.

Table 4.1 Optical parameters of optical elements in the camera module according to Embodiment 4 of this application

|  | Surface number | Surface profile | Curvature radius | Thickness | Material |
|---|---|---|---|---|---|
| Aperture stop | S0 | Spherical surface | 1.00E+18 | -0.642829062 |  |
| L1 | S1 | Aspherical surface | 13.60259634 | 1.779270167 | 528508.6921 |
|  | S2 | Aspherical surface | -24.55962038 | 0.03 |  |
| L2 | S3 | Aspherical surface | -147.6442988 | 0.748200436 | 640992.2191 |
|  | S4 | Aspherical surface | 56.63479584 | 0.308941498 |  |
| P1 | S5 | Spherical surface | 1.00E+18 | 7 | 516800.642 |
|  | S6 | Spherical surface | 1.00E+18 | 3.379025649 |  |
| L3 | S7 | Aspherical surface | 28.15815421 | 0.62627886 | 622109.2426 |
|  | S8 | Aspherical surface | -73.27122704 | 0.191188385 |  |
| L4 | S9 | Aspherical surface | 14.34947236 | 0.321382022 | 625467.2361 |
|  | S10 | Aspherical surface | 5.749795703 | 0.503574735 |  |
| L5 | S11 | Aspherical surface | 10.88623679 | 2.184427822 | 538842.5241 |
|  | S12 | Aspherical surface | -8.687084712 | 0.03 |  |
| L6 | S13 | Aspherical surface | -18.64651512 | 0.469841178 | 670450.1922 |
|  | S14 | Aspherical surface | -13.84426226 | 1.113079391 |  |
| L7 | S15 | Aspherical surface | -5.376219178 | 0.25 | 534530.5604 |
|  | S16 | Aspherical surface | -149.3631974 | 0.074177331 |  |
| P2 | S17 | Spherical surface | 1.00E+18 | 7.720612527 | 516800.6417 |
|  | S18 | Spherical surface | 1.00E+18 | 0.03 |  |
| IR | S19 | Spherical surface | 1.00E+18 | 0.21 | 516800.6417 |
|  | S20 | Spherical surface | 1.00E+18 | 0.03 |  |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 4.2 Focal lengths of lenses and lens units in the lens assembly according to Embodiment 4 of this application

| f1 | f2 | f3 | f4 | f5 | f6 | f7 | G1 | G2 | G3 |
|---|---|---|---|---|---|---|---|---|---|
| 16.0998 | -51.2159 | 5.82598 | -4.13058 | 8.26947 | 102.84 | -9.61432 | 21.8358 | 14.4148 | -10.4404 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 4.3 Aspherical coefficients of lenses in the lens assembly according to Embodiment 4 of this application

| | | k | A4 | A6 | A8 | A10 |
|---|---|---|---|---|---|---|
| L1 | S1 | 0 | 0.0007209 | -0.000038 | 1.00E-06 | 1.01E-07 |
| | S2 | 0 | 0.00137598 | -0.00011252 | 0.000008 | -4.27E-07 |
| L2 | S3 | 0 | -0.00467491 | 0.000208132 | -0.000012 | 4.06E-07 |
| | S4 | 0 | -0.00638001 | 0.000399079 | -0.000033 | 2.00E-06 |
| L3 | S7 | 0 | -0.00421453 | 0.00106895 | -0.000750479 | 0.000255616 |
| | S8 | 0 | 0.0277922 | -0.00599895 | 0.000604993 | 0.000178458 |
| L4 | S9 | 0 | 0.0354938 | -0.0103172 | 0.00269692 | -0.000458338 |
| | S10 | 0 | -0.00947422 | 0.00192111 | -0.000413283 | 0.000058 |
| L5 | S11 | 0 | -0.00849196 | 0.00251983 | -0.000437733 | 0.000039 |
| | S12 | 0 | 0.000154983 | 0.000002 | 0.000047 | -0.000015 |
| L6 | S13 | 0 | -0.000106413 | 0.00254659 | -0.00111333 | 0.000299643 |
| | S14 | 0 | -0.00014779 | 0.00289563 | -0.00125199 | 0.000320631 |
| L7 | S15 | 0 | 0.0281614 | -0.00830521 | 0.00152303 | -0.000158714 |
| | S16 | 0 | 0.0259725 | -0.00899682 | 0.00196739 | -0.000295853 |
| | | A12 | A14 | A16 | A18 | A20 |
| L1 | S1 | -2.34E-08 | 1.93E-09 | -8.59E-11 | 2.04E-12 | -2.09E-14 |
| | S2 | 1.76E-08 | -2.36E-10 | -1.67E-11 | 7.98E-13 | -1.07E-14 |
| L2 | S3 | 2.29E-08 | -3.32E-09 | 1.55E-10 | -3.36E-12 | 2.92E-14 |
| | S4 | -1.31E-07 | 4.53E-09 | -9.09E-11 | 8.89E-13 | -2.35E-15 |
| L3 | S5 | -0.000049 | 5.00E-06 | -3.05E-07 | 7.62E-09 | -3.12E-11 |
| | S6 | -0.000074 | 1.10E-05 | -1.00E-06 | 3.57E-08 | -5.86E-10 |
| L4 | S7 | 0.000049 | -3.00E-06 | 1.28E-07 | -3.01E-09 | 3.50E-11 |
| | S8 | -0.000003 | -3.32E-07 | 7.25E-08 | -4.84E-09 | 1.15E-10 |
| L5 | S9 | 0.000002 | -1.00E-06 | 1.14E-07 | -6.12E-09 | 1.30E-10 |
| | S10 | 0.000003 | -4.60E-07 | 4.20E-08 | -2.23E-09 | 5.17E-11 |
| L6 | S11 | -0.000052 | 6.00E-06 | -4.11E-07 | 1.62E-08 | -2.68E-10 |
| | S12 | -0.000052 | 0.000006 | -3.58E-07 | 1.27E-08 | -1.68E-10 |
| L7 | S13 | 0.000006 | 1.00E-06 | -8.71E-08 | 2.88E-09 | 5.40E-11 |
| | S14 | 0.000031 | -2.00E-06 | 9.77E-08 | -2.56E-09 | 2.92E-11 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |

(continued)

|  |  | A22 | A24 | A26 | A28 | A30 |
|---|---|---|---|---|---|---|
| L5 | S9 | 0 | 0 | 0 | 0 | 0 |
|  | S10 | 0 | 0 | 0 | 0 | 0 |
| L6 | S11 | -3.43E-13 | 0 | 0 | 0 | 0 |
|  | S12 | -8.76E-13 | 0 | 0 | 0 | 0 |
| L7 | S13 | -3.64E-12 | 0 | 0 | 0 | 0 |
|  | S14 | 0 | 0 | 0 | 0 | 0 |

It can be learned from Table 4.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x,y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 17 and FIG. 18.

For optical parameters of the lens assembly 10 with the foregoing architecture, refer to Table 4.4 below.

Table 4.4 Optical parameters of the lens assembly according to Embodiment 4 of this application

| F-number F# in the infinity mode | 2.07607 |
|---|---|
| F-number F# in the macro mode | 2.3918 |
| Focal length in the infinity mode/mm | 20.59 |
| Focal length in the macro mode/mm | 13.514 |
| Image height/mm | 11.34002 |
| Magnification in the macro mode | 0.299983 |
| Object distance in the macro mode/mm | 65.5282 |
| Moving distance of the second lens unit/mm | 3.34903 |
| Total track length/mm | 23.8636 |

It can be learned from Table 4.4 that the lens assembly 10 provided in Embodiment 4 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

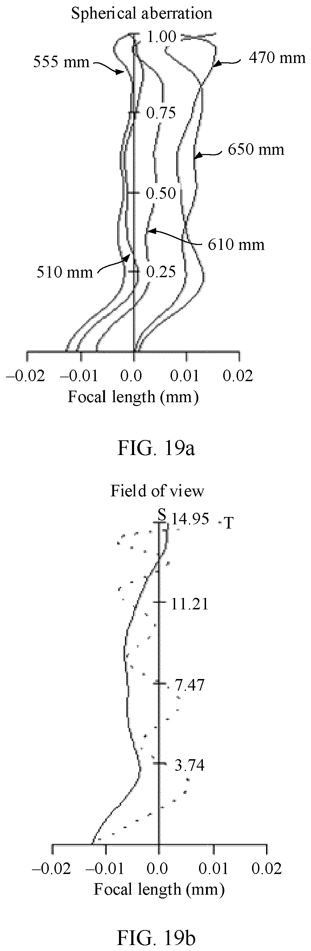

FIG. 19a a curve graph of chromatic aberration of the lens assembly in the infinity mode according to Embodiment 4 of this application. For horizontal and vertical coordinates in the figure, refer to Embodiment 1. Details are not described in this embodiment again. It can be learned from FIG. 19a that, when the lens assembly is in the infinity mode, chromatic aberration of light passing through the lens assembly is small.

FIG. 19b is an astigmatism and field curvature plot of the lens assembly in the infinity mode according to Embodiment 4 of this application. For horizontal and vertical coordinates in the figure, refer to Embodiment 1. Details are not described in this embodiment again. It can be learned from FIG. 19b that, when the lens assembly is in the infinity mode, both field curvature in a sagittal direction and field curvature in a meridian direction are small, and imaging quality is high.

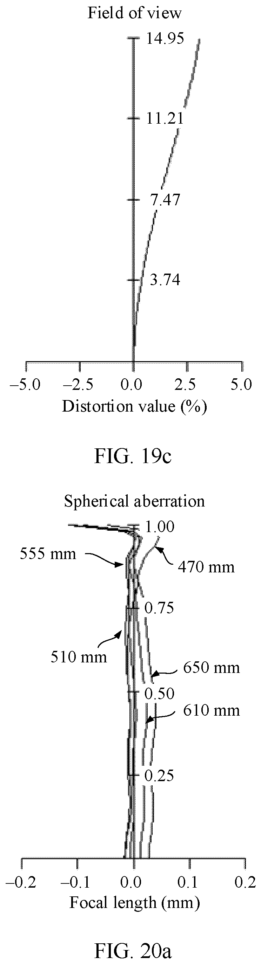

FIG. 19c is a curve graph of distortion of the lens assembly in the infinity mode according to Embodiment 4 of this application. For horizontal and vertical coordinates in the figure, refer to Embodiment 1. Details are not described in this embodiment again. It can be learned from FIG. 19c that, when the lens assembly is in the infinity mode, a distortion amount of imaging is small, and a difference between an imaging shape and an ideal shape is small, so that a deformation difference requirement is met, and imaging quality is high.

FIG. 20a is a curve graph of chromatic aberration of the lens assembly in the macro mode according to Embodiment 4 of this application. For horizontal and vertical coordinates in the figure, refer to Embodiment 1. Details are not described in this embodiment again. It can be learned from FIG. 20a that, when the lens assembly is in the macro mode, chromatic aberration of light passing through the lens assembly is small.

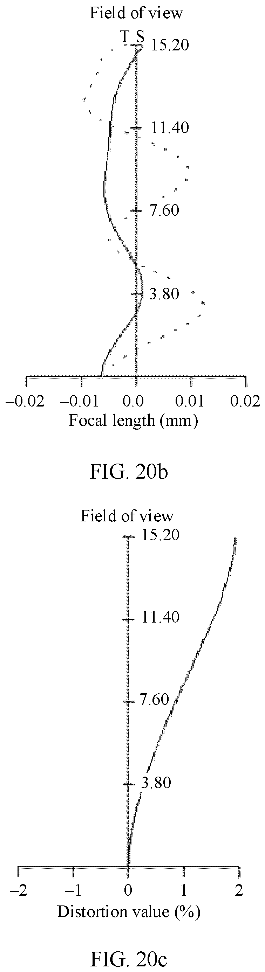

FIG. 20b is an astigmatism and field curvature plot of the lens assembly in the macro mode according to Embodiment 4 of this application. For horizontal and vertical coordinates in the figure, refer to Embodiment 1. Details are not described in this embodiment again. It can be learned from FIG. 20b that, when the lens assembly is in the macro mode, both field curvature in a sagittal direction and field curvature in a meridian direction are small, and imaging quality is high.

FIG. 20c is a curve graph of distortion of the lens assembly in the macro mode according to Embodiment 4 of this application. For horizontal and vertical coordinates in the figure, refer to Embodiment 1. Details are not described in this embodiment again. It can be learned from FIG. 20c that, when the lens assembly is in the macro mode, a distortion amount of imaging is small, and a difference between an imaging shape and an ideal shape is small, so that a deformation difference requirement is met, and imaging quality is high.

Embodiment 5

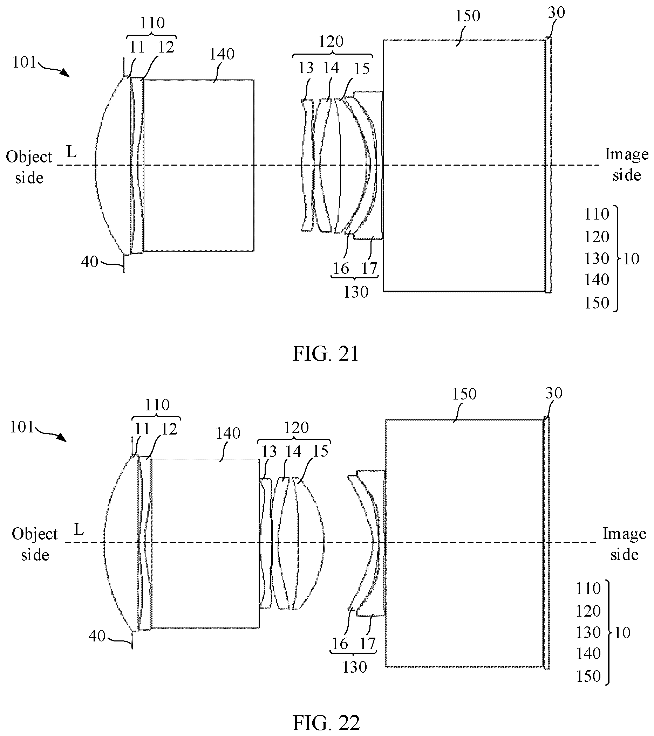

FIG. 21 is a diagram of a simulation structure of a camera module in which a lens assembly is in an infinity mode according to Embodiment 5 of this application. FIG. 22 is a diagram of a simulation structure of a camera module in which a lens assembly is in a macro mode according to Embodiment 5 of this application.

A first optical path folding unit 140 and a second optical path folding unit 150 in FIG. 21 and FIG. 22 are equivalent to a piece of flat glass for illustration, and a folding effect of the flat glass on an optical path remains unchanged.

In this example, the lens assembly includes two second lens units and two optical path folding units. With reference to FIG. 21 and FIG. 22, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have negative focal power, and the seventh lens 17 may have positive focal power.

The second lens unit 120 may be movably disposed. With reference to FIG. 21 and FIG. 22, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 17.5913 mm, a focal length EFL of the lens assembly 10 in the infinity mode is 16.4692 mm, and the total track length TTL of the lens assembly 10 and the focal length EFL of the lens assembly 10 satisfy TTL/EFL=1.068.

An image height IMH of the lens assembly 10 is 11.34022 mm, and the image height IMH of the lens assembly 10 and the focal length EFL of the lens assembly 10 satisfy IMH/(2*EFL)=0.344.

The image height IMH of the lens assembly 10 and the total track length TTL of the lens assembly 10 satisfy IMH/(2*TTL)=0.322.

When the lens assembly 10 is switched from the infinity mode to the macro mode, a distance △L by which the second lens unit 120 moves along the optical axis is 2.04187, and the distance △L by which the second lens unit 120 moves along the optical axis and the total track length of the lens assembly 10 satisfy ΔL/TTL=0.116.

A magnification of the lens assembly 10 in the macro mode is 0.300011x.

An f-number F#1 of the lens assembly 10 in the infinity mode is 2.07498.

An f-number F#2 of the lens assembly 10 in the macro mode is 2.06426.

Table 5.1 Optical parameters of optical elements in the camera module according to Embodiment 5 of this application

|  | Surface number | Surface profile | Curvature radius | Thickness | Material |
|---|---|---|---|---|---|
| Aperture stop | S0 | Spherical surface | 1.00E+18 | -1.280034568 |  |
| L1 | S1 | Aspherical surface | 7.009082829 | 1.553507955 | 619845.5808 |
|  | S2 | Aspherical surface | -150.1538647 | 0.034548362 |  |
| L2 | S3 | Aspherical surface | -39.50180789 | 0.258640208 | 670450.1922 |
|  | S4 | Aspherical surface | 46.85291079 | 0.29201648 |  |
| P1 | S5 | Spherical surface | 1.00E+18 | 4.820071914 | 516800.642 |
|  | S6 | Spherical surface | 1.00E+18 | 2.084035007 |  |
| L3 | S7 | Aspherical surface | 142.0603438 | 0.52816997 | 668367.1938 |
|  | S8 | Aspherical surface | -70.35505336 | 0.03 |  |
| L4 | S9 | Aspherical surface | 12.56237806 | 0.25 | 670450.1922 |
|  | S10 | Aspherical surface | 9.290439327 | 0.908381781 |  |
| L5 | S11 | Aspherical surface | -18.38733596 | 1.146980435 | 565907.3788 |
|  | S12 | Aspherical surface | -4.468922735 | 0.170208027 |  |
| L6 | S13 | Aspherical surface | -4.96730592 | 0.25 | 569998.3529 |
|  | S14 | Aspherical surface | -5.155928339 | 0.024331579 |  |
| L7 | S15 | Aspherical surface | -5.169554541 | 0.25 | 562950.3794 |
|  | S16 | Aspherical surface | 52.87555924 | 0.058070718 |  |
| P2 | S17 | Spherical surface | 1.00E+18 | 7.071037564 | 516800.6417 |
|  | S18 | Spherical surface | 1.00E+18 | 0.03 |  |
| IR | S19 | Spherical surface | 1.00E+18 | 0.21 | 516800.6417 |
|  | S20 | Spherical surface | 1.00E+18 | 0.03 |  |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 5.2 Focal lengths of lenses and lens units in the lens assembly according to Embodiment 5 of this application

| f1 | f2 | f3 | f4 | f5 | f6 | f7 | G1 | G2 | G3 |
|---|---|---|---|---|---|---|---|---|---|
| 10.3195 | -29.9639 | 5.84662 | -5.23262 | 8.35806 | -6.29191 | 65.8919 | 14.5995 | 9.47077 | -7.06034 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 5.3 Aspherical coefficients of lenses in the lens assembly according to Embodiment 5 of this application

| | | k | A4 | A6 | A8 | A10 |
|---|---|---|---|---|---|---|
| L1 | S1 | 0 | 0.00055866 | -0.000032 | -6.00E-06 | 2.00E-06 |
| | S2 | 0 | 0.00161159 | -0.000396285 | 0.000087 | -1.20E-05 |
| L2 | S3 | 0 | -0.0173863 | 0.00208562 | -0.000151087 | 2.00E-06 |
| | S4 | 0 | -0.020461 | 0.00280448 | -0.000321224 | 2.80E-05 |
| L3 | S7 | 0 | -0.020461 | 0.00280448 | -0.000321224 | 0.000028 |
| | S8 | 0 | 0.00154519 | 0.0114165 | -0.00728532 | 0.00260434 |
| L4 | S9 | 0 | 0.0031642 | 0.0126397 | -0.00751904 | 0.00254913 |
| | S10 | 0 | -0.00662928 | 0.00143398 | -0.000733622 | 0.000072 |
| L5 | S11 | 0 | -0.00326963 | -0.000540301 | 0.000587767 | -0.00027569 |
| | S12 | 0 | -0.00231993 | 0.00111125 | -0.000604225 | 0.000228379 |
| L6 | S13 | -1 | 0.0744658 | -0.0311219 | 0.00989473 | -0.00216479 |
| | S14 | 0 | 0.0661572 | -0.0435623 | 0.0168918 | -0.00437203 |
| L7 | S15 | 0 | 0.0371048 | -0.0365329 | 0.0140597 | -0.00348488 |
| | S16 | 0 | 0.0408814 | -0.0207827 | 0.00600908 | -0.00104124 |
| | | A12 | A14 | A16 | A18 | A20 |
| L1 | S1 | -3.20E-07 | 2.69E-08 | -1.34E-09 | 3.66E-11 | -4.28E-13 |
| | S2 | 1.00E-06 | -5.65E-08 | 1.90E-09 | -3.68E-11 | 3.16E-13 |
| L2 | S3 | 1.00E-06 | -5.67E-08 | 2.32E-09 | -4.70E-11 | 3.87E-13 |
| | S4 | -2.00E-06 | 9.86E-08 | -3.99E-09 | 1.02E-10 | -1.16E-12 |
| L3 | S5 | -0.000002 | 9.86E-08 | -3.99E-09 | 1.02E-10 | -1.16E-12 |
| | S6 | -0.000583656 | 8.20E-05 | -7.00E-06 | 3.16E-07 | -6.13E-09 |
| L4 | S7 | -0.00053917 | 7.10E-05 | -6.00E-06 | 2.55E-07 | -4.86E-09 |
| | S8 | 0.00003 | -1.00E-05 | 1.00E-06 | -7.39E-08 | 1.77E-09 |
| L5 | S9 | 0.000063 | -8.00E-06 | 1.00E-06 | -1.85E-08 | 2.33E-10 |
| | S10 | -0.00006 | 1.00E-05 | -1.00E-06 | 5.52E-08 | -1.23E-09 |
| L6 | S11 | 0.000307542 | -2.70E-05 | 1.00E-06 | -1.37E-08 | -1.04E-09 |
| | S12 | 0.000738503 | -0.000078 | 5.00E-06 | -1.11E-07 | -1.82E-09 |
| L7 | S13 | 0.000580845 | -6.20E-05 | 4.00E-06 | -9.66E-08 | -1.61E-09 |
| | S14 | 0.000113101 | -8.00E-06 | 3.26E-07 | -7.66E-09 | 7.70E-11 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |

(continued)

|  |  | A22 | A24 | A26 | A28 | A30 |
|---|---|---|---|---|---|---|
| L5 | S9 | 0 | 0 | 0 | 0 | 0 |
| | S10 | 0 | 0 | 0 | 0 | 0 |
| L6 | S11 | 3.12E-11 | 0 | 0 | 0 | 0 |
| | S12 | 1.09E-10 | 0 | 0 | 0 | 0 |
| L7 | S13 | 1.02E-10 | 0 | 0 | 0 | 0 |
| | S14 | 0 | 0 | 0 | 0 | 0 |

It can be learned from Table 5.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2 r^2}} + \sum_{i=1}^{n} A_I E_I(x, y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 21 and FIG. 22.

For optical parameters of the lens assembly 10 with the foregoing architecture, refer to Table 5.4 below.

Table 5.4 Optical parameters of the lens assembly according to Embodiment 5 of this application

| | |
|---|---|
| F-number F# in the infinity mode | 2.07498 |
| F-number F# in the macro mode | 2.06426 |
| Focal length in the infinity mode/mm | 16.4692 |
| Focal length in the macro mode/mm | 10.8842 |
| Image height/mm | 11.34022 |
| Magnification in the macro mode | 0.300011 |
| Object distance in the macro mode/mm | 52.8181 |
| Moving distance of the second lens unit/mm | 2.04187 |
| Total track length/mm | 17.5913 |

It can be learned from Table 5.4 that the lens assembly 10 provided in Embodiment 5 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

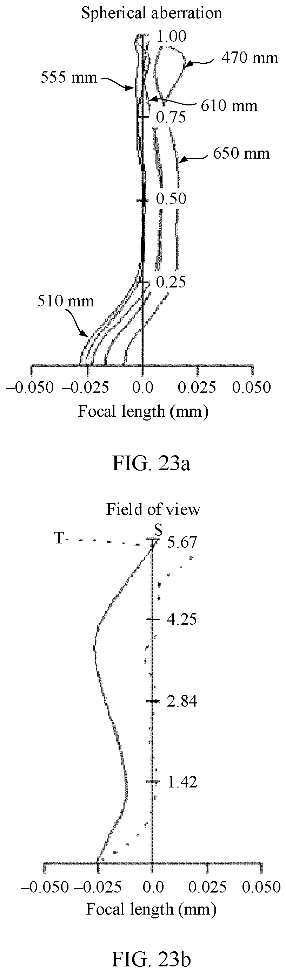

FIG. 23a a curve graph of chromatic aberration of the lens assembly in the infinity mode according to Embodiment 5 of this application. For horizontal and vertical coordinates in the figure, refer to Embodiment 1. Details are not described in this embodiment again. It can be learned from FIG. 23a that, when the lens assembly is in the infinity mode, chromatic aberration of light passing through the lens assembly is small.

FIG. 23b is an astigmatism and field curvature plot of the lens assembly in the infinity mode according to Embodiment 5 of this application. For horizontal and vertical coordinates in the figure, refer to Embodiment 1. Details are not described in this embodiment again. It can be learned from FIG. 23b that, when the lens assembly is in the infinity mode, both field curvature in a sagittal direction and field curvature in a meridian direction are small, and imaging quality is high.

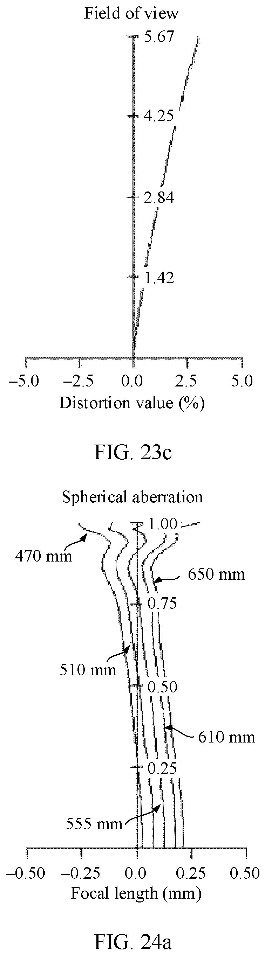

FIG. 23c is a curve graph of distortion of the lens assembly in the infinity mode according to Embodiment 5 of this application. For horizontal and vertical coordinates in the figure, refer to Embodiment 1. Details are not described in this embodiment again. It can be learned from FIG. 23c that, when the lens assembly is in the infinity mode, a distortion amount of imaging is small, and a difference between an imaging shape and an ideal shape is small, so that a deformation difference requirement is met, and imaging quality is high.

FIG. 24a is a curve graph of chromatic aberration of the lens assembly in the macro mode according to Embodiment 5 of this application. For horizontal and vertical coordinates in the figure, refer to Embodiment 1. Details are not described in this embodiment again. It can be learned from FIG. 24a that, when the lens assembly is in the macro mode, chromatic aberration of light passing through the lens assembly is small.

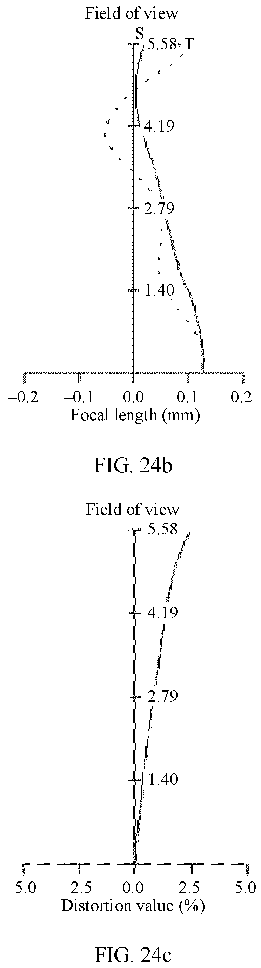

FIG. 24b is an astigmatism and field curvature plot of the lens assembly in the macro mode according to Embodiment 5 of this application. For horizontal and vertical coordinates in the figure, refer to Embodiment 1. Details are not described in this embodiment again. It can be learned from FIG. 24b that, when the lens assembly is in the macro mode, both field curvature in a sagittal direction and field curvature in a meridian direction are small, and imaging quality is high.

FIG. 24c is a curve graph of distortion of the lens assembly in the macro mode according to Embodiment 5 of this application. For horizontal and vertical coordinates in the figure, refer to Embodiment 1. Details are not described in this embodiment again. It can be learned from FIG. 24c that, when the lens assembly is in the macro mode, a distortion amount of imaging is small, and a difference between an imaging shape and an ideal shape is small, so that a deformation difference requirement is met, and imaging quality is high.


Embodiment 6

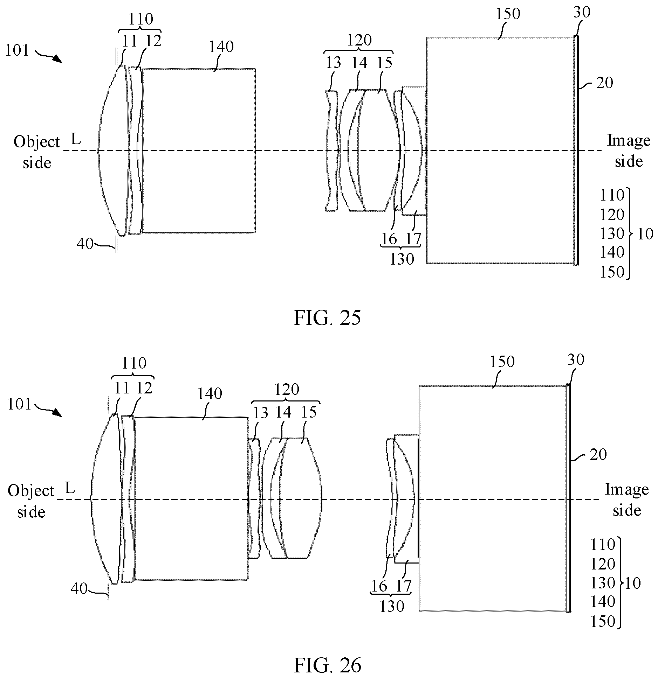

FIG. 25 is a diagram of a simulation structure of a camera module in which a lens assembly is in an infinity mode according to Embodiment 6 of this application. FIG. 26 is a diagram of a simulation structure of a camera module in which a lens assembly is in a macro mode according to Embodiment 6 of this application.

A first optical path folding unit 140 and a second optical path folding unit 150 in FIG. 25 and FIG. 26 are equivalent to a piece of flat glass for illustration, and a folding effect of the flat glass on an optical path remains unchanged.

In this example, the lens assembly includes two second lens units and two optical path folding units. With reference to FIG. 25 and FIG. 26, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have negative focal power, and the seventh lens 17 may have negative focal power.

The second lens unit 120 may be movably disposed. With reference to FIG. 25 and FIG. 26, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 25.1587 mm, a focal length EFL of the lens assembly 10 in the infinity mode is 22.691 mm, and the total track length TTL of the lens assembly 10 and the focal length EFL of the lens assembly 10 satisfy TTL/EFL=1.109.

An image height IMH of the lens assembly 10 is 12.50 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.248.

When the lens assembly 10 is switched from the infinity mode to the macro mode, a distance △L by which the second lens unit 120 moves along the optical axis is 4.1057, and the distance △L by which the second lens unit 120 moves along the optical axis and the total track length of the lens assembly 10 satisfy △L/TTL=0.163.

A magnification of the lens assembly 10 in the macro mode is 0.499998x.

An f-number F#1 of the lens assembly 10 in the infinity mode is 2.29042.

An f-number F#2 of the lens assembly 10 in the macro mode is 2.645.

Table 6.1 Optical parameters of optical elements in the camera module according to Embodiment 6 of this application

|  | Surface number | Surface profile | Curvature radius | Thickness | Material |
|---|---|---|---|---|---|
| Aperture stop | S0 | Spherical surface | 1.00E+18 | -1.046562031 |  |
| L1 | S1 | Aspherical surface | 10.55263993 | 1.752104155 | 522044.7034 |
|  | S2 | Aspherical surface | -57.40310087 | 0.0303189 | |
| L2 | S3 | Aspherical surface | -393.7124423 | 0.47038274 | 657350.2029 |
|  | S4 | Aspherical surface | 47.94508726 | 0.318459506 | |
| P1 | S5 | Spherical surface | 1.00E+18 | 6.580103983 | 516800.642 |
|  | S6 | Spherical surface | 1.00E+18 | 4.147376459 | |
| L3 | S7 | Aspherical surface | 32.99383893 | 0.683436621 | 611642.2559 |
|  | S8 | Aspherical surface | -199.7559443 | 0.132119941 | |
| L4 | S9 | Aspherical surface | 11.89088002 | 0.454897552 | 619992.2434 |
|  | S10 | Aspherical surface | 6.241929055 | 0.563784108 | |
| L5 | S11 | Aspherical surface | 13.91175287 | 2.461736396 | 540993.5075 |
|  | S12 | Aspherical surface | -7.236905778 | 0.03 | |
| L6 | S13 | Aspherical surface | -20.25856899 | 0.25 | 536451.5436 |
|  | S14 | Aspherical surface | -42.11527727 | 1.009053644 | |
| L7 | S15 | Aspherical surface | -5.583740198 | 0.25 | 534530.5604 |
|  | S16 | Aspherical surface | 143.7098609 | 0.050015281 | |
| P2 | S17 | Spherical surface | 1.00E+18 | 8.546210714 | 516800.6417 |
|  | S18 | Spherical surface | 1.00E+18 | 0.03 | |
| IR | S19 | Spherical surface | 1.00E+18 | 0.21 | 516800.6417 |
|  | S20 | Spherical surface | 1.00E+18 | 0.03 | |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 6.2 Focal lengths of lenses and lens units in the lens assembly according to Embodiment 6 of this application

| f1 | f2 | f3 | f4 | f5 | f6 | f7 | G1 | G2 | G3 |
|---|---|---|---|---|---|---|---|---|---|
| 16.859 | -58.8163 | 6.17213 | -4.78336 | 8.58207 | -27.4846 | -12.6574 | 22.3451 | 11.9824 | -8.37181 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 6.3 Aspherical coefficients of lenses in the lens assembly according to Embodiment 6 of this application

| | | k | A4 | A6 | A8 | A10 |
|---|---|---|---|---|---|---|
| L1 | S1 | 0 | 0.000436817 | -0.000021 | -1.00E-06 | 4.05E-07 |
| | S2 | 0 | 0.000731618 | -0.000043 | 0.000003 | -1.00E-06 |
| L2 | S3 | 0 | -0.00541077 | 0.000299902 | -0.000011 | -1.00E-06 |
| | S4 | 0 | -0.00644376 | 0.000398371 | -0.000024 | 4.86E-07 |
| L3 | S7 | 0 | -0.00380714 | 0.000899441 | -0.000662348 | 0.000218183 |
| | S8 | 0 | 0.0275591 | -0.00554052 | 0.000569878 | 0.000102491 |
| L4 | S9 | 0 | 0.0290136 | -0.00650243 | 0.00133195 | -0.000170749 |
| | S10 | 0 | -0.0087189 | 0.00222493 | -0.000459134 | 0.000037 |
| L5 | S11 | 0 | -0.00434641 | 0.000961436 | 0.000035 | -0.00006 |
| | S12 | 0 | 0.000493638 | -0.000175784 | 0.000120486 | -0.000037 |
| L6 | S13 | 0 | 0.00796285 | 0.00175423 | -0.00112791 | 0.000313022 |
| | S14 | 0 | 0.00462862 | 0.00222635 | -0.00123108 | 0.000323904 |
| L7 | S15 | 0 | 0.00160124 | -0.000162698 | -0.000101699 | 0.000035 |
| | S16 | 0 | 0.00393427 | -0.000750845 | 0.000095 | -0.000007 |
| | | A12 | A14 | A16 | A18 | A20 |
| L1 | S1 | -5.76E-08 | 4.29E-09 | -1.81E-10 | 4.13E-12 | -4.01E-14 |
| | S2 | 4.90E-08 | -2.08E-09 | 2.85E-11 | 4.48E-13 | -1.22E-14 |
| L2 | S3 | 2.14E-07 | -1.53E-08 | 5.73E-10 | -1.11E-11 | 8.87E-14 |
| | S4 | 7.76E-08 | -8.37E-09 | 3.74E-10 | -8.18E-12 | 7.18E-14 |
| L3 | S5 | -0.000042 | 5.00E-06 | -3.17E-07 | 1.12E-08 | -1.66E-10 |
| | S6 | -0.000044 | 6.00E-06 | -4.76E-07 | 1.81E-08 | -2.83E-10 |
| L4 | S7 | 0.000012 | -2.90E-07 | -1.14E-08 | 8.75E-10 | -1.58E-11 |
| | S8 | 0.000005 | -1.00E-06 | 1.47E-07 | -6.88E-09 | 1.26E-10 |
| L5 | S9 | 0.000015 | -2.00E-06 | 1.47E-07 | -5.94E-09 | 1.01E-10 |
| | S10 | 0.000007 | -1.00E-06 | 8.05E-08 | -3.68E-09 | 7.17E-11 |
| L6 | S11 | -0.000053 | 6.00E-06 | -3.77E-07 | 1.40E-08 | -2.17E-10 |
| | S12 | -0.000053 | 0.000006 | -3.61E-07 | 1.30E-08 | -1.95E-10 |
| L7 | S13 | -0.000006 | 1.00E-06 | -2.87E-08 | 7.62E-10 | -9.43E-12 |
| | S14 | 3.18E-07 | -7.94E-09 | 8.94E-11 | 2.67E-14 | -5.89E-15 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |

(continued)

|  |  | A22 | A24 | A26 | A28 | A30 |
|---|---|---|---|---|---|---|
| L5 | S9 | 0 | 0 | 0 | 0 | 0 |
|  | S10 | 0 | 0 | 0 | 0 | 0 |
| L6 | S11 | -2.33E-13 | 0 | 0 | 0 | 0 |
|  | S12 | -1.87E-13 | 0 | 0 | 0 | 0 |
| L7 | S13 | 1.90E-13 | 0 | 0 | 0 | 0 |
|  | S14 | 0 | 0 | 0 | 0 | 0 |

It can be learned from Table 6.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_l E_l(x,y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 25 and FIG. 26.

For optical parameters of the lens assembly 10 with the foregoing architecture, refer to Table 6.4 below.

Table 6.4 Optical parameters of the lens assembly according to Embodiment 6 of this application

| F-number F# in the infinity mode | 2.29042 |
|---|---|
| F-number F# in the macro mode | 2.645 |
| Focal length in the infinity mode/mm | 22.691 |
| Focal length in the macro mode/mm | 11.6244 |
| Image height/mm | 12.50 |
| Magnification in the macro mode | 0.499998 |
| Object distance in the macro mode/mm | 42.2226 |
| Moving distance of the second lens unit/mm | 4.1057 |
| Total track length/mm | 25.1587 |

It can be learned from Table 6.4 that the lens assembly 10 provided in Embodiment 6 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

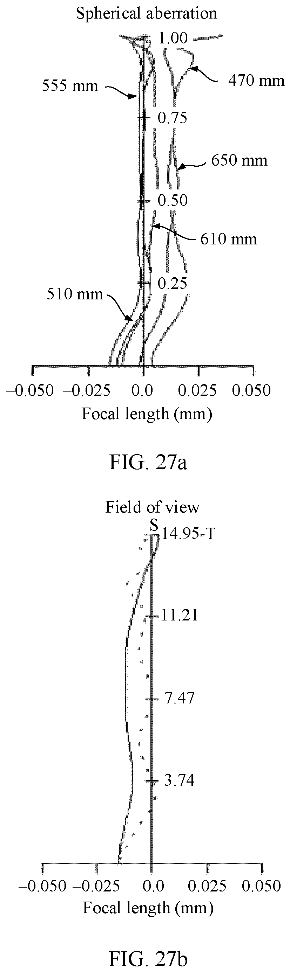

FIG. 27a a curve graph of chromatic aberration of the lens assembly in the infinity mode according to Embodiment 6 of this application. For horizontal and vertical coordinates in the figure, refer to Embodiment 1. Details are not described in this embodiment again. It can be learned from FIG. 27a that, when the lens assembly is in the infinity mode, chromatic aberration of light passing through the lens assembly is small.

FIG. 27b is an astigmatism and field curvature plot of the lens assembly in the infinity mode according to Embodiment 6 of this application. For horizontal and vertical coordinates in the figure, refer to Embodiment 1. Details are not described in this embodiment again. It can be learned from FIG. 27b that, when the lens assembly is in the infinity mode, both field curvature in a sagittal direction and field curvature in a meridian direction are small, and imaging quality is high.

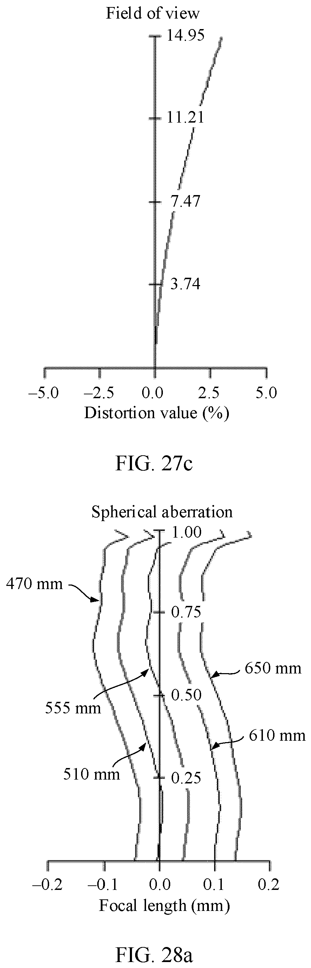

FIG. 27c is a curve graph of distortion of the lens assembly in the infinity mode according to Embodiment 6 of this application. For horizontal and vertical coordinates in the figure, refer to Embodiment 1. Details are not described in this embodiment again. It can be learned from FIG. 27c that, when the lens assembly is in the infinity mode, a distortion amount of imaging is small, and a difference between an imaging shape and an ideal shape is small, so that a deformation difference requirement is met, and imaging quality is high.

FIG. 28a is a curve graph of chromatic aberration of the lens assembly in the macro mode according to Embodiment 6 of this application. For horizontal and vertical coordinates in the figure, refer to Embodiment 1. Details are not described in this embodiment again. It can be learned from FIG. 28a that, when the lens assembly is in the macro mode, chromatic aberration of light passing through the lens assembly is small.

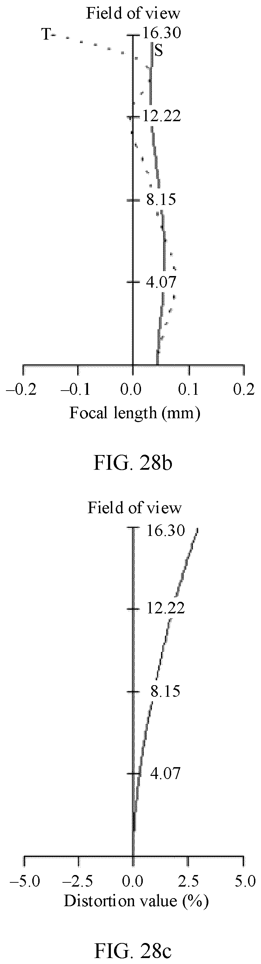

FIG. 28b is an astigmatism and field curvature plot of the lens assembly in the macro mode according to Embodiment 6 of this application. For horizontal and vertical coordinates in the figure, refer to Embodiment 1. Details are not described in this embodiment again. It can be learned from FIG. 28b that, when the lens assembly is in the macro mode, both field curvature in a sagittal direction and field curvature in a meridian direction are small, and imaging quality is high.

FIG. 28c is a curve graph of distortion of the lens assembly in the macro mode according to Embodiment 6 of this application. For horizontal and vertical coordinates in the figure, refer to Embodiment 1. Details are not described in this embodiment again. It can be learned from FIG. 28c that, when the lens assembly is in the macro mode, a distortion amount of imaging is small, and a difference between an imaging shape and an ideal shape is small, so that a deformation difference requirement is met, and imaging quality is high.

Embodiment 7

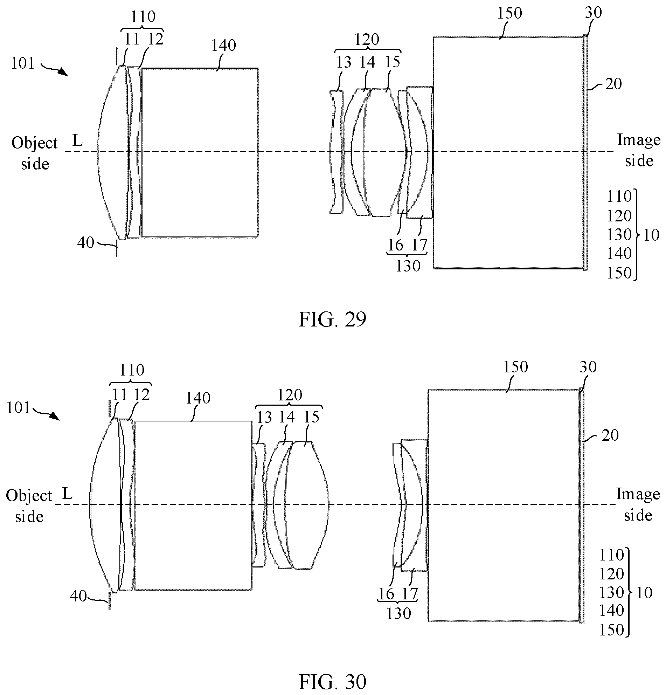

FIG. 29 is a diagram of a simulation structure of a camera module in which a lens assembly is in an infinity mode according to Embodiment 7 of this application. FIG. 30 is a diagram of a simulation structure of a camera module in which a lens assembly is in a macro mode according to Embodiment 7 of this application.

A first optical path folding unit 140 and a second optical path folding unit 150 in FIG. 29 and FIG. 30 are equivalent to a piece of flat glass for illustration, and a folding effect of the flat glass on an optical path remains unchanged.

In this example, the lens assembly includes two second lens units and two optical path folding units. With reference to FIG. 29 and FIG. 30, the lens assembly 10 may include a first lens unit 110, the first optical path folding unit 140, a second lens unit 120, a second lens unit 130, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have negative focal power, and the seventh lens 17 may have negative focal power.

The second lens unit 120 may be movably disposed. With reference to FIG. 29 and FIG. 30, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 25.1921 mm, a focal length EFL of the lens assembly 10 in the infinity mode is 22.6961 mm, and the total track length TTL of the lens assembly 10 and the focal length EFL of the lens assembly 10 satisfy TTL/EFL=1.110.

An image height IMH of the lens assembly 10 is 12.50 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.248.

When the lens assembly 10 is switched from the infinity mode to the macro mode, a distance △L by which the second lens unit 120 moves along the optical axis is 4.08818, and the distance △L by which the second lens unit 120 moves along the optical axis and the total track length of the lens assembly 10 satisfy △L/TTL=0.162.

A magnification of the lens assembly 10 in the macro mode is 0.560039x.

An f-number F#1 of the lens assembly 10 in the infinity mode is 2.29041.

An f-number F#2 of the lens assembly 10 in the macro mode is 2.645.

Table 7.1 Optical parameters of optical elements in the camera module according to Embodiment 7 of this application

|  | Surface number | Surface profile | Curvature radius | Thickness | Material |
|---|---|---|---|---|---|
| Aperture stop | S0 | Spherical surface | 1.00E+18 | -1.087984076 |  |
| L1 | S1 | Aspherical surface | 10.17349031 | 1.75274078 | 523224.7013 |
| | S2 | Aspherical surface | -71.22677501 | 0.03 | |
| L2 | S3 | Aspherical surface | -109.9076712 | 0.470239824 | 657849.2026 |
| | S4 | Aspherical surface | 102.724852 | 0.284940336 | |
| P1 | S5 | Spherical surface | 1.00E+18 | 6.628431035 | 516800.642 |
| | S6 | Spherical surface | 1.00E+18 | 4.118184336 | |
| L3 | S7 | Aspherical surface | -18544.09647 | 0.696383584 | 621070.2441 |
| | S8 | Aspherical surface | -242.6128695 | 0.124509767 | |
| L4 | S9 | Aspherical surface | 9.371256682 | 0.371963482 | 631282.2289 |
| | S10 | Aspherical surface | 6.305991545 | 0.68804642 | |
| L5 | S11 | Aspherical surface | 12.11126738 | 2.45414622 | 539783.5132 |
| | S12 | Aspherical surface | -7.327186691 | 0.03 | |
| L6 | S13 | Aspherical surface | -13.73059847 | 0.254403505 | 534530.5604 |
| | S14 | Aspherical surface | -24.6219671 | 0.968462941 | |
| L7 | S15 | Aspherical surface | -5.565731945 | 0.25 | 534530.5604 |
| | S16 | Aspherical surface | 252.9693286 | 0.057620483 | |
| P2 | S17 | Spherical surface | 1.00E+18 | 8.549927286 | 516800.6417 |
| | S18 | Spherical surface | 1.00E+18 | 0.03 | |
| IR | S19 | Spherical surface | 1.00E+18 | 0.21 | 516800.6417 |
| | S20 | Spherical surface | 1.00E+18 | 0.03 | |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 7.2 Focal lengths of lenses and lens units in the lens assembly according to Embodiment 7 of this application

| f1 | f2 | f3 | f4 | f5 | f6 | f7 | G1 | G2 | G3 |
|---|---|---|---|---|---|---|---|---|---|
| 16.9164 | -59.6112 | 6.15836 | -4.95164 | 8.46199 | -20.7213 | -13.6263 | 22.3589 | 11.0052 | -7.88932 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 7.3 Aspherical coefficients of lenses in the lens assembly according to Embodiment 7 of this application

| | | k | A4 | A6 | A8 | A10 |
|---|---|---|---|---|---|---|
| L1 | S1 | 0 | 0.000443982 | -0.000012 | -4.00E-06 | 1.00E-06 |
| | S2 | 0 | 0.000794386 | -0.000110984 | 0.000022 | -3.00E-06 |
| L2 | S3 | 0 | -0.00545289 | 0.000216878 | 0.000017 | -5.00E-06 |
| | S4 | 0 | -0.00653008 | 0.000379306 | -0.000014 | -1.00E-06 |
| L3 | S7 | 0 | -0.00364661 | 0.00062267 | -0.00056108 | 0.000189679 |
| | S8 | 0 | 0.02728 | -0.00592252 | 0.00074178 | 0.000058 |
| L4 | S9 | 0 | 0.0287549 | -0.00660744 | 0.00138573 | -0.000186474 |
| | S10 | 0 | -0.00726404 | 0.00196808 | -0.000462334 | 0.000047 |
| L5 | S11 | 0 | -0.00384459 | 0.000875512 | 0.000005 | -0.000047 |
| | S12 | 0 | -0.000154702 | 0.000146538 | 0.000008 | -0.000011 |
| L6 | S13 | 0 | 0.0227048 | -0.002644 | 0.000136164 | 0.00006 |
| | S14 | 0 | 0.0172725 | -0.00227477 | 0.000099 | 0.00005 |
| L7 | S15 | 0 | -0.00837734 | 0.00224637 | -0.000437708 | 0.00006 |
| | S16 | 0 | -0.00479056 | 0.00180193 | -0.000348264 | 0.000043 |
| | | A12 | A14 | A16 | A18 | A20 |
| L1 | S1 | -1.35E-07 | 9.36E-09 | -3.79E-10 | 8.34E-12 | -7.81E-14 |
| | S2 | 2.49E-07 | -1.10E-08 | 2.60E-10 | -2.74E-12 | 5.29E-15 |
| L2 | S3 | 1.00E-06 | -3.15E-08 | 1.04E-09 | -1.85E-11 | 1.38E-13 |
| | S4 | 2.00E-07 | -1.42E-08 | 5.31E-10 | -1.03E-11 | 8.27E-14 |
| L3 | S5 | -0.000036 | 4.00E-06 | -2.46E-07 | 8.25E-09 | -1.16E-10 |
| | S6 | -0.000036 | 5.00E-06 | -3.83E-07 | 1.41E-08 | -2.11E-10 |
| L4 | S7 | 0.000015 | -1.00E-06 | 1.05E-08 | 1.36E-10 | -5.69E-12 |
| | S8 | 0.000002 | -1.00E-06 | 1.15E-07 | -5.30E-09 | 9.46E-11 |
| L5 | S9 | 0.000013 | -2.00E-06 | 1.27E-07 | -5.08E-09 | 8.40E-11 |
| | S10 | 0.000003 | -4.20E-07 | 3.31E-08 | -1.40E-09 | 2.53E-11 |
| L6 | S11 | -0.000019 | 3.00E-06 | -2.59E-07 | 1.36E-08 | -4.04E-10 |
| | S12 | -0.000015 | 0.000002 | -1.36E-07 | 4.87E-09 | -6.73E-11 |
| L7 | S13 | -0.000006 | 4.73E-07 | -2.28E-08 | 6.51E-10 | -1.38E-11 |
| | S14 | -0.000004 | 1.85E-07 | -6.11E-09 | 1.15E-10 | -9.27E-13 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | 0 | 0 | 0 | 0 | 0 |
| | S6 | 0 | 0 | 0 | 0 | 0 |
| L4 | S7 | 0 | 0 | 0 | 0 | 0 |
| | S8 | 0 | 0 | 0 | 0 | 0 |

(continued)

|   |   | A22 | A24 | A26 | A28 | A30 |
|---|---|---|---|---|---|---|
| L5 | S9 | 0 | 0 | 0 | 0 | 0 |
| | S10 | 0 | 0 | 0 | 0 | 0 |
| L6 | S11 | 5.33E-12 | 0 | 0 | 0 | 0 |
| | S12 | -1.03E-13 | 0 | 0 | 0 | 0 |
| L7 | S13 | 2.79E-13 | 0 | 0 | 0 | 0 |
| | S14 | 0 | 0 | 0 | 0 | 0 |

It can be learned from Table 7.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 29 and FIG. 30.

For optical parameters of the lens assembly 10 with the foregoing architecture, refer to Table 7.4 below.

Table 7.4 Optical parameters of the lens assembly according to Embodiment 7 of this application

| F-number F# in the infinity mode | 2.29041 |
|---|---|
| F-number F# in the macro mode | 2.645 |
| Focal length in the infinity mode/mm | 22.6961 |
| Focal length in the macro mode/mm | 11.0124 |
| Image height/mm | 12.50 |
| Magnification in the macro mode | 0.560039 |
| Object distance in the macro mode/mm | 37.2753 |
| Moving distance of the second lens unit/mm | 4.08818 |
| Total track length/mm | 25.1921 |

It can be learned from Table 7.4 that the lens assembly 10 provided in Embodiment 7 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

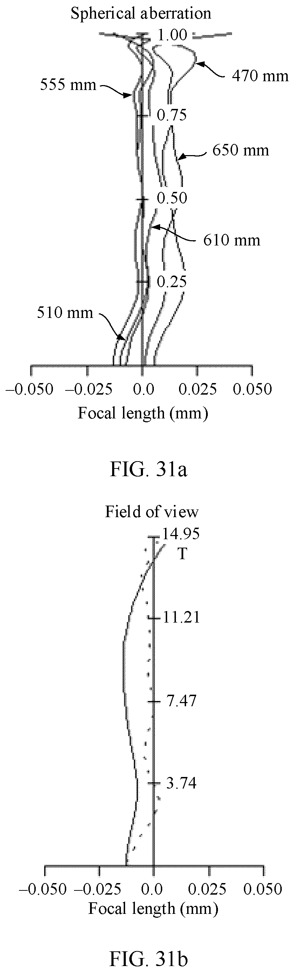

FIG. 31a a curve graph of chromatic aberration of the lens assembly in the infinity mode according to Embodiment 7 of this application. For horizontal and vertical coordinates in the figure, refer to Embodiment 1. Details are not described in this embodiment again. It can be learned from FIG. 31a that, when the lens assembly is in the infinity mode, chromatic aberration of light passing through the lens assembly is small.

FIG. 31b is an astigmatism and field curvature plot of the lens assembly in the infinity mode according to Embodiment 7 of this application. For horizontal and vertical coordinates in the figure, refer to Embodiment 1. Details are not described in this embodiment again. It can be learned from FIG. 31b that, when the lens assembly is in the infinity mode, both field curvature in a sagittal direction and field curvature in a meridian direction are small, and imaging quality is high.

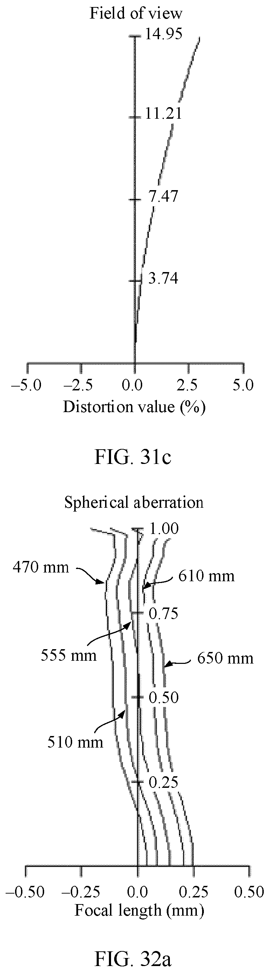

FIG. 31c is a curve graph of distortion of the lens assembly in the infinity mode according to Embodiment 7 of this application. For horizontal and vertical coordinates in the figure, refer to Embodiment 1. Details are not described in this embodiment again. It can be learned from FIG. 31c that, when the lens assembly is in the infinity mode, a distortion amount of imaging is small, and a difference between an imaging shape and an ideal shape is small, so that a deformation difference requirement is met, and imaging quality is high.

FIG. 32a is a curve graph of chromatic aberration of the lens assembly in the macro mode according to Embodiment 7 of this application. For horizontal and vertical coordinates in the figure, refer to Embodiment 1. Details are not described in this embodiment again. It can be learned from FIG. 32a that, when the lens assembly is in the macro mode, chromatic aberration of light passing through the lens assembly is small.

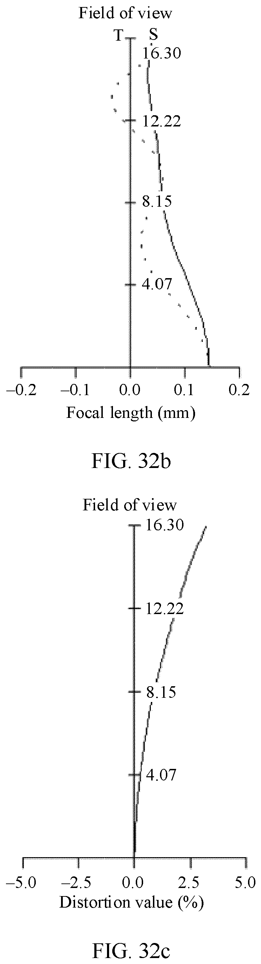

FIG. 32b is an astigmatism and field curvature plot of the lens assembly in the macro mode according to Embodiment 7 of this application. For horizontal and vertical coordinates in the figure, refer to Embodiment 1. Details are not described in this embodiment again. It can be learned from FIG. 32b that, when the lens assembly is in the macro mode, both field curvature in a sagittal direction and field curvature in a meridian direction are small, and imaging quality is high.

FIG. 32c is a curve graph of distortion of the lens assembly in the macro mode according to Embodiment 7 of this application. For horizontal and vertical coordinates in the figure, refer to Embodiment 1. Details are not described in this embodiment again. It can be learned from FIG. 32c that, when the lens assembly is in the macro mode, a distortion amount of imaging is small, and a difference between an imaging shape and an ideal shape is small, so that a deformation difference requirement is met, and imaging quality is high.

Embodiment 8

FIG. 33 is a diagram of a simulation structure of a camera module in which a lens assembly is in an infinity mode according to Embodiment 8 of this application. FIG. 34 is a diagram of a simulation structure of a camera module in which a lens assembly is in a macro mode according to Embodiment 8 of this application.

A first optical path folding unit 140 and a second optical path folding unit 150 in FIG. 33 and FIG. 34 are equivalent to a piece of flat glass for illustration, and a folding effect of the flat glass on an optical path remains unchanged.

In this example, the lens assembly 10 includes one second lens unit and two optical path folding units. With reference to FIG. 33 and FIG. 34, the lens assembly 10 may include a first lens unit 110, the first optical path folding unit 140, a second lens unit 120, and the second optical path folding unit 150 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, a fifth lens 15, a sixth lens 16, and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, the second optical path folding unit 150, an optical filter 30, and an image sensor 20 are sequentially arranged in a direction of the optical axis L from the object side to the image side. In an example in which the first optical path folding unit 140 and the second optical path folding unit 150 are separately a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, and then is transmitted to the second optical path folding unit 150. The second optical path folding unit 150 turns the optical path by 90° again, and then transmits a turned optical path to a photosensitive surface of the image sensor 20, so that the optical path finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, the fifth lens 15 may have positive focal power, the sixth lens 16 may have negative focal power, and the seventh lens 17 may have negative focal power.

The entire second lens unit 120 may be movably disposed. With reference to FIG. 33 and FIG. 34, when the lens assembly 10 is switched from the infinity mode to the macro mode, the entire second lens unit 120 may move along the optical axis toward the first optical path folding unit 140, and the first lens unit 110 remains stationary.

A total track length TTL of the lens assembly 10 is 26.9467 mm, a focal length EFL of the lens assembly 10 in the infinity mode is 19.4 mm, and the total track length TTL of the lens assembly 10 and the focal length EFL of the lens assembly 10 satisfy TTL/EFL=1.389.

An image height IMH of the lens assembly 10 is 10.68098 mm, and the image height IMH of the lens assembly 10 and the focal length EFL of the lens assembly 10 satisfy IMH/(2*EFL)=0.275.

The image height IMH of the lens assembly 10 and the total track length TTL of the lens assembly 10 satisfy IMH/(2*TTL)=0.198.

When the lens assembly 10 is switched from the infinity mode to the macro mode, a distance △L by which the second lens unit 120 moves along the optical axis is 6.21095, and the distance △L by which the second lens unit 120 moves along the optical axis and the total track length of the lens assembly 10 satisfy △L/TTL=0.230.

A magnification of the lens assembly 10 in the macro mode is 0.3x.

An f-number F#1 of the lens assembly 10 in the infinity mode is 2.47436.

An f-number F#2 of the lens assembly 10 in the macro mode is 3.60485.

Table 8.1 Optical parameters of optical elements in the camera module according to Embodiment 8 of this application

|  | Surface number | Surface profile | Curvature radius | Thickness | Material |
|---|---|---|---|---|---|
| Aperture stop | S0 | Spherical surface | 1.00E+18 | -0.228856756 | |
| L1 | S1 | Aspherical surface | 36.5631802 | 0.8 | 485700.7817 |
| | S2 | Aspherical surface | -23.32750658 | 0.03 | |
| L2 | S3 | Aspherical surface | -27.21547684 | 0.25 | 616479.25 |
| | S4 | Aspherical surface | -30.96354037 | 0.032564728 | |
| P1 | S5 | Spherical surface | 1.00E+18 | 4.84122282 | 516800.642 |
| | S6 | Spherical surface | 1.00E+18 | 6.240953222 | |
| L3 | S7 | Aspherical surface | 27.30404136 | 0.72812883 | 534530.5604 |
| | S8 | Aspherical surface | -471.6716744 | 0.087260512 | |
| L4 | S9 | Aspherical surface | 6.451234065 | 1.28323206 | 539435.5161 |
| | S10 | Aspherical surface | 4.923031164 | 0.925448203 | |
| L5 | S11 | Aspherical surface | 5.531259274 | 2.123141208 | 534530.5604 |
| | S12 | Aspherical surface | -8.905579886 | 0.296548242 | |
| L6 | S13 | Aspherical surface | -7.236762592 | 0.467547106 | 653365.3333 |
| | S14 | Aspherical surface | 393.1359166 | 1.265352374 | |
| L7 | S15 | Aspherical surface | 26.21162476 | 0.647690231 | 487490.7041 |
| | S16 | Aspherical surface | 9.365730207 | 1.289316998 | |
| P2 | S17 | Spherical surface | 1.00E+18 | 6.750882124 | 516800.6417 |
| | S18 | Spherical surface | 1.00E+18 | 0.865363243 | |
| IR | S19 | Spherical surface | 1.00E+18 | 0.21 | 516800.6417 |
| | S20 | Spherical surface | 1.00E+18 | 0.865348099 | |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, P2 is the second optical path folding unit 150, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 8.2 Focal lengths of lenses and lens units in the lens assembly according to Embodiment 8 of this application

| f1 | f2 | f3 | f4 | f5 | f6 | f7 | G1 | G2 |
|---|---|---|---|---|---|---|---|---|
| 16.0998 | -51.2159 | 5.82598 | -4.13058 | 8.26947 | 102.84 | -9.61432 | 21.8358 | 29.2942 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1 and G2 are focal lengths of the first lens unit 110 and the second lens unit 120 respectively.

Table 8.3 Aspherical coefficients of lenses in the lens assembly according to Embodiment 8 of this application

| | | k | A4 | A6 | A8 | A10 |
|---|---|---|---|---|---|---|
| L1 | S1 | 0 | -0.00069983 | 0.000021 | -9.00E-06 | 3.00E-06 |
| | S2 | 0 | -0.000785455 | -0.000049 | 0.000023 | -4.00E-06 |
| L2 | S3 | 0 | 0.00105358 | -0.00012929 | 0.000009 | -2.00E-06 |
| | S4 | 0 | 0.00107969 | -0.000071 | -0.000017 | 3.00E-06 |
| L3 | S7 | 0 | -0.00356614 | 0.00037932 | -0.000207207 | 0.000055 |
| | S8 | 0 | 0.0338999 | -0.00762761 | 0.00127452 | -0.000145257 |
| L4 | S9 | 0 | 0.0355803 | -0.00784242 | 0.00147206 | -0.000206642 |
| | S10 | -1 | -0.0088473 | 0.00236231 | -0.000601181 | 0.000116162 |
| L5 | S11 | 0 | -0.00680094 | 0.00111865 | -0.00012923 | 0.000013 |
| | S12 | 0 | -0.00231297 | 0.000201522 | 0.000129448 | -0.000019 |
| L6 | S13 | -1 | 0.0285704 | -0.00524552 | 0.000959237 | -0.000133595 |
| | S14 | 0 | 0.0195584 | -0.000851309 | -0.000364677 | 0.000179259 |
| L7 | S15 | 0 | -0.0414927 | 0.00639599 | -0.000775104 | 0.000071 |
| | S16 | -1 | -0.036789 | 0.00696803 | -0.00107488 | 0.000136987 |
| | | A12 | A14 | A16 | A18 | A20 |
| L1 | S1 | -3.96E-07 | 3.38E-08 | -1.70E-09 | 4.70E-11 | -5.50E-13 |
| | S2 | 3.10E-07 | -1.58E-08 | 4.64E-10 | -7.32E-12 | 4.80E-14 |
| L2 | S3 | 3.52E-07 | -3.04E-08 | 1.54E-09 | -4.33E-11 | 5.21E-13 |
| | S4 | -2.36E-07 | 1.18E-08 | -3.56E-10 | 5.89E-12 | -4.05E-14 |
| L3 | S5 | -0.000009 | 1.00E-06 | -4.33E-08 | 1.08E-09 | -8.65E-12 |
| | S6 | 0.000009 | -1.08E-07 | -1.99E-08 | 1.17E-09 | -2.10E-11 |
| L4 | S7 | 0.00002 | -1.00E-06 | 4.85E-08 | -8.14E-10 | -5.43E-12 |
| | S8 | -0.000016 | 2.00E-06 | -1.13E-07 | 7.61E-09 | -6.98E-10 |
| L5 | S9 | -0.000001 | 1.69E-07 | -1.42E-08 | 7.33E-10 | -1.77E-11 |
| | S10 | -0.000001 | 3.32E-07 | -2.50E-08 | 6.03E-10 | -1.97E-12 |
| L6 | S11 | 0.000014 | -1.00E-06 | 6.97E-08 | -2.35E-09 | 1.12E-11 |
| | S12 | -0.00004 | 0.000006 | -1.00E-06 | 2.60E-08 | -5.04E-10 |
| L7 | S13 | -0.000004 | -2.08E-07 | 6.11E-08 | -5.68E-09 | 2.68E-10 |
| | S14 | -0.000014 | 1.00E-06 | -5.09E-08 | 1.55E-09 | -2.15E-11 |
| | | A22 | A24 | A26 | A28 | A30 |
| L1 | S1 | 0 | 0 | 0 | 0 | 0 |
| | S2 | 0 | 0 | 0 | 0 | 0 |
| L2 | S3 | 0 | 0 | 0 | 0 | 0 |
| | S4 | 0 | 0 | 0 | 0 | 0 |
| L3 | S5 | -3.52E-14 | -3.21E-16 | 0 | 0 | 0 |
| | S6 | 3.19E-15 | 0 | 0 | 0 | 0 |
| L4 | S7 | 2.89E-13 | 0 | 0 | 0 | 0 |
| | S8 | 6.91E-11 | -5.08E-12 | 2.46E-13 | -7.12E-15 | 9.31E-17 |

(continued)

| | | A22 | A24 | A26 | A28 | A30 |
|---|---|---|---|---|---|---|
| L5 | S9 | 0 | 0 | 0 | 0 | 0 |
| | S10 | 1.46E-13 | -3.48E-15 | 0 | 0 | 0 |
| L6 | S11 | 1.01E-12 | 0 | 0 | 0 | 0 |
| | S12 | -3.72E-12 | 0 | 0 | 0 | 0 |
| L7 | S13 | -5.40E-12 | 0 | 0 | 0 | 0 |
| | S14 | 0 | 0 | 0 | 0 | 0 |

It can be learned from Table 8.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 33 and FIG. 34.

For optical parameters of the lens assembly 10 with the foregoing architecture, refer to Table 8.4 below.

Table 8.4 Optical parameters of the lens assembly according to Embodiment 8 of this application

| | |
|---|---|
| F-number F# in the infinity mode | 2.47436 |
| F-number F# in the macro mode | 3.60485 |
| Focal length in the infinity mode/mm | 19.4 |
| Focal length in the macro mode/mm | 18.0131 |
| Image height/mm | 10.68098 |
| Magnification in the macro mode | 0.3 |
| Object distance in the macro mode/mm | 80.9187 |
| Moving distance of the second lens unit/mm | 6.21095 |
| Total track length/mm | 26.9467 |

It can be learned from Table 8.4 that the lens assembly 10 provided in Embodiment 8 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

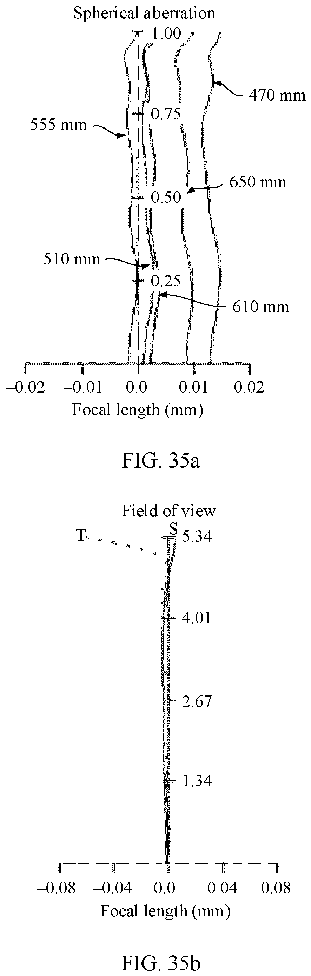

FIG. 35a is a curve graph of chromatic aberration of the lens assembly in the infinity mode according to Embodiment 8 of this application. For horizontal and vertical coordinates in the figure, refer to Embodiment 1. Details are not described in this embodiment again. It can be learned from FIG. 35a that, when the lens assembly is in the infinity mode, chromatic aberration of light passing through the lens assembly is small.

FIG. 35b is an astigmatism and field curvature plot of the lens assembly in the infinity mode according to Embodiment 8 of this application. For horizontal and vertical coordinates in the figure, refer to Embodiment 1. Details are not described in this embodiment again. It can be learned from FIG. 35b that, when the lens assembly is in the infinity mode, both field curvature in a sagittal direction and field curvature in a meridian direction are small, and imaging quality is high.

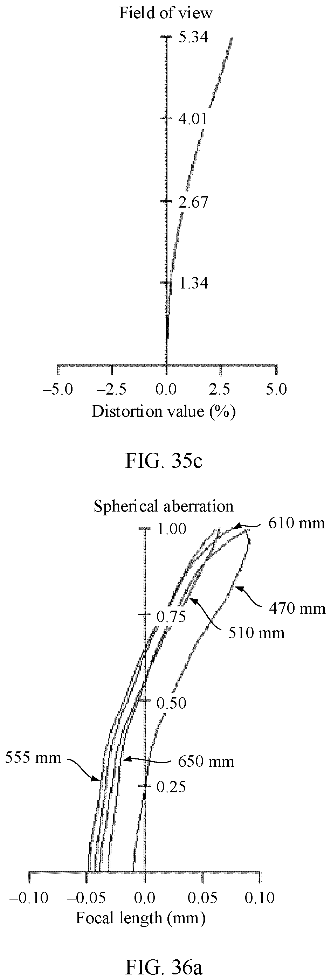

FIG. 35c is a curve graph of distortion of the lens assembly in the infinity mode according to Embodiment 8 of this application. For horizontal and vertical coordinates in the figure, refer to Embodiment 1. Details are not described in this embodiment again. It can be learned from FIG. 35c that, when the lens assembly is in the infinity mode, a distortion amount of imaging is small, and a difference between an imaging shape and an ideal shape is small, so that a deformation difference requirement is met, and imaging quality is high.

FIG. 36a is a curve graph of chromatic aberration of the lens assembly in the macro mode according to Embodiment 8 of this application. For horizontal and vertical coordinates in the figure, refer to Embodiment 1. Details are not described in this embodiment again. It can be learned from FIG. 36a that, when the lens assembly is in the macro mode, chromatic aberration of light passing through the lens assembly is small.

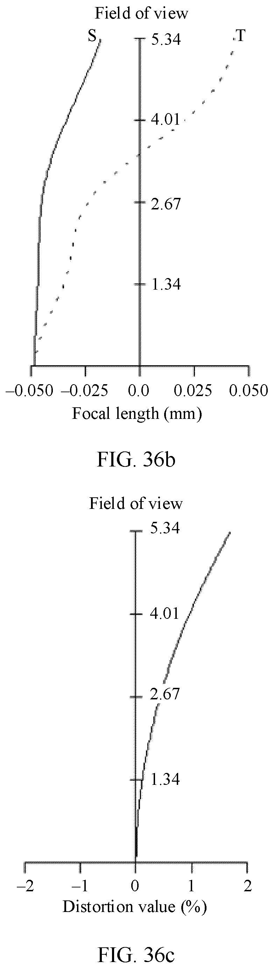

FIG. 36b is an astigmatism and field curvature plot of the lens assembly in the macro mode according to Embodiment 8 of this application. For horizontal and vertical coordinates in the figure, refer to Embodiment 1. Details are not described in this embodiment again. It can be learned from FIG. 36b that, when the lens assembly is in the macro mode, both field curvature in a sagittal direction and field curvature in a meridian direction are small, and imaging quality is high.

FIG. 36c is a curve graph of distortion of the lens assembly in the macro mode according to Embodiment 8 of this application. For horizontal and vertical coordinates in the figure, refer to Embodiment 1. Details are not described in this embodiment again. It can be learned from FIG. 36c that, when the lens assembly is in the macro mode, a distortion amount of imaging is small, and a difference between an imaging shape and an ideal shape is small, so that a deformation difference requirement is met, and imaging quality is high.

Embodiment 9

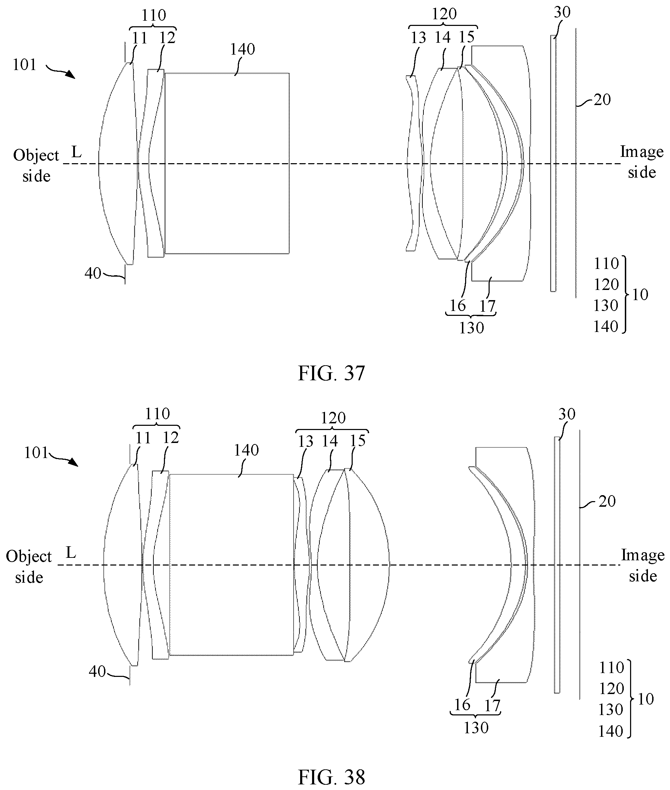

FIG. 37 is a diagram of a simulation structure of a camera module in which a lens assembly is in an infinity mode according to Embodiment 9 of this application. FIG. 38 is a diagram of a simulation structure of a camera module in which a lens assembly is in a macro mode according to Embodiment 9 of this application.

A first optical path folding unit 140 in FIG. 37 and FIG. 38 is equivalent to a piece of flat glass for illustration, and a folding effect of the flat glass on an optical path remains unchanged.

In this example, the lens assembly 10 includes two second lens units and one optical path folding unit. With reference to FIG. 37 and FIG. 38, the lens assembly 10 may include a first lens unit 110, the first optical path folding unit 140, a second lens unit 120, and a second lens unit 130 that are sequentially arranged along an optical axis L from an object side to an image side. The first lens unit 110 may include a first lens 11 and a second lens 12 that are arranged along the optical axis L from the object side to the image side. The second lens unit 120 may include a third lens 13, a fourth lens 14, and a fifth lens 15 that are arranged along the optical axis L from the object side to the image side. The second lens unit 130 may include a sixth lens 16 and a seventh lens 17 that are arranged along the optical axis L from the object side to the image side.

In other words, an aperture stop 40, the first lens 11, the second lens 12, the first optical path folding unit 140, the third lens 13, the fourth lens 14, the fifth lens 15, the sixth lens 16, the seventh lens 17, an optical filter 30, and an image sensor 20 are sequentially arranged in a direction of the optical axis L from the object side to the image side. In an example in which the first optical path folding unit 140 is a right-angle prism, light entering the camera module 101 sequentially passes through the first lens 11 and the second lens 12 and then is transmitted to the first optical path folding unit 140. The first optical path folding unit 140 turns an optical path by 90° and then transmits a turned optical path to the third lens 13. The optical path sequentially passes through the third lens 13, the fourth lens 14, the fifth lens 15, the sixth lens 16, and the seventh lens 17, then is transmitted to a photosensitive surface of the image sensor 20, and finally forms an image on the image sensor 20.

The first lens unit 110 may have positive focal power. Specifically, the first lens 11 may have positive focal power, and the second lens 12 may have negative focal power.

The second lens unit 120 may have positive focal power. Specifically, the third lens 13 may have positive focal power, the fourth lens 14 may have negative focal power, and the fifth lens 15 may have positive focal power.

The second lens unit 130 may have negative focal power. Specifically, the sixth lens 16 may have positive focal power, and the seventh lens 17 may have negative focal power.

The second lens unit 120 may be movably disposed. With reference to FIG. 37 and FIG. 38, when the lens assembly 10 is switched from the infinity mode to the macro mode, the second lens unit 120 may move along the optical axis toward the first optical path folding unit 140, and the first lens unit 110 and the second lens unit 130 remain stationary.

A total track length TTL of the lens assembly 10 is 17.222 mm, a focal length EFL of the lens assembly 10 in the infinity mode is 17.5 mm, and the total track length TTL of the lens assembly 10 and the focal length EFL of the lens assembly 10 satisfy TTL/EFL=0.984.

An image height IMH of the lens assembly 10 is 11.34004 mm, and the image height IMH of the lens assembly 10 and the focal length EFL of the lens assembly 10 satisfy IMH/(2*EFL)=0.324.

The image height IMH of the lens assembly 10 and the total track length TTL of the lens assembly 10 satisfy IMH/(2*TTL)=0.329.

When the lens assembly 10 is switched from the infinity mode to the macro mode, a distance △L by which the second lens unit 120 moves along the optical axis is 4.91422, and the distance △L by which the second lens unit 120 moves along the optical axis and the total track length of the lens assembly 10 satisfy △L/TTL=0.285.

A magnification of the lens assembly 10 in the macro mode is 0.299999x.

An f-number F#1 of the lens assembly 10 in the infinity mode is 2.061.

An f-number F#2 of the lens assembly 10 in the macro mode is 1.84219.

Table 8.1 Optical parameters of optical elements in the camera module according to Embodiment 8 of this application

|  | Surface number | Surface profile | Curvature radius | Thickness | Material |
|---|---|---|---|---|---|
| Aperture stop | S0 | Spherical surface | 1.00E+18 | -1.099040952 |  |
| L1 | S1 | Aspherical surface | 8.198122484 | 1.621576497 | 542811.6692 |
|  | S2 | Aspherical surface | -47.14273336 | 0.03 |  |
| L2 | S3 | Aspherical surface | 19.38007536 | 0.436633797 | 670450.1922 |
|  | S4 | Aspherical surface | 11.25867371 | 0.689818727 |  |
| P1 | S5 | Spherical surface | 1.00E+18 | 5.202785373 | 516800.642 |
|  | S6 | Spherical surface | 1.00E+18 | 4.944217212 |  |
| L3 | S7 | Aspherical surface | -196.7297962 | 0.643031796 | 660002.2007 |
|  | S8 | Aspherical surface | -22.23530549 | 0.076713053 |  |
| L4 | S9 | Aspherical surface | 13.34137176 | 0.25 | 670450.1922 |
|  | S10 | Aspherical surface | 7.623672183 | 1.363599319 |  |
| L5 | S11 | Aspherical surface | -38.08612469 | 1.669170131 | 534530.5604 |
|  | S12 | Aspherical surface | -5.910062363 | 0.202618558 |  |
| L6 | S13 | Aspherical surface | -5.50334289 | 0.598236198 | 670450.1922 |
|  | S14 | Aspherical surface | -5.084141901 | 0.088088393 |  |
| L7 | S15 | Aspherical surface | -5.075620487 | 0.25 | 534530.5604 |
|  | S16 | Aspherical surface | -43.30731311 | 0.873024283 |  |
| IR | S19 | Spherical surface | 1.00E+18 | 0.22 | 516800.6417 |
|  | S20 | Spherical surface | 1.00E+18 | 0.840486665 |  |

L1 is the first lens 11, L2 is the second lens 12, P1 is the first optical path folding unit 140, L3 is the third lens 13, L4 is the fourth lens 14, L5 is the fifth lens 15, L6 is the sixth lens 16, L7 is the seventh lens 17, and IR is the optical filter 30.

For specific illustration of S0 to S20, refer to Embodiment 1. Details are not described in this embodiment again.

For meanings of parameters such as a curvature radius, a thickness, and a material, refer to Embodiment 1. Details are not described in this embodiment again.

Table 9.2 Focal lengths of lenses and lens units in the lens assembly according to Embodiment 9 of this application

| f1 | f2 | f3 | f4 | f5 | f6 | f7 | G1 | G2 | G3 |
|---|---|---|---|---|---|---|---|---|---|
| 12.1492 | -34.2496 | 4.71736 | -4.09611 | 10.71 | 35.3489 | -7.25608 | 17.1888 | 13.3324 | -8.66015 |

f1, f2, f3, f4, f5, f6, and f7 are focal lengths of the first lens 11, the second lens 12, the third lens 13, the fourth lens 14, the fifth lens 15, the sixth lens 16, and the seventh lens 17 respectively, and G1, G2, and G3 are focal lengths of the first lens unit 110, the second lens unit 120, and the second lens unit 130 respectively.

Table 9.3 Aspherical coefficients of lenses in the lens assembly according to Embodiment 9 of this application

|  |  | k | A4 | A6 | A8 | A10 |
|---|---|---|---|---|---|---|
| L1 | S1 | 0 | 0.000725074 | -0.000067 | 7.00E-06 | -1.00E-06 |
|  | S2 | 0 | 0.00167316 | -0.000184219 | 0.000017 | -1.00E-06 |

(continued)

|  |  | k | A4 | A6 | A8 | A10 |
|---|---|---|---|---|---|---|
| L2 | S3 | 0 | -0.00927657 | 0.000761176 | -0.000073 | 6.00E-06 |
|  | S4 | 0 | -0.0119874 | 0.00109801 | -0.000125508 | 1.20E-05 |
| L3 | S7 | 0 | -0.0062668 | 0.00202088 | -0.000850932 | 0.000218899 |
|  | S8 | 0 | 0.029547 | -0.00567226 | 0.000767664 | -0.000009 |
| L4 | S9 | 0 | 0.0253934 | -0.00529768 | 0.00106743 | -0.000143538 |
|  | S10 | 0 | -0.0127451 | 0.00300719 | -0.000688025 | 0.000109577 |
| L5 | S11 | 0 | -0.00158216 | -0.000199612 | 0.000106631 | -0.000025 |
|  | S12 | 0 | -0.000038 | -0.000145013 | 0.000032 | -0.000004 |
| L6 | S13 | 0 | -0.00406734 | 0.00154913 | -0.000179464 | -0.000005 |
|  | S14 | 0 | -0.00533375 | 0.00271342 | -0.000492721 | 0.000043 |
| L7 | S15 | 0 | -0.00787334 | 0.00231387 | -0.00047683 | 0.000063 |
|  | S16 | 0 | -0.00639904 | 0.000459338 | 0.000013 | -0.000006 |
|  |  | A12 | A14 | A16 | A18 | A20 |
| L1 | S1 | 4.27E-08 | -1.87E-09 | 5.42E-11 | -1.01E-12 | 8.56E-15 |
|  | S2 | 6.89E-08 | -2.97E-09 | 8.47E-11 | -1.36E-12 | 9.02E-15 |
| L2 | S3 | -3.78E-07 | 1.16E-08 | -5.60E-11 | -5.77E-12 | 1.04E-13 |
|  | S4 | -1.00E-06 | 4.06E-08 | -1.16E-09 | 1.98E-11 | -2.03E-13 |
| L3 | S5 | -0.000036 | 3.00E-06 | -1.94E-07 | 5.70E-09 | -6.70E-11 |
|  | S6 | -0.000016 | 3.00E-06 | -1.78E-07 | 6.09E-09 | -8.20E-11 |
| L4 | S7 | 0.000012 | -1.00E-06 | 1.59E-08 | -1.97E-10 | 2.72E-13 |
|  | S8 | -0.000011 | 1.00E-06 | -2.86E-08 | 6.12E-10 | -7.12E-12 |
| L5 | S9 | 0.000004 | -3.09E-07 | 1.60E-08 | -4.44E-10 | 4.97E-12 |
|  | S10 | 3.39E-07 | -1.20E-08 | -1.91E-10 | 2.43E-11 | -3.72E-13 |
| L6 | S11 | 0.000004 | -3.92E-07 | 1.82E-08 | -7.22E-11 | -3.21E-11 |
|  | S12 | -0.000002 | 2.75E-07 | -8.73E-08 | 1.45E-08 | -1.52E-09 |
| L7 | S13 | -0.000005 | 1.90E-07 | -2.18E-09 | -1.39E-10 | 1.14E-11 |
|  | S14 | 0.000001 | -2.48E-08 | 6.83E-10 | -1.01E-11 | 5.83E-14 |
|  |  | A22 | A24 | A26 | A28 | A30 |
| L1 | S1 | 0 | 0 | 0 | 0 | 0 |
|  | S2 | 0 | 0 | 0 | 0 | 0 |
| L2 | S3 | 0 | 0 | 0 | 0 | 0 |
|  | S4 | 0 | 0 | 0 | 0 | 0 |
| L3 | S5 | -6.21E-14 | 0 | 0 | 0 | 0 |
|  | S6 | -6.65E-14 | 0 | 0 | 0 | 0 |
| L4 | S7 | 3.81E-15 | 0 | 0 | 0 | 0 |
|  | S8 | 1.06E-13 | -1.92E-15 | 0 | 0 | 0 |
| L5 | S9 | 2.28E-15 | 0 | 0 | 0 | 0 |
|  | S10 | 0 | 0 | 0 | 0 | 0 |

(continued)

|  |  | A22 | A24 | A26 | A28 | A30 |
|---|---|---|---|---|---|---|
| L6 | S11 | 1.68E-12 | -4.37E-14 | 5.60E-16 | 0 | 0 |
|  | S12 | 1.10E-10 | -5.51E-12 | 1.82E-13 | -3.59E-15 | 3.18E-17 |
| L7 | S13 | -6.46E-13 | 2.53E-14 | -5.82E-16 | 6.21E-18 | 0 |
|  | S14 | 6.74E-17 | 0 | 0 | 0 | 0 |

It can be learned from Table 9.3 that all lenses in the lens assembly 10 are aspherical lenses, that is, the lens assembly 10 includes 14 aspherical surfaces. An aspherical surface profile Z of each lens in the lens assembly 10 may be calculated according to the following aspherical surface formula:

$$Z = \frac{cr^2}{1+\sqrt{1-(1+k)c^2r^2}} + \sum_{i=1}^{n} A_I E_I(x, y)$$

where the parameter c is 1/R, R indicates a curvature radius, r indicates a distance from a point on an optical surface to the optical axis, Z indicates an aspherical vector height of the point in the direction of the optical axis, k indicates a quadratic surface coefficient of the surface, i indicates an aspherical coefficient term, i is 30 in this embodiment, and Ai is an aspherical coefficient. The lenses may be simulated based on the obtained aspherical surface profile and the like, to finally obtain the camera module 101 shown in FIG. 37 and FIG. 38.

For optical parameters of the lens assembly 10 with the foregoing architecture, refer to Table 9.4 below.

Table 9.4 Optical parameters of the lens assembly according to Embodiment 9 of this application

| F-number F# in the infinity mode | 2.061 |
|---|---|
| F-number F# in the macro mode | 1.84219 |
| Focal length in the infinity mode/mm | 17.5 |
| Focal length in the macro mode/mm | 9.90476 |
| Image height/mm | 11.34004 |
| Magnification in the macro mode | 0.299999 |
| Object distance in the macro mode/mm | 50.5135 |
| Moving distance of the second lens unit/mm | 4.91422 |
| Total track length/mm | 17.222 |

It can be learned from Table 9.4 that the lens assembly 10 provided in Embodiment 9 of this application has a long-focus function, and the lens assembly 10 has a small total track length, to help implement small-sized designs of the lens assembly 10 and the camera module 101. In addition, a wide aperture design and a large target surface design of the lens assembly 10 can be implemented, to meet a requirement for an infinity shooting scene and implement a high magnification of a macro shooting scene.

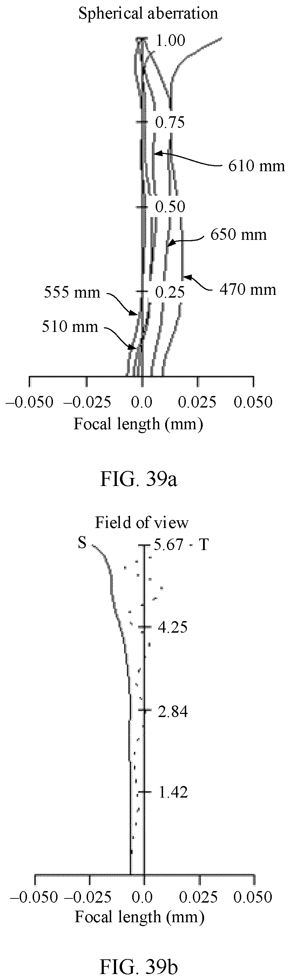

FIG. 39a is a curve graph of chromatic aberration of the lens assembly in the infinity mode according to Embodiment 9 of this application. For horizontal and vertical coordinates in the figure, refer to Embodiment 1. Details are not described in this embodiment again. It can be learned from FIG. 39a that, when the lens assembly is in the infinity mode, chromatic aberration of light passing through the lens assembly is small.

FIG. 39b is an astigmatism and field curvature plot of the lens assembly in the infinity mode according to Embodiment 9 of this application. For horizontal and vertical coordinates in the figure, refer to Embodiment 1. Details are not described in this embodiment again. It can be learned from FIG. 39b that, when the lens assembly is in the infinity mode, both field curvature in a sagittal direction and field curvature in a meridian direction are small, and imaging quality is high.

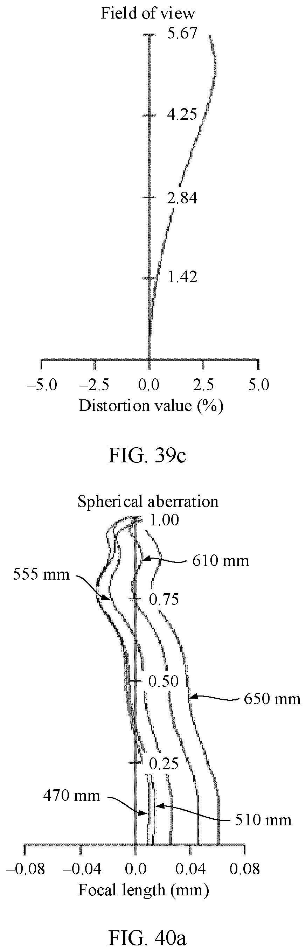

FIG. 39c is a curve graph of distortion of the lens assembly in the infinity mode according to Embodiment 9 of this application. For horizontal and vertical coordinates in the figure, refer to Embodiment 1. Details are not described in this embodiment again. It can be learned from FIG. 39c that, when the lens assembly is in the infinity mode, a distortion amount of imaging is small, and a difference between an imaging shape and an ideal shape is small, so that a deformation difference requirement is met, and imaging quality is high.

FIG. 40a is a curve graph of chromatic aberration of the lens assembly in the macro mode according to Embodiment 9 of this application. For horizontal and vertical coordinates in the figure, refer to Embodiment 1. Details are not described in this embodiment again. It can be learned from FIG. 40a that, when the lens assembly is in the macro mode, chromatic aberration of light passing through the lens assembly is small.

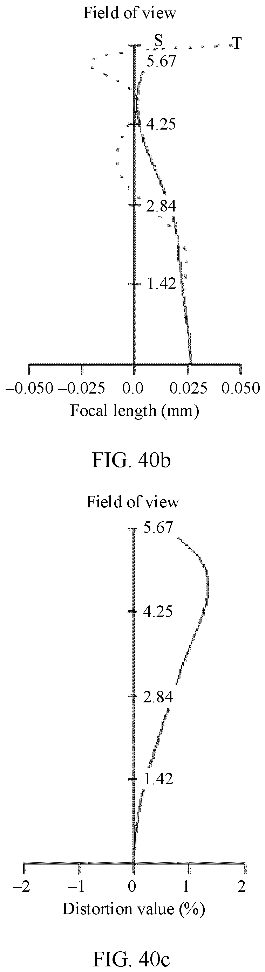

FIG. 40b is an astigmatism and field curvature plot of the lens assembly in the macro mode according to Embodiment 9 of this application. For horizontal and vertical coordinates in the figure, refer to Embodiment 1. Details are not described in this embodiment again. It can be learned from FIG. 40b that, when the lens assembly is in the macro mode, both field curvature in a sagittal direction and field curvature in a meridian direction are small, and imaging quality is high.

FIG. 40c is a curve graph of distortion of the lens assembly in the macro mode according to Embodiment 9 of this application. For horizontal and vertical coordinates in the figure, refer to Embodiment 1. Details are not described in this embodiment again. It can be learned from

FIG. 40c that, when the lens assembly is in the macro mode, a distortion amount of imaging is small, and a difference between an imaging shape and an ideal shape is small, so that a deformation difference requirement is met, and imaging quality is high.

In descriptions of embodiments of this application, it should be noted that, unless otherwise explicitly stipulated and restricted, terms "installation", "joint connection", and "connection" should be understood in a broad sense, which, for example, may be a fixed connection, or may be an indirect connection by using a medium, or may be an internal communication between two components, or may be an interactive relationship between two components. A person of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A lens assembly, comprising at least a first lens unit, a first optical path folding unit, a second lens unit, and a second optical path folding unit that are sequentially arranged along an optical axis from an object side to an image side, wherein the first optical path folding unit is configured to reflect, to the second lens unit, light emitted from the first lens unit, and the second optical path folding unit is configured to reflect the light emitted from the second lens unit;

   the first lens unit comprises at least a first lens, the first lens is located at an end that is of the lens assembly and that is closest to the object side, and the first lens has positive focal power; and
   the lens assembly satisfies a conditional expression: $0.7 < TTL/EFL < 2.2$, wherein TTL is a total track length of the lens assembly, and EFL is a focal length of the lens assembly.

2. The lens assembly according to claim 1, wherein the lens assembly further satisfies a conditional expression: $IMH/(2*EFL) < 0.5$, wherein IMH is an image height of the lens assembly; and
   the lens assembly further satisfies a conditional expression: $IMH/(2*TTL) < 0.5$.

3. The lens assembly according to claim 1 or 2, wherein the second lens unit is movably disposed, and the second lens unit moves along the optical axis, so that the lens assembly is switched from an infinity mode to a macro mode.

4. The lens assembly according to claim 1 or 2, wherein there are a plurality of second lens units, at least one second lens unit is movably disposed, and the at least one second lens unit moves along the optical axis, so that the lens assembly is switched from an infinity mode to a macro mode.

5. The lens assembly according to claim 4, wherein a quantity of second lens units is less than or equal to 3.

6. The lens assembly according to any one of claims 3 to 5, wherein when the lens assembly is switched from the infinity mode to the macro mode, a distance $\triangle L$ by which the second lens unit moves along the optical axis satisfies a conditional expression: $0.01 < \triangle L/TTL < 0.4$.

7. The lens assembly according to any one of claims 3 to 6, wherein a magnification of the lens assembly in the macro mode is less than 0.6x.

8. The lens assembly according to any one of claims 3 to 7, wherein an f-number F#1 of the lens assembly in the infinity mode satisfies a conditional expression: 1.4<F#1<3.0.

9. The lens assembly according to any one of claims 3 to 8, wherein an f-number F#2 of the lens assembly in the macro mode satisfies a conditional expression: 1.6<F#2<3.0.

10. The lens assembly according to any one of claims 1 to 9, wherein a lens of the first lens unit and a lens of the second lens unit are separately an aspherical lens.

11. A lens assembly, comprising at least a first lens unit, a first optical path folding unit, and a second lens unit that are sequentially arranged along an optical axis from an object side to an image side, wherein the first optical path folding unit is configured to reflect, to the second lens unit, light emitted from the first lens unit;

the first lens unit comprises at least a first lens, the first lens is located at an end that is of the lens assembly and that is closest to the object side, and the first lens has positive focal power; and
the lens assembly satisfies a conditional expression: $0.7<TTL/EFL\leq1$, wherein TTL is a total track length of the lens assembly, and EFL is a focal length of the lens assembly.

12. The lens assembly according to claim 11, wherein the lens assembly satisfies a conditional expression: 0.1<IMH/(2*EFL)<0.5, wherein IMH is an image height of the lens assembly; and the lens assembly further satisfies a conditional expression: 0.1<IMH/(2*TTL)<0.5.

13. A camera module, comprising an image sensor and the lens assembly according to any one of claims 1 to 10, or comprising an image sensor and the lens assembly according to claim 11 or 12, wherein
the image sensor is located on a side that is of the lens assembly and that faces the image side.

14. An electronic device, comprising a housing and the camera module according to claim 13, wherein the camera module is disposed on the housing.

FIG. 1

FIG. 2

FIG. 3

FIG. 4

FIG. 5

FIG. 6

Spherical aberration

FIG. 7a

Field of view

FIG. 7b

Field of view

5.69

4.27

2.85

1.42

-5.0    -2.5    0.0    2.5    5.0
Distortion value (%)

FIG. 7c

Spherical aberration

1.00

555 mm

510 mm    0.75

470 mm

0.50

610 mm

0.25

650 mm

-0.8    -0.4    0.0    0.4    0.8
Focal length (mm)

FIG. 8a

Field of view

T S 6.14

4.61

3.07

1.54

−0.8    −0.4    0.0    0.4    0.8

Focal length (mm)

FIG. 8b

Field of view

6.14

4.61

3.07

1.54

−5.0    −2.5    0.0    2.5    5.0

Distortion value (%)

FIG. 8c

FIG. 9

FIG. 10

Spherical aberration

FIG. 11a

Field of view

FIG. 11b

Field of view

14.95

11.21

7.47

3.74

−5.0    −2.5    0.0    2.5    5.0
Distortion value (%)

FIG. 11c

Spherical aberration

1.00

555 mm

0.75

650 mm

510 mm

610 mm

0.50

470 mm

0.25

−0.10    −0.05    0.0    0.05    0.10
Focal length (mm)

FIG. 12a

Field of view

FIG. 12b

Field of view

FIG. 12c

FIG. 13

FIG. 14

Spherical aberration

FIG. 15a

Field of view

FIG. 15b

Field of view

14.95

11.21

7.47

3.74

-5.0    -2.5    0.0    2.5    5.0
Distortion value (%)

FIG. 15c

Spherical aberration

1.00

555 mm

470 mm

0.75

610 mm

510 mm

650 mm

0.50

0.25

-0.050  -0.025   0.0    0.025   0.050
Focal length (mm)

FIG. 16a

Field of view

S‚T 15.20

—11.40

—7.60

—3.80

−0.02   −0.01   0.0   0.01   0.02
Focal length (mm)

FIG. 16b

Field of view

15.20

—11.40

—7.60

—3.80

−2    −1    0    1    2
Distortion value (%)

FIG. 16c

FIG. 17

FIG. 18

Spherical aberration

555 mm

470 mm

650 mm

610 mm

510 mm

1.00

0.75

0.50

0.25

−0.02    −0.01    0.0    0.01    0.02
Focal length (mm)

FIG. 19a

Field of view

S 14.95  T

11.21

7.47

3.74

−0.02    −0.01    0.0    0.01    0.02
Focal length (mm)

FIG. 19b

Field of view

14.95

11.21

7.47

3.74

-5.0    -2.5    0.0    2.5    5.0
Distortion value (%)

FIG. 19c

Spherical aberration

1.00

555 mm

470 mm

0.75

510 mm

650 mm

0.50

610 mm

0.25

-0.2    -0.1    0.0    0.1    0.2
Focal length (mm)

FIG. 20a

Field of view

T S 15.20

11.40

7.60

3.80

-0.02   -0.01   0.0   0.01   0.02
Focal length (mm)

FIG. 20b

Field of view

15.20

11.40

7.60

3.80

-2       -1       0       1       2
Distortion value (%)

FIG. 20c

FIG. 21

FIG. 22

Spherical aberration

FIG. 23a

Field of view

FIG. 23b

Field of view

FIG. 23c

Spherical aberration

FIG. 24a

Field of view

S 5.58 T

4.19

2.79

1.40

−0.2    −0.1    0.0    0.1    0.2

Focal length (mm)

FIG. 24b

Field of view

5.58

4.19

2.79

1.40

−5.0    −2.5    0.0    2.5    5.0

Distortion value (%)

FIG. 24c

FIG. 25

FIG. 26

Spherical aberration

FIG. 27a

Field of view

FIG. 27b

Field of view

14.95

11.21

7.47

3.74

-5.0    -2.5    0.0    2.5    5.0
Distortion value (%)

FIG. 27c

Spherical aberration

1.00

470 mm

0.75

650 mm

555 mm

0.50

610 mm

510 mm

0.25

-0.2    -0.1    0.0    0.1    0.2
Focal length (mm)

FIG. 28a

FIG. 28b

FIG. 28c

FIG. 29

FIG. 30

Spherical aberration

FIG. 31a

Field of view

FIG. 31b

Field of view

14.95

11.21

7.47

3.74

−5.0    −2.5    0.0    2.5    5.0
Distortion value (%)

FIG. 31c

Spherical aberration

1.00

470 mm

610 mm

0.75

555 mm

650 mm

0.50

510 mm

0.25

−0.50    −0.25    0.0    0.25    0.50
Focal length (mm)

FIG. 32a

Field of view

T    S
16.30

12.22

8.15

4.07

−0.2    −0.1    0.0    0.1    0.2

Focal length (mm)

FIG. 32b

Field of view

16.30

12.22

8.15

4.07

−5.0    −2.5    0.0    2.5    5.0

Distortion value (%)

FIG. 32c

FIG. 33

FIG. 34

Spherical aberration

FIG. 35a

Field of view

FIG. 35b

Field of view

5.34

4.01

2.67

1.34

-5.0    -2.5    0.0    2.5    5.0
Distortion value (%)

FIG. 35c

Spherical aberration

1.00 ──── 610 mm

470 mm

0.75
510 mm

0.50

555 mm    650 mm

0.25

-0.10    -0.05    0.0    0.05    0.10
Focal length (mm)

FIG. 36a

Field of view

S ┬ 5.34 T

┼ 4.01

┼ 2.67

┼ 1.34

−0.050 −0.025 0.0 0.025 0.050
Focal length (mm)

FIG. 36b

Field of view

┬ 5.34

┼ 4.01

┼ 2.67

┼ 1.34

−2 −1 0 1 2
Distortion value (%)

FIG. 36c

FIG. 37

FIG. 38

Spherical aberration

FIG. 39a

Field of view

FIG. 39b

Field of view

5.67

4.25

2.84

1.42

−5.0　−2.5　0.0　2.5　5.0
Distortion value (%)

FIG. 39c

Spherical aberration

1.00

610 mm

555 mm

0.75

0.50

650 mm

0.25

470 mm

510 mm

−0.08　−0.04　0.0　0.04　0.08
Focal length (mm)

FIG. 40a

Field of view

S ......... T

5.67

4.25

2.84

1.42

−0.050 −0.025  0.0  0.025  0.050

Focal length (mm)

FIG. 40b

Field of view

5.67

4.25

2.84

1.42

−2  −1  0  1  2

Distortion value (%)

FIG. 40c

## INTERNATIONAL SEARCH REPORT

| International application No. |
|---|
| **PCT/CN2024/078477** |

**A. CLASSIFICATION OF SUBJECT MATTER**

G02B 13/18(2006.01)i

According to International Patent Classification (IPC) or to both national classification and IPC

**B. FIELDS SEARCHED**

Minimum documentation searched (classification system followed by classification symbols)

IPC：G02B9，G02B13，G02B15

Documentation searched other than minimum documentation to the extent that such documents are included in the fields searched

Electronic data base consulted during the international search (name of data base and, where practicable, search terms used)

CNABS; CNTXT; VEN; WPABS; ENTXT: 折叠, 棱镜, 光路偏转, 光路转换, 光学转折, 光路转折, TTL/F, TTL/EFL, F/TTL, EFL/TTL, fold+, second+, two, ZOOM+, AUTOFOCUS+, MOV+, 变焦, 变倍, 调焦, 移动, 长焦, 第二, 两, total, length+, efl, F, TTL

**C. DOCUMENTS CONSIDERED TO BE RELEVANT**

| Category* | Citation of document, with indication, where appropriate, of the relevant passages | Relevant to claim No. |
|---|---|---|
| PX | CN 116507952 A (COREPHOTONICS LTD.) 28 July 2023 (2023-07-28) description, paragraphs 19-208, and figures 2-4 | 1-14 |
| X | CN 115437118 A (SAMSUNG ELECTRO-MECHANICS CO., LTD.) 06 December 2022 (2022-12-06) description, paragraphs 201-386, and figures 7-20 | 1-2, 10-14 |
| Y | CN 115437118 A (SAMSUNG ELECTRO-MECHANICS CO., LTD.) 06 December 2022 (2022-12-06) description, paragraphs 201-386, and figures 7-20 | 3-9 |
| X | CN 104898353 A (APPLE INC.) 09 September 2015 (2015-09-09) description, paragraphs 7-331, and figures 1-24 | 1-14 |
| X | CN 109690380 A (COREPHOTONICS LTD.) 26 April 2019 (2019-04-26) description, paragraphs 7-192, and figures 1-7 | 1-14 |
| X | CN 104777593 A (GENIUS ELECTRONIC OPTICAL (XIAMEN) CO., LTD.) 15 July 2015 (2015-07-15) description, paragraphs 66-80 and 92-100, and figures 2A-6 | 1-2, 10-14 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 May 2024** | **03 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/078477** |

**C.    DOCUMENTS CONSIDERED TO BE RELEVANT**

| Category* | Citation of document, with indication, where appropriate, of the relevant passages | Relevant to claim No. |
|---|---|---|
| Y | CN 104777593 A (GENIUS ELECTRONIC OPTICAL (XIAMEN) CO., LTD.) 15 July 2015 (2015-07-15)<br>description, paragraphs 66-80 and 92-100, and figures 2A-6 | 3-9 |
| Y | CN 115437128 A (HONOR TERMINAL CO., LTD.) 06 December 2022 (2022-12-06)<br>description, paragraphs 4-34 | 3-9 |
| A | US 2001024570 A1 (CINE PHOTO TECH, INC. et al.) 27 September 2001 (2001-09-27)<br>entire document | 1-14 |

## INTERNATIONAL SEARCH REPORT
### Information on patent family members

| | International application No. |
|---|---|
| | **PCT/CN2024/078477** |

| Patent document cited in search report | | | Publication date (day/month/year) | Patent family member(s) | | | Publication date (day/month/year) |
|---|---|---|---|---|---|---|---|
| CN | 116507952 | A | 28 July 2023 | KR | 20240009432 | A | 22 January 2024 |
| | | | | US | 2023308737 | A1 | 28 September 2023 |
| | | | | US | 11985407 | B2 | 14 May 2024 |
| | | | | KR | 20230066411 | A | 15 May 2023 |
| | | | | KR | 102610118 | B1 | 04 December 2023 |
| | | | | WO | 2023079403 | A1 | 11 May 2023 |
| | | | | EP | 4244670 | A1 | 20 September 2023 |
| | | | | EP | 4244670 | A4 | 06 March 2024 |
| CN | 115437118 | A | 06 December 2022 | US | 2023116701 | A1 | 13 April 2023 |
| | | | | TW | 202316168 | A | 16 April 2023 |
| | | | | TWI | 829324 | B | 11 January 2024 |
| | | | | TWM | 646542 | U | 01 October 2023 |
| CN | 104898353 | A | 09 September 2015 | US | 2020026033 | A1 | 23 January 2020 |
| | | | | US | 11112582 | B2 | 07 September 2021 |
| | | | | US | 2023418029 | A1 | 28 December 2023 |
| | | | | US | 2022057602 | A1 | 24 February 2022 |
| | | | | US | 11782240 | B2 | 10 October 2023 |
| | | | | US | 2016231540 | A1 | 11 August 2016 |
| | | | | US | 10429614 | B2 | 01 October 2019 |
| | | | | US | 2015253543 | A1 | 10 September 2015 |
| | | | | US | 9316810 | B2 | 19 April 2016 |
| | | | | EP | 3916459 | A1 | 01 December 2021 |
| | | | | EP | 3916459 | B1 | 31 January 2024 |
| | | | | KR | 20160115961 | A | 06 October 2016 |
| | | | | KR | 101864056 | B1 | 04 June 2018 |
| | | | | TW | 201539028 | A | 16 October 2015 |
| | | | | TWI | 570440 | B | 11 February 2017 |
| | | | | WO | 2015134173 | A1 | 11 September 2015 |
| | | | | EP | 3114519 | A1 | 11 January 2017 |
| | | | | EP | 3114519 | B1 | 13 October 2021 |
| CN | 109690380 | A | 26 April 2019 | KR | 20220143174 | A | 24 October 2022 |
| | | | | KR | 102604896 | B1 | 21 November 2023 |
| | | | | US | 2021048628 | A1 | 18 February 2021 |
| | | | | US | 10948696 | B2 | 16 March 2021 |
| | | | | JP | 2023036905 | A | 14 March 2023 |
| | | | | IL | 300459 | A | 01 April 2023 |
| | | | | KR | 20210124497 | A | 14 October 2021 |
| | | | | KR | 102456870 | B1 | 19 October 2022 |
| | | | | EP | 3465313 | A1 | 10 April 2019 |
| | | | | EP | 3465313 | A4 | 07 August 2019 |
| | | | | EP | 3465313 | C0 | 30 August 2023 |
| | | | | US | 2021165192 | A1 | 03 June 2021 |
| | | | | JP | 2020509417 | A | 26 March 2020 |
| | | | | JP | 6750128 | B2 | 02 September 2020 |
| | | | | KR | 20190057022 | A | 27 May 2019 |
| | | | | KR | 102140884 | B1 | 04 August 2020 |
| | | | | IL | 263776 | A | 31 March 2019 |
| | | | | IL | 263776 | B1 | 01 March 2023 |
| | | | | IL | 263776 | B2 | 01 July 2023 |
| | | | | JP | 2020194187 | A | 03 December 2020 |

Form PCT/ISA/210 (patent family annex) (July 2022)

# EP 4 617 758 A1

| Patent document cited in search report | | | Publication date (day/month/year) | Patent family member(s) | | | Publication date (day/month/year) |
|---|---|---|---|---|---|---|---|
| | | | | JP | 7204713 | B2 | 16 January 2023 |
| | | | | EP | 4235249 | A2 | 30 August 2023 |
| | | | | EP | 4235249 | A3 | 06 December 2023 |
| | | | | KR | 20200142098 | A | 21 December 2020 |
| | | | | KR | 102310641 | B1 | 08 October 2021 |
| | | | | WO | 2019021145 | A1 | 31 January 2019 |
| | | | | KR | 20230161536 | A | 27 November 2023 |
| | | | | KR | 20200092429 | A | 03 August 2020 |
| | | | | KR | 102193668 | B1 | 22 December 2020 |
| CN | 104777593 | A | 15 July 2015 | US | 2015198784 | A1 | 16 July 2015 |
| | | | | US | 9274311 | B2 | 01 March 2016 |
| | | | | TW | 201504667 | A | 01 February 2015 |
| | | | | TWI | 545339 | B | 11 August 2016 |
| CN | 115437128 | A | 06 December 2022 | None | | | |
| US | 2001024570 | A1 | 27 September 2001 | DE | 59901075 | D1 | 02 May 2002 |
| | | | | WO | 9966362 | A1 | 23 December 1999 |
| | | | | DE | 19927730 | A1 | 23 December 1999 |
| | | | | AU | 5406499 | A | 05 January 2000 |
| | | | | DE | 19927577 | A1 | 17 February 2000 |
| | | | | CA | 2270451 | A1 | 17 December 1999 |
| | | | | US | 6212334 | B1 | 03 April 2001 |
| | | | | EP | 1088251 | A1 | 04 April 2001 |
| | | | | EP | 1088251 | B1 | 27 March 2002 |
| | | | | CA | 2336197 | A1 | 23 December 1999 |
| | | | | BR | 9911352 | A | 04 September 2001 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310327420X